# EUROPEAN PATENT APPLICATION

(11) **EP 4 119 419 A1**
(43) Date of publication of application: **18.01.2023**
(21) Application number: 21767280.7
(22) Date of filing: 05.03.2021
(51) Int. Cl.: B61L 25/06, E01C 23/01, G05B 23/02, G01B 21/00, G08G 1/00, G05B 19/18, B60L 3/00, B23Q 17/00, B23Q 17/09, B23Q 17/24, B60M 1/28

(54) **INFORMATION PROCESSING DEVICE, INFORMATION PROCESSING METHOD, AND PROGRAM**

(30) Priority: 13.03.2020 JP 2020043996; 13.03.2020 JP 2020044001; 13.03.2020 JP 2020044313; 13.03.2020 JP 2020044318
(71) Applicant: Ricoh Company, Ltd., Tokyo 143-8555 (JP)
(72) Inventor: MIYARA Gakushi, Tokyo 143-8555 (JP); UMEZAWA Tomoki, Tokyo 143-8555 (JP); TAKAMI Junichi, Tokyo 143-8555 (JP); NODA Yuichi, Tokyo 143-8555 (JP); HORIO Takafumi, Tokyo 143-8555 (JP); TESHIMA Yu, Tokyo 143-8555 (JP)
(74) Representative: SSM Sandmair
(86) International application number: PCT/JP2021/008692
(87) International publication number: WO 2021/182328

(57) **Abstract**

An information processing apparatus includes a detection result acquisition unit configured to acquire a detection result of a physical quantity that changes as a movable body moves while being in contact with a subject; an image data acquisition unit configured to acquire image data of the subject; and a display control unit configured to control a display to display likelihood information indicating a likelihood of abnormality of the subject and the image data in association with each other. The likelihood is determined based on the detection result.

## Description

### [Technical Field]

The present invention relates to an information processing apparatus, an information processing method, and a program.

### [Background Art]

Japanese Patent No. 5014464 discloses an inspection vehicle 1 that captures an image of a pavement surface with a thermal infrared camera 3 and a visible light camera 4 while traveling on a road. The inspection vehicle 1 detects vibration of the vehicle due to a state of the pavement surface with a vibration sensor 5, detects sound arising with traveling of the vehicle with a traveling sound detection unit 6, and detects water permeability of the pavement with a water permeability detection unit 7. Further, the inspection vehicle 1 collects detection result of sensors preliminarily arranged around the road with an integrated circuit (IC) tag communication unit 8 and collects a shape of the pavement surface with a pavement surface measurement unit 9.

Japanese Unexamined Patent Application Publication No. 2007-190628 discloses an abnormality diagnostic method for a machine tool that includes current sensors 31, 32, and 33 to detect current values of first, second, and third servo motors 14, 18, and 21, a current sensor 34 to detect a motor current value of a spindle motor 30, a vibration sensor 35 to detect nose vibration of a spindle head 22, and a charge-coupled device (CCD) camera 47 to capture and image of a machined surface of a workpiece W machined by a tool T. The method includes transmitting detection results of the various sensors 31 to 35, machined surface data captured by the CCD camera 47, and a machining command value (machining condition) set by a numerical control (NC) control unit 54 from a data transmission device 51 to a data reception device 52; and performing abnormal diagnosis with a data processing device 53.

### [Citation List]

### [Patent Literature]

[PTL 1]
Japanese Patent No. 5014464

### [Summary of Invention]

### [Technical Problem]

An object of the present invention is to provide an information processing apparatus, an information processing method, and a program for efficiently determining an abnormality of a subject.

### [Solution to Problem]

An information processing apparatus according to the present invention includes a detection result acquisition unit to acquire a detection result of a physical quantity that changes as a movable body moves while being in contact with a subject; an image data acquisition unit to acquire image data of the subject; and a display control unit to control a display to display likelihood information indicating a likelihood of abnormality of the subject and the image data in association with each other. The likelihood is determined based on the detection result.

### [Advantageous Effects of Invention]

The present invention provides an information processing apparatus, an information processing method, and a carrier medium for efficiently determining an abnormality of a subject. [Brief Description of Drawings]

[FIG. 1]

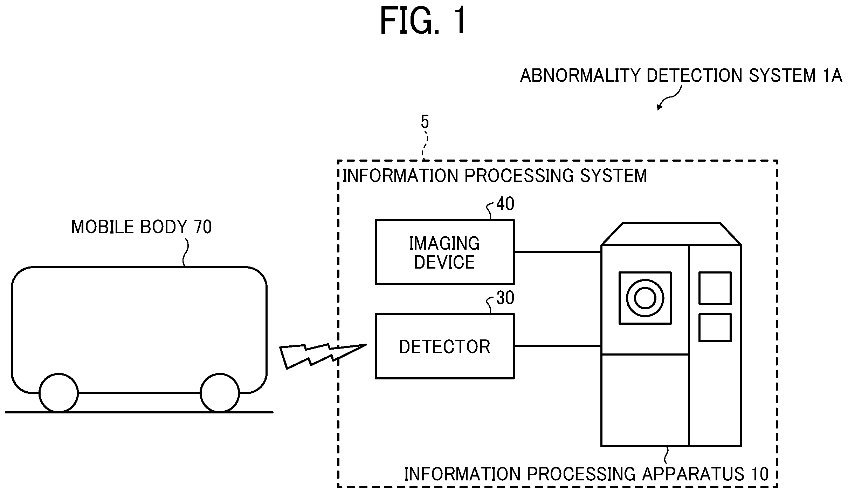

   FIG. 1 is a diagram illustrating an example of a system configuration of an abnormality detection system according to an embodiment of the present invention.
[FIG. 2]

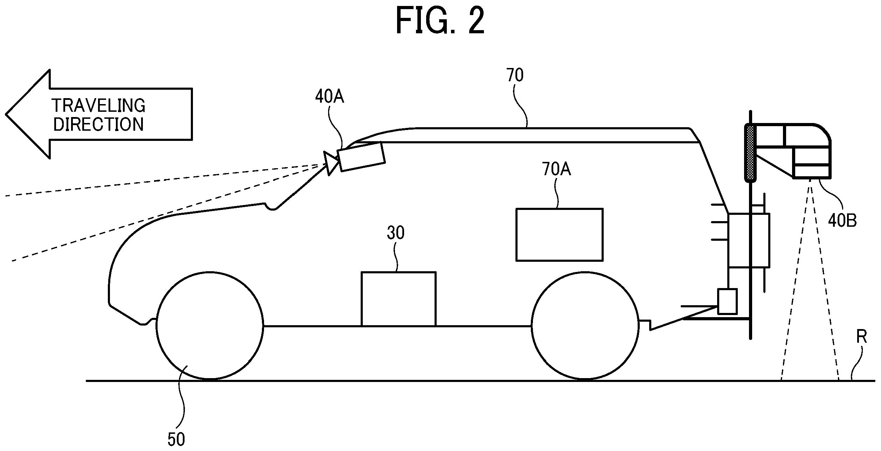

   FIG. 2 is an illustration of a vehicle according to the embodiment.
[FIG. 3]

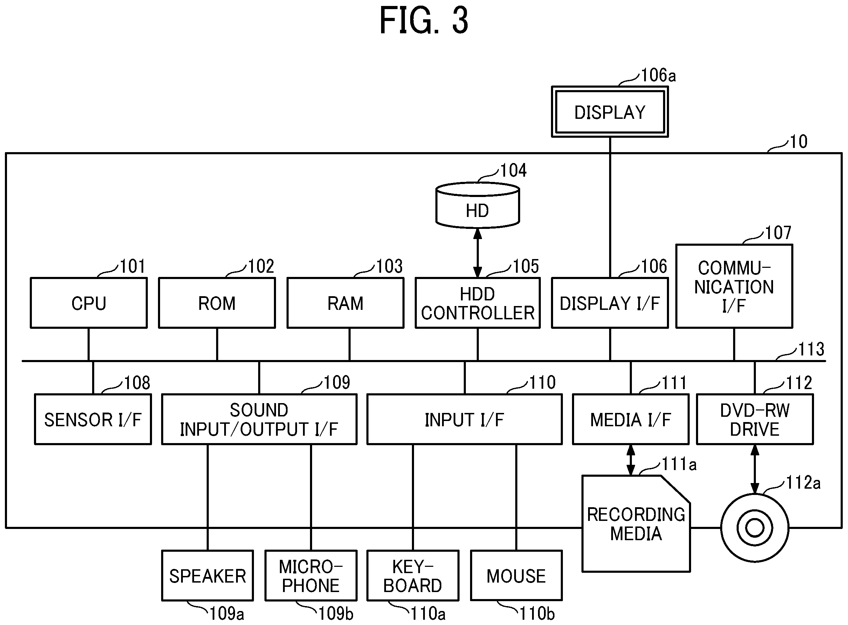

   FIG. 3 is a block diagram illustrating an example of a hardware configuration of an information processing apparatus.
[FIG. 4]

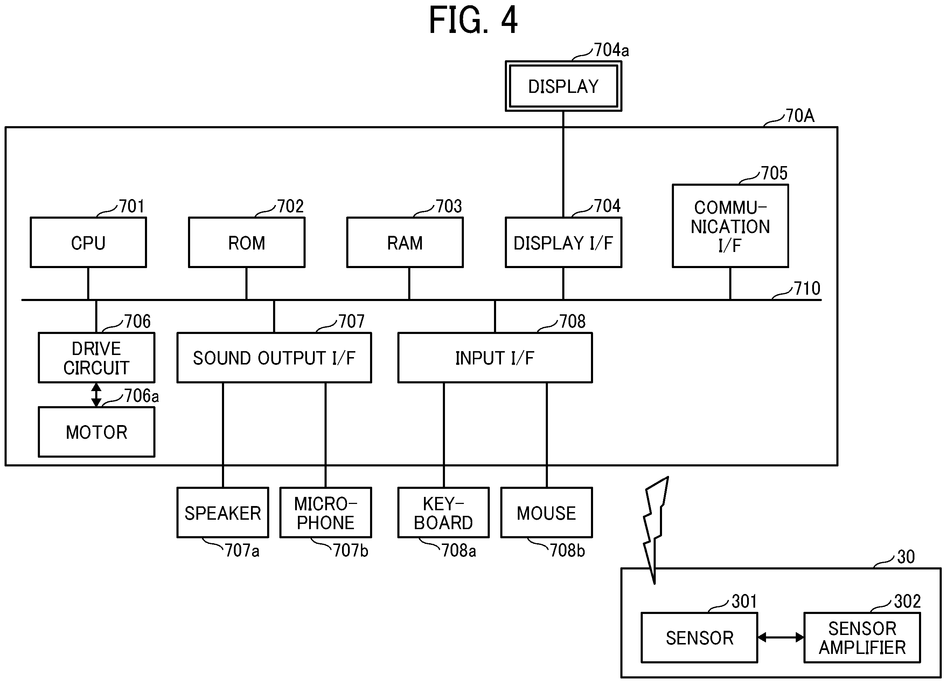

   FIG. 4 is a block diagram illustrating an example of a hardware configuration of a controller of a vehicle.
[FIG. 5]

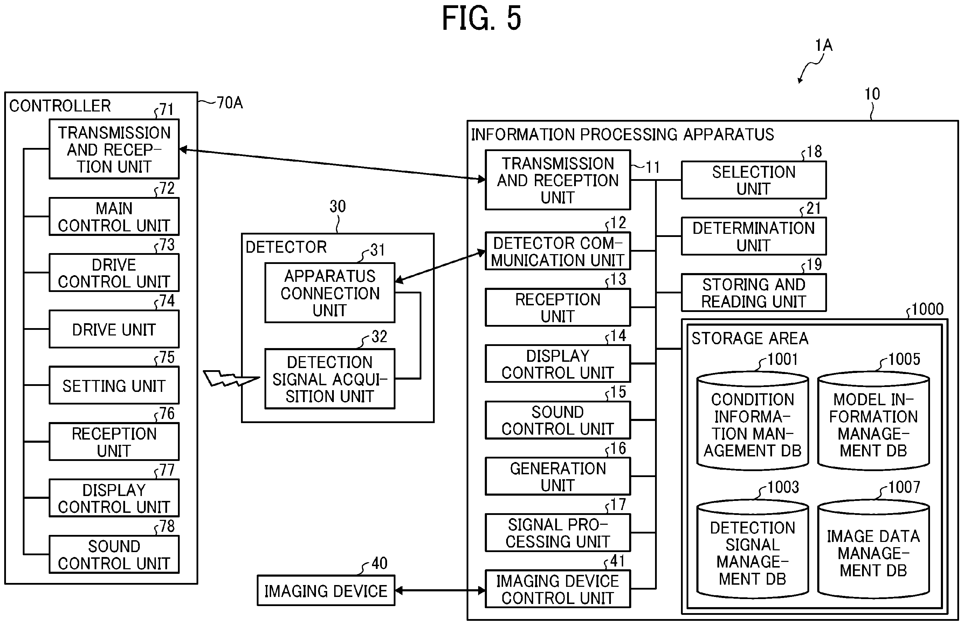

   FIG. 5 is a block diagram illustrating an example of a functional configuration of the abnormality detection system according to the embodiment.
[FIG. 6]

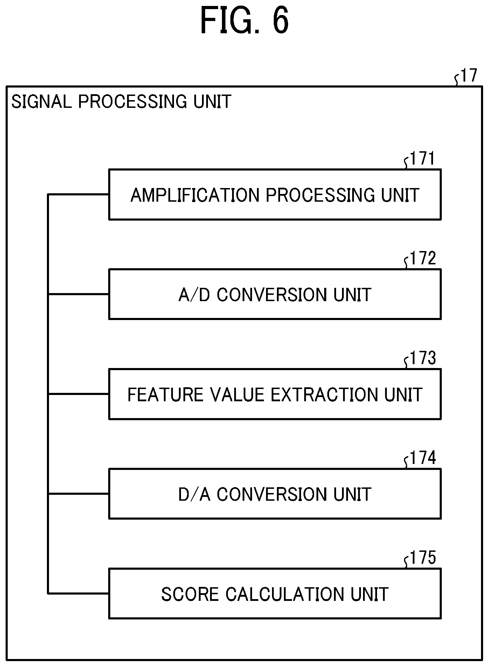

   FIG. 6 is a block diagram illustrating an example of a detailed functional configuration of a signal processing unit according to the embodiment.
[FIG. 7]

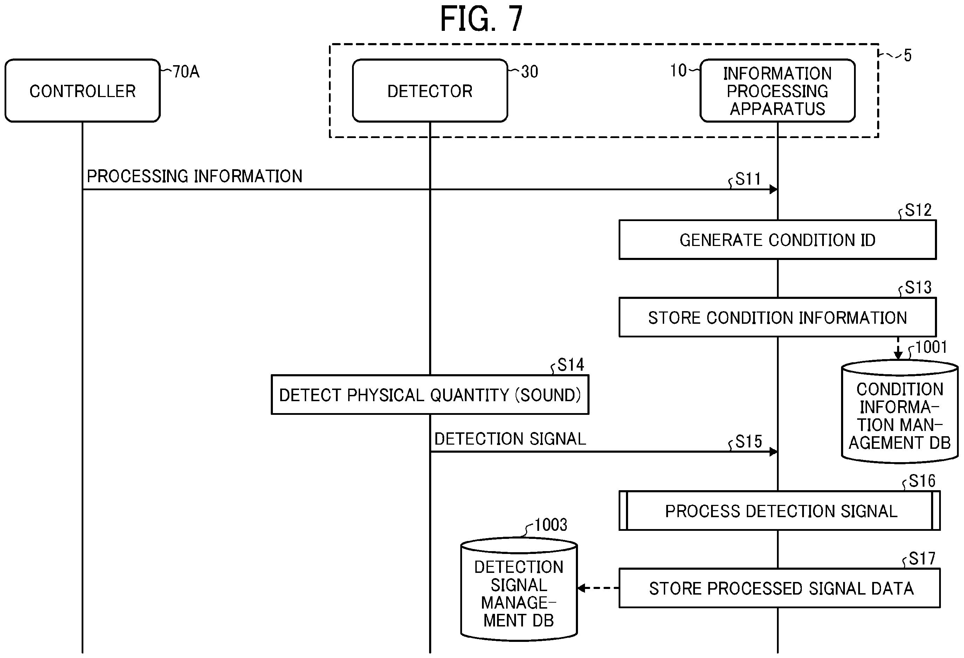

   FIG. 7 is a sequence chart illustrating an example of storing of a detection signal by the abnormality detection system according to the embodiment.
[FIG. 8]

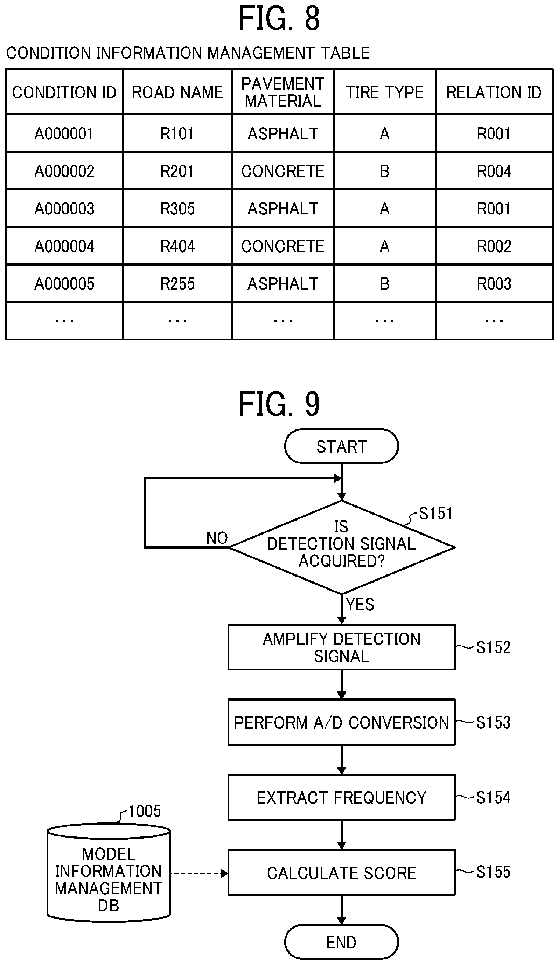

   FIG. 8 is a diagram illustrating an example of a condition information management table according to the embodiment.
[FIG. 9]
   FIG. 9 is a flowchart illustrating an example of processing of the detection signal by an information processing apparatus according to the embodiment.
[FIG. 10A]

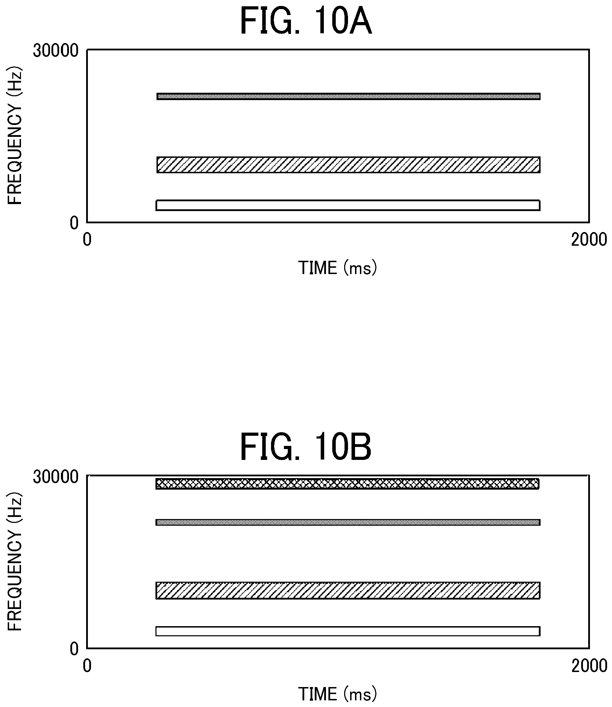

   FIG. 10A is a diagram illustrating an example of spectrogram of a detection signal detected in normal operation.
[FIG. 10B]
   FIG. 10B is a diagram illustrating an example of spectrogram of a detection signal detected with presence of an abnormality.
[FIG. 11]

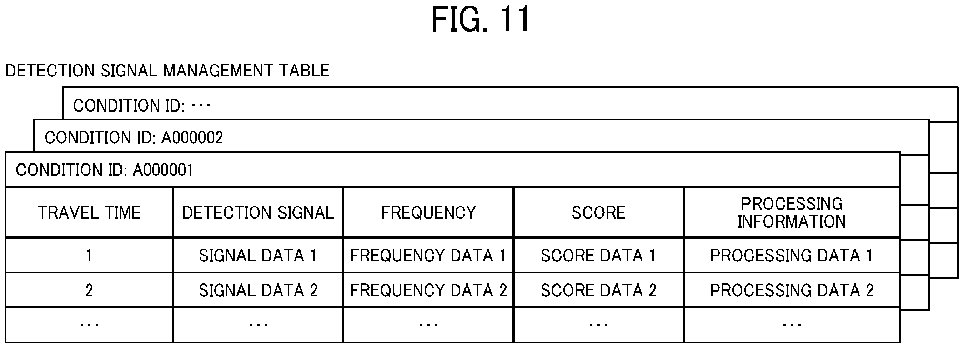

   FIG. 11 is a diagram illustrating an example of detection signal management table according to the embodiment.
[FIG. 12]

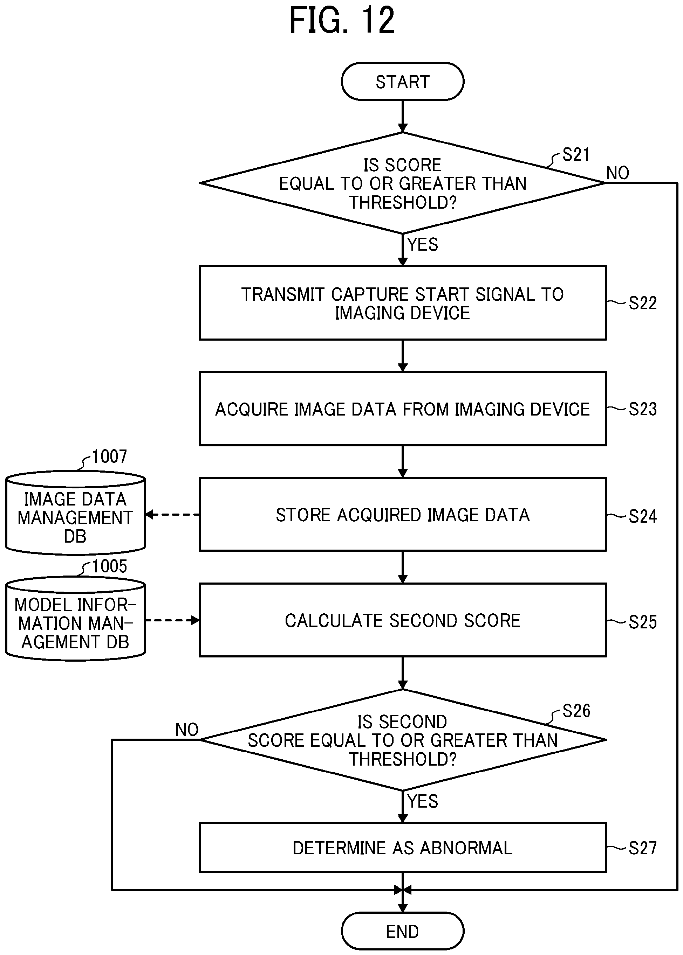

   FIG. 12 is a flowchart illustrating an example of processing of image data performed by the information processing apparatus according to the embodiment.
[FIG. 13]

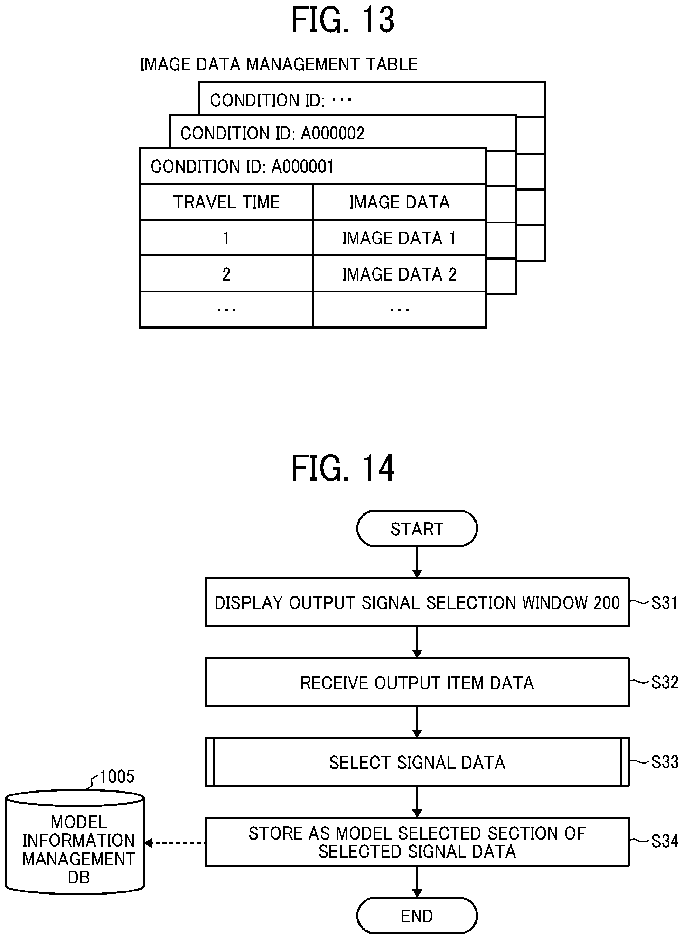

   FIG. 13 is a diagram illustrating an example of an image data management table according to the embodiment;
[FIG. 14]
   FIG. 14 is a flowchart illustrating an example of operation for displaying scores and storing the model information performed by the information processing apparatus according to the embodiment;
[FIG. 15]

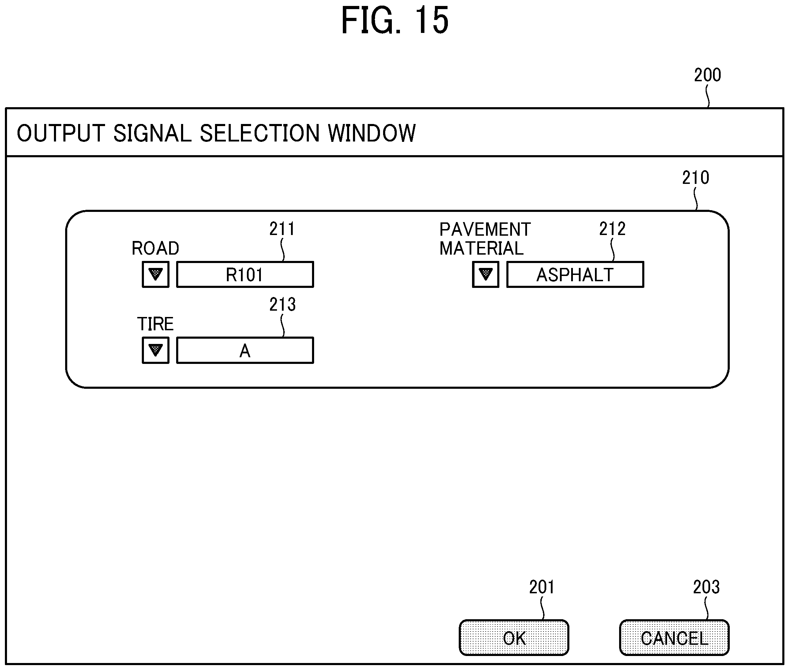

   FIG. 15 illustrates an example of an output signal selection window displayed by the information processing apparatus according to the embodiment.
[FIG. 16]

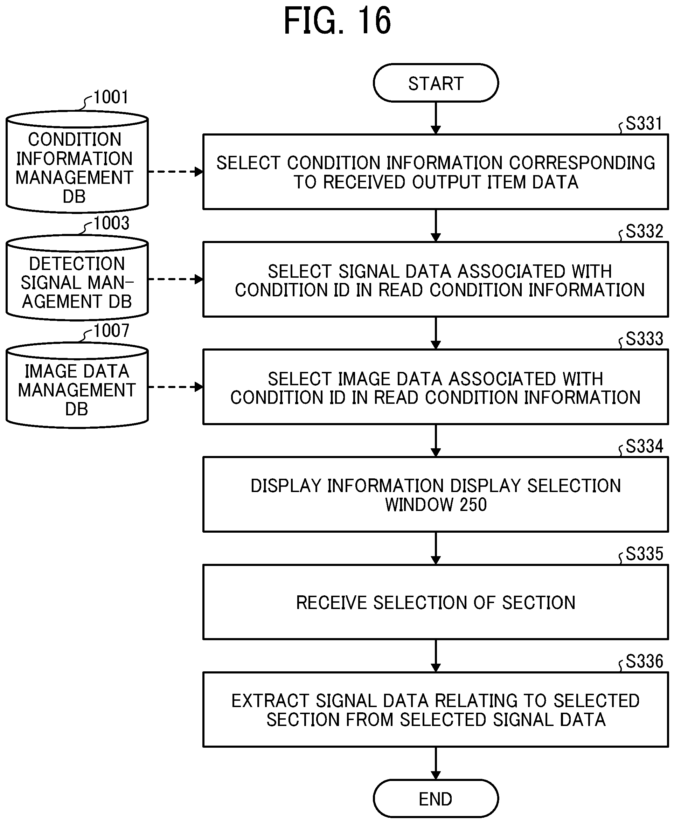

   FIG. 16 is a flowchart illustrating an example of display selection performed by the information processing apparatus according to the embodiment.
[FIG. 17]

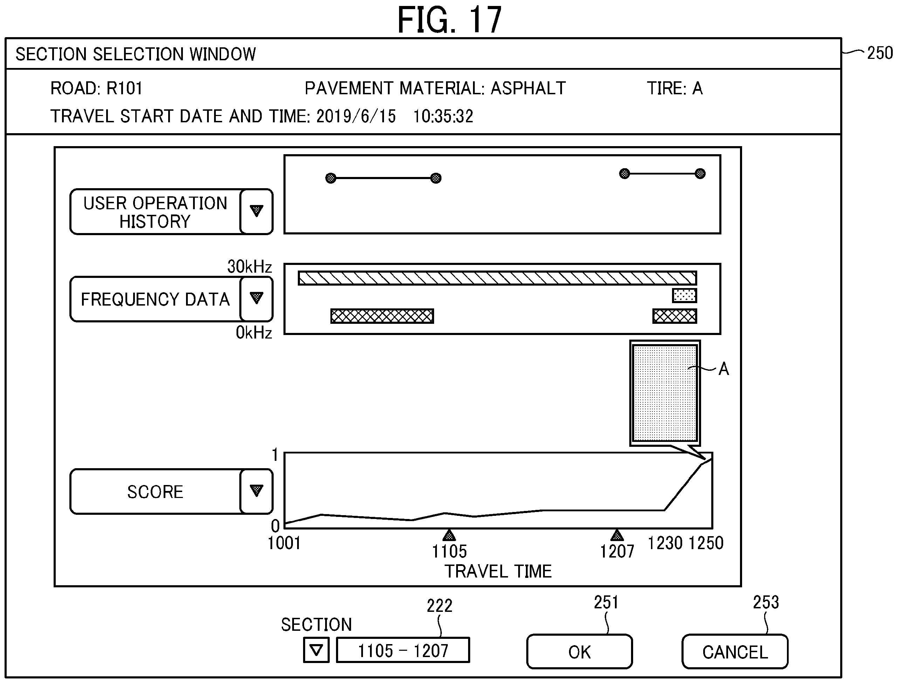

   FIG. 17 illustrates an example of a display and selection window displayed on the information processing apparatus according to the embodiment.
[FIG. 18]

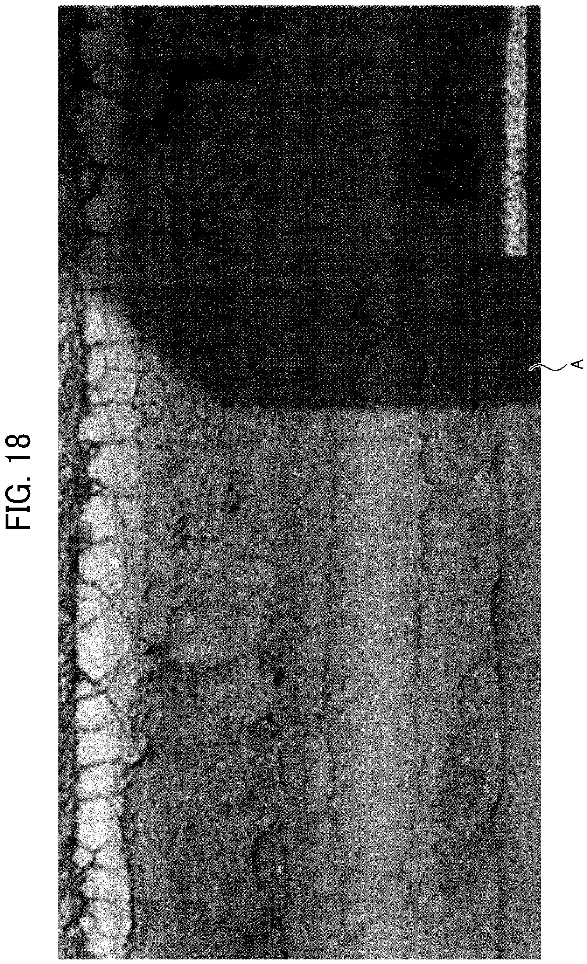

   FIG. 18 is a diagram illustrating an example of image data displayed on the display and selection window according to the embodiment.
[FIG. 19]

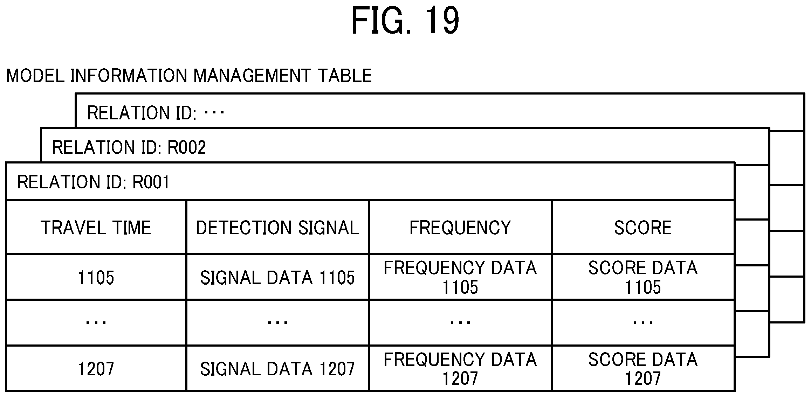

   FIG. 19 is a diagram illustrating an example of a model information management table according to the embodiment.
[FIG. 20]

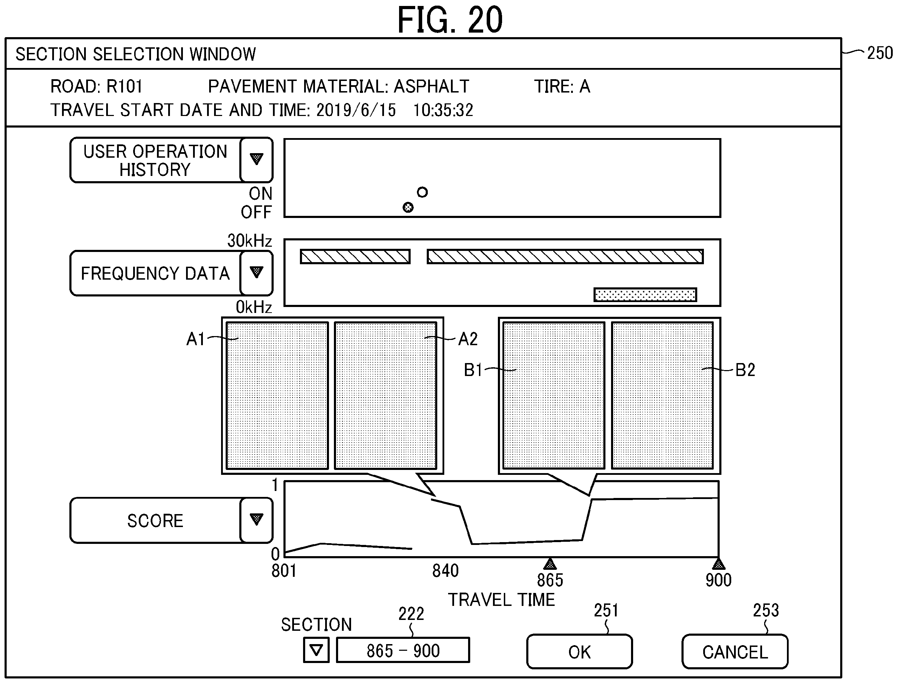

   FIG. 20 is a diagram illustrating an example of a display and selection window displayed on an information processing apparatus according to a first modification of the embodiment.
[FIG. 21A]

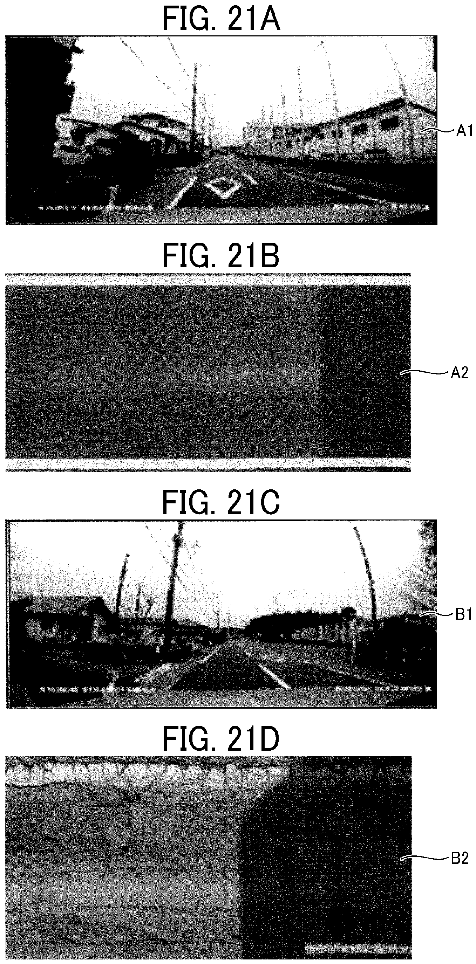

   FIG. 21A is a diagram illustrating an example of image data displayed on the display and selection window according to the first modification.
[FIG. 21B]
   FIG. 21B is a diagram illustrating an example of image data displayed on the display and selection window according to the first modification.
[FIG. 21C]
   FIG. 21C is a diagram illustrating an example of image data displayed on the display and selection window according to the first modification.
[FIG. 21D]
   FIG. 21D is a diagram illustrating an example of image data displayed on the display and selection window according to the first modification.
[FIG. 22]

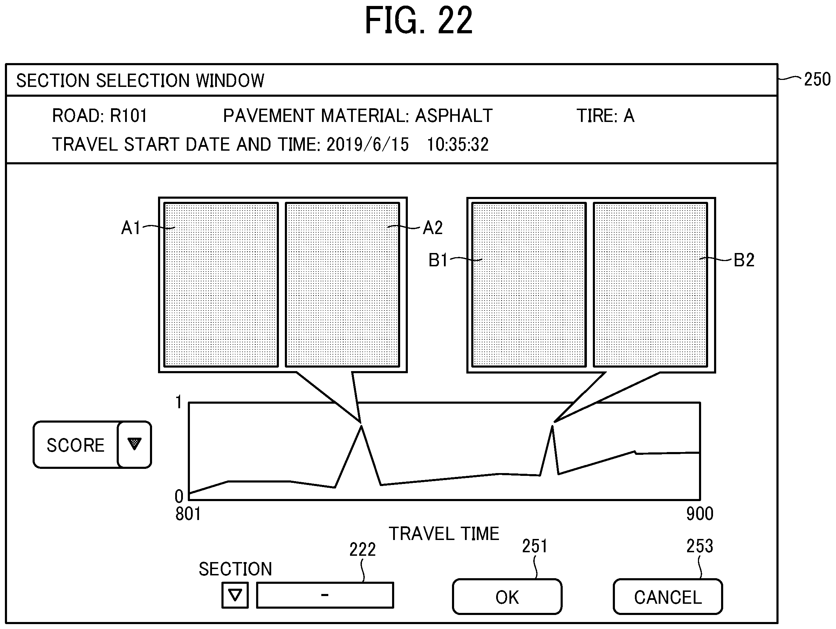

   FIG. 22 is a diagram illustrating an example of a display and selection window displayed on an information processing apparatus according to a second modification of the embodiment.
[FIG. 23]

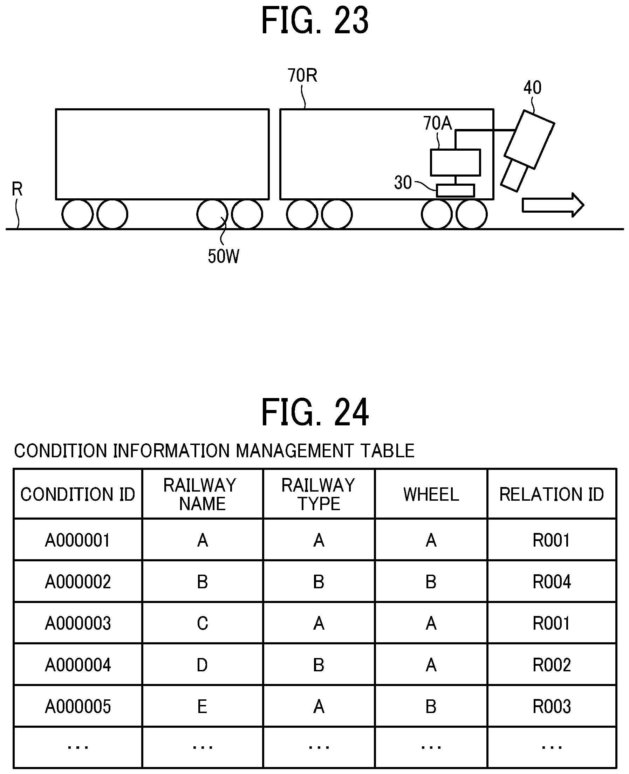

   FIG. 23 is an illustration of a railway vehicle according to a third modification.
[FIG. 24]
   FIG. 24 is a diagram illustrating an example of a condition information management table according to the third modification.
[FIG. 25]

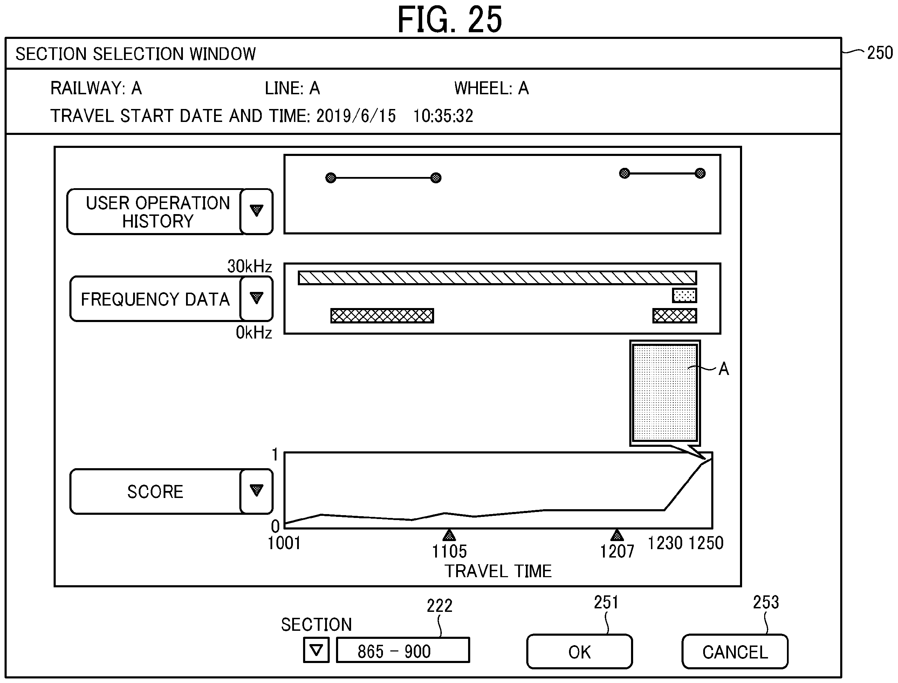

   FIG. 25 is a diagram illustrating an example of a display and selection window displayed on the information processing apparatus according to the third modification.
[FIG. 26]

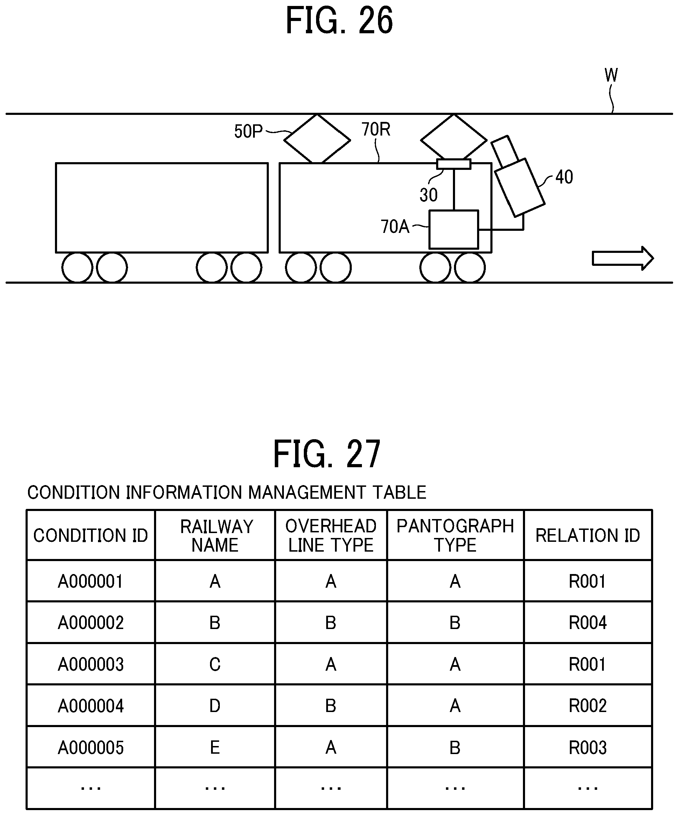

   FIG. 26 is a diagram illustrating a railway vehicle according to a fourth modification of the embodiment;
[FIG. 27]
   FIG. 27 is a diagram illustrating an example of a condition information management table according to the fourth modification.
[FIG. 28]

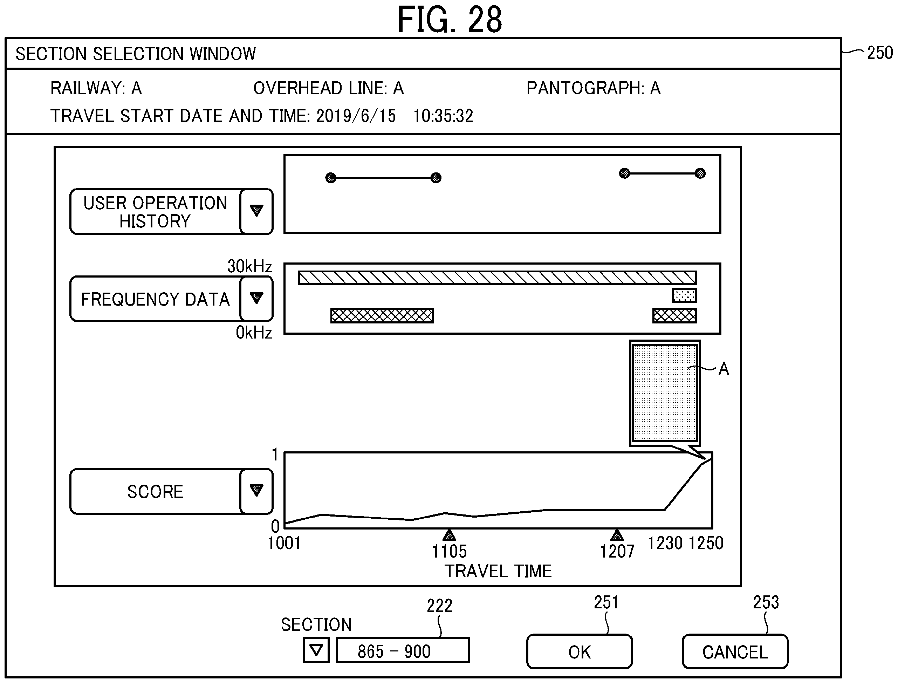

   FIG. 28 is a diagram illustrating an example of a display and selection window displayed on the information processing apparatus according to the fourth modification.
[FIG. 29]

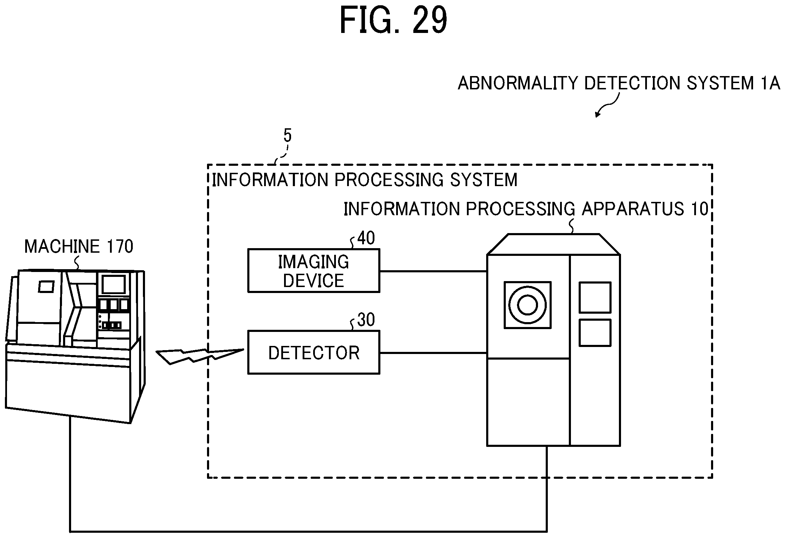

   FIG. 29 is a diagram illustrating an example of a system configuration of an abnormality detection system according to a second embodiment of the present invention.
[FIG. 30]

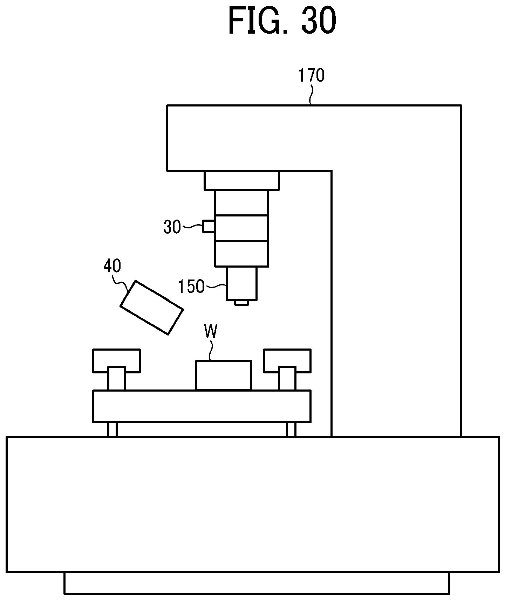

   FIG. 30 is a view of a machine according to the second embodiment;
[FIG. 31]

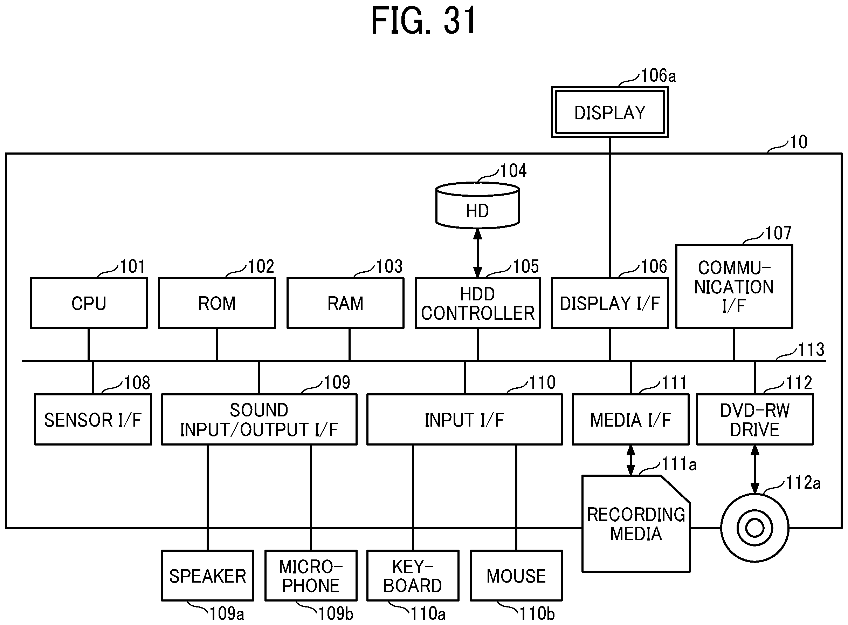

   FIG. 31 is a block diagram illustrating a hardware configuration of an information processing apparatus.
[FIG. 32]

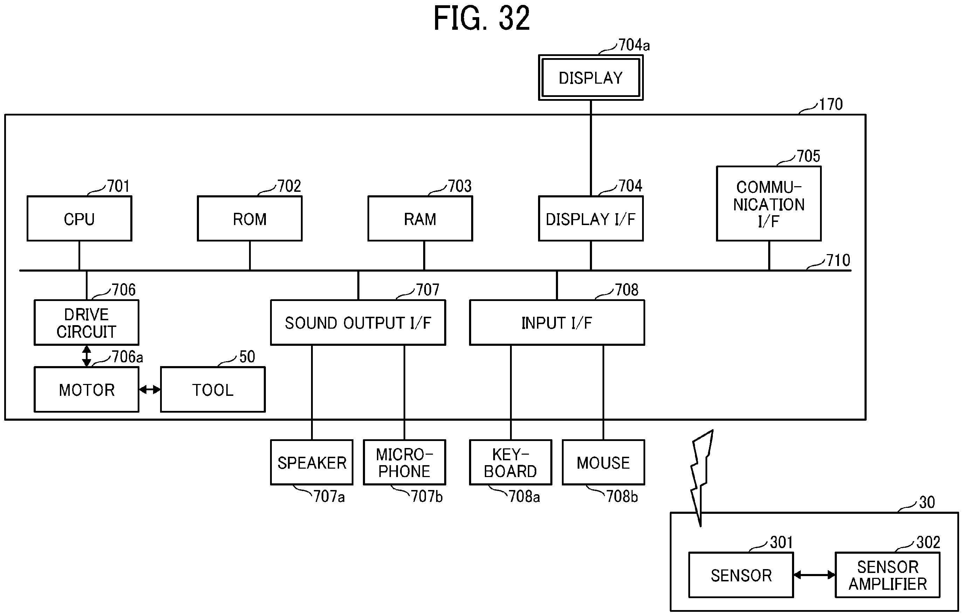

   FIG. 32 is a block diagram illustrating an example of a hardware configuration of the machine.
[FIG. 33]

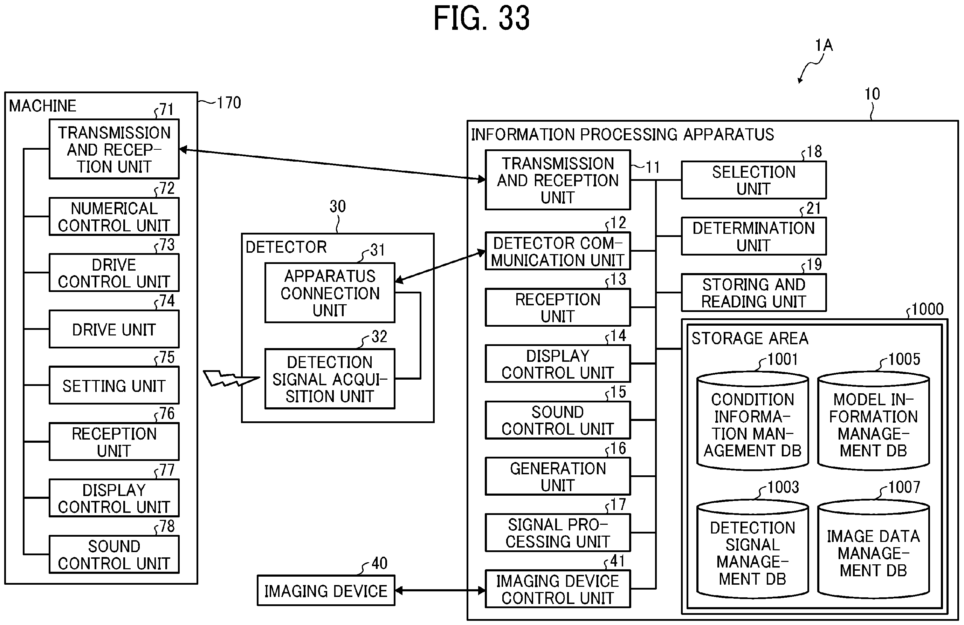

   FIG. 33 is a block diagram illustrating an example of a functional configuration of the abnormality detection system according the second embodiment.
[FIG. 34]

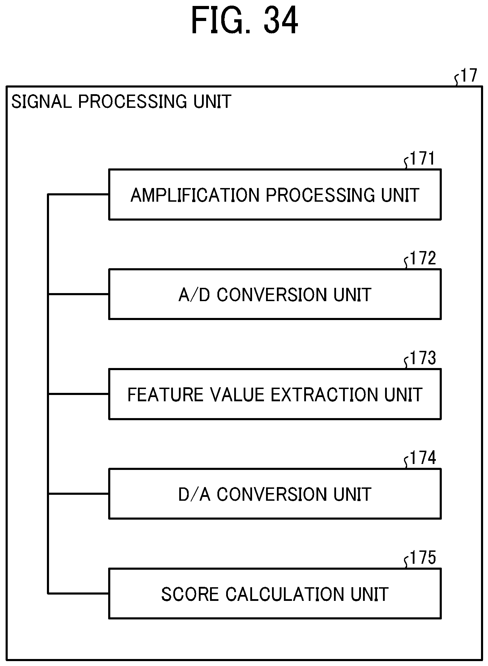

   FIG. 34 is a block diagram illustrating an example of a detailed functional configuration of a signal processing unit according to the second embodiment.
[FIG. 35]

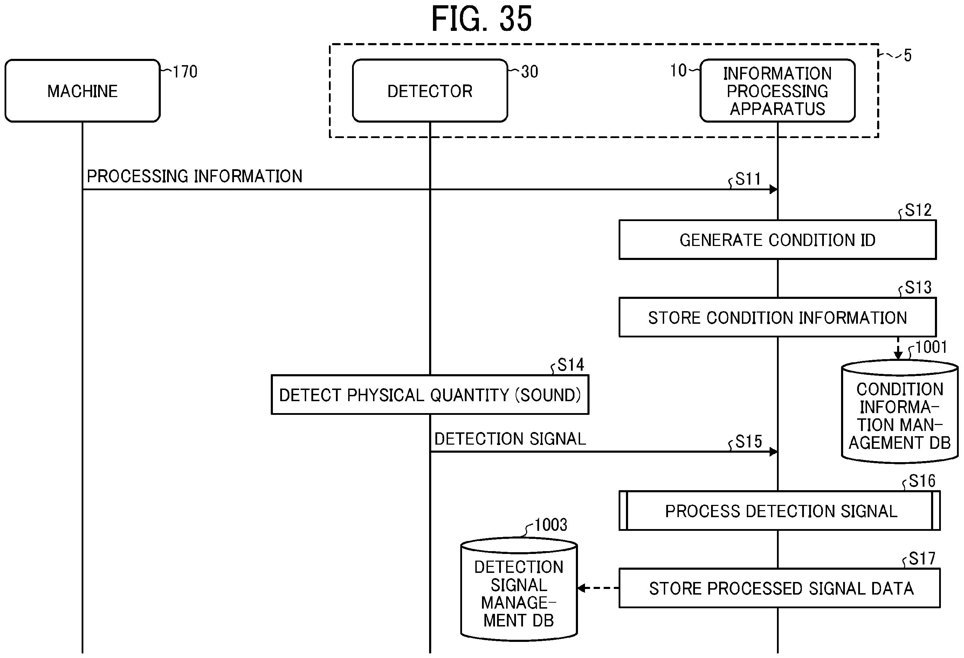

   FIG. 35 is a sequence chart illustrating an example of storing of a detection signal by the abnormality detection system according to the second embodiment.
[FIG. 36]

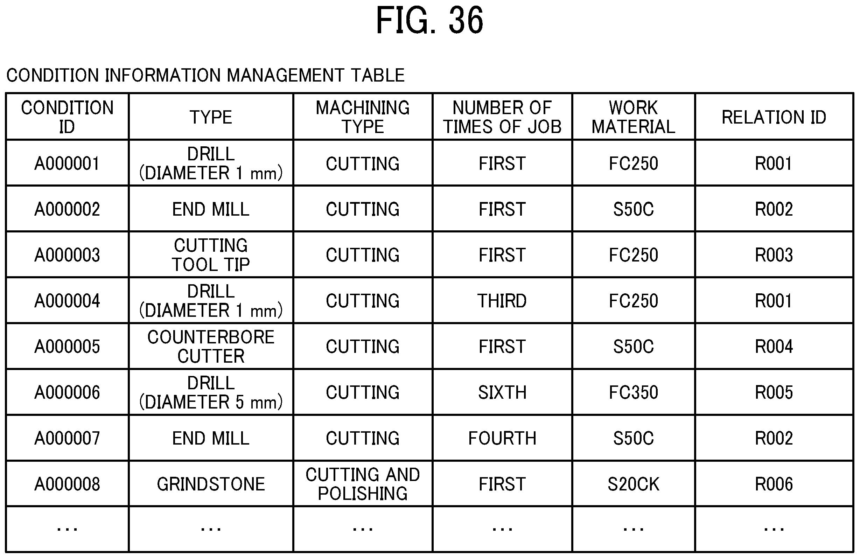

   FIG. 36 is a diagram illustrating an example of a condition information management table according to the second embodiment.
[FIG. 37]

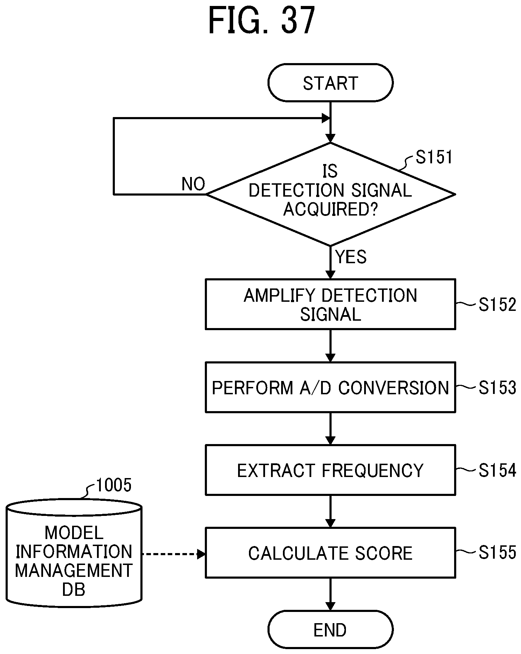

   FIG. 37 is a flowchart illustrating an example of processing of the detection signal by an information processing apparatus according to the second embodiment.
[FIG. 38A]

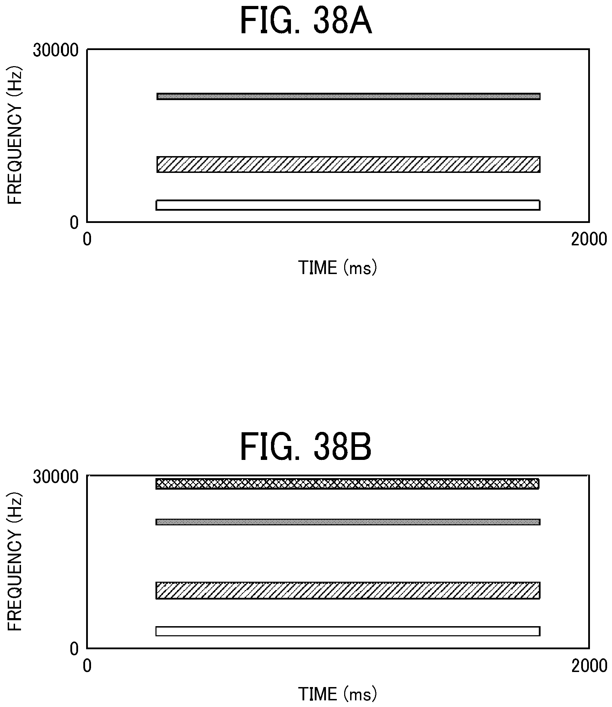

   FIG. 38A is a diagram illustrating an example of spectrogram of a detection signal detected in normal operation.
[FIG. 38B]
   FIG. 38B is a diagram illustrating an example of spectrogram of a detection signal detected with presence of an abnormality.
[FIG. 39]

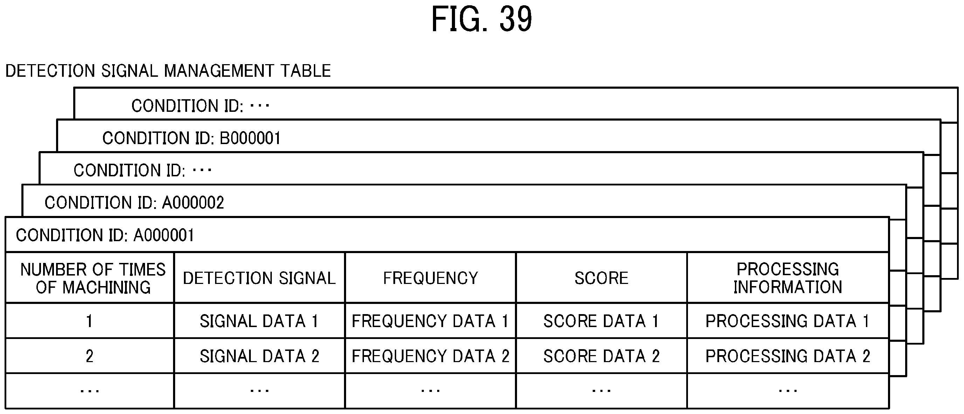

   FIG. 39 is a diagram illustrating an example of a detection signal management table according to the second embodiment.
[FIG. 40]

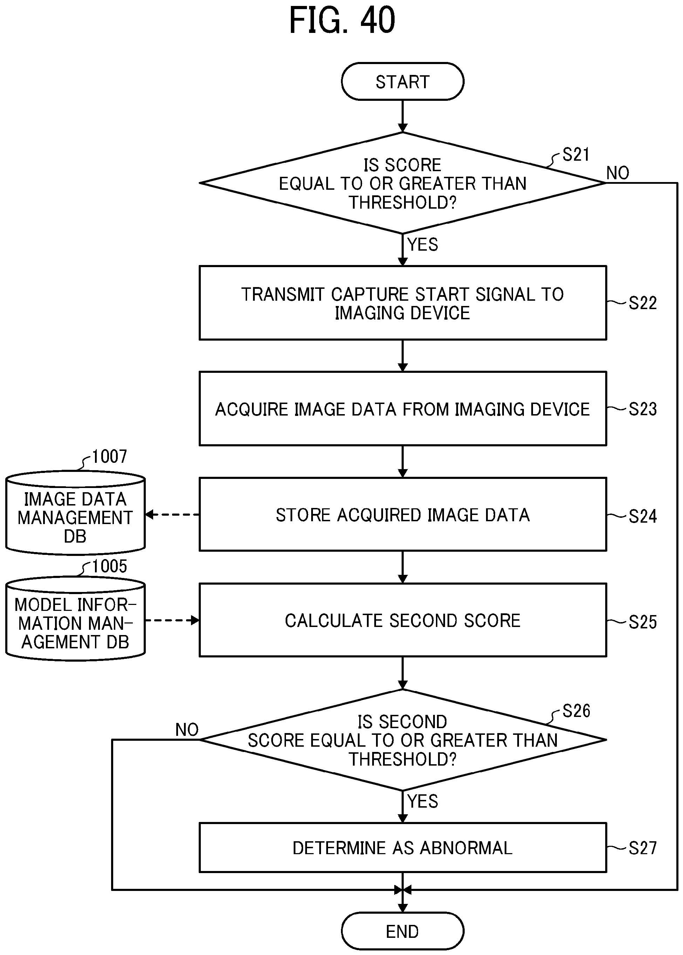

   FIG. 40 is a flowchart illustrating an example of processing of image data performed by the information processing apparatus according the second embodiment.
[FIG. 41]

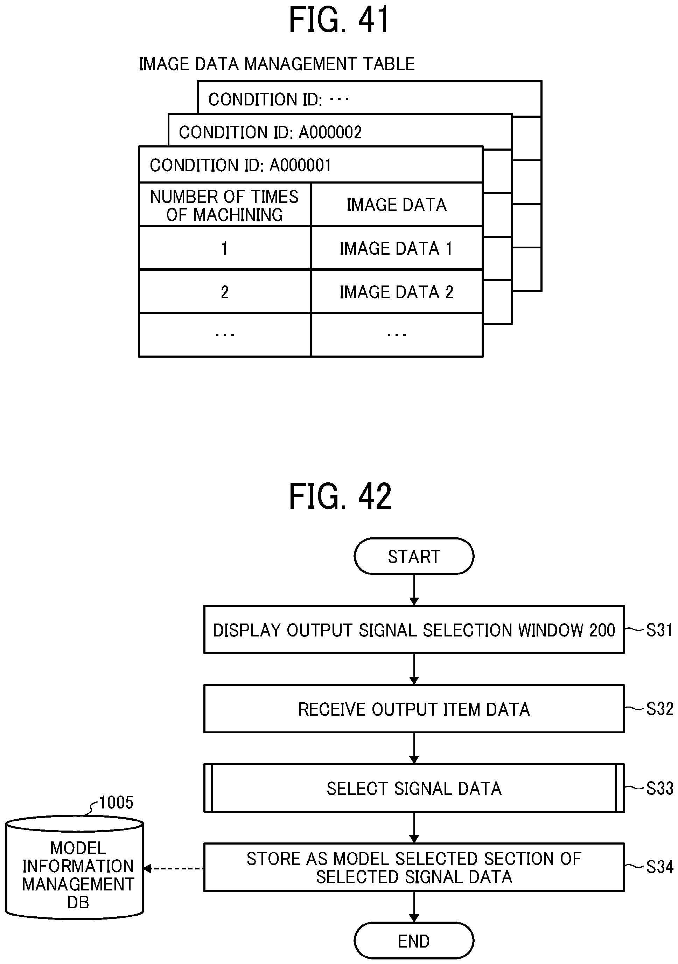

   FIG. 41 is a diagram illustrating an example of an image data management table according to the second embodiment;
[FIG. 42]
   FIG. 42 is a flowchart illustrating an example of operation for displaying scores and storing the model information performed by the information processing apparatus according to the second embodiment;
[FIG. 43]

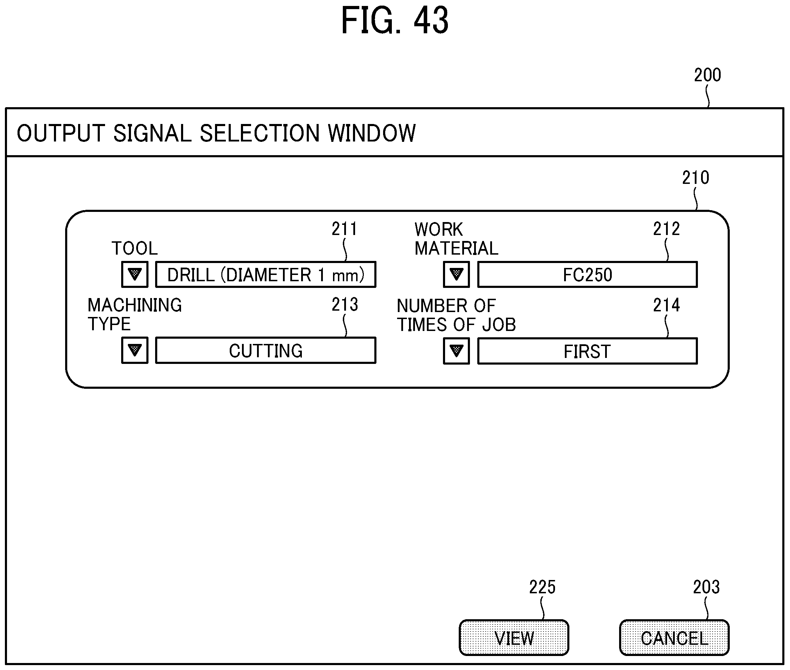

   FIG. 43 illustrates an example of an output signal selection window displayed by the information processing apparatus according to the second embodiment.
[FIG. 44]

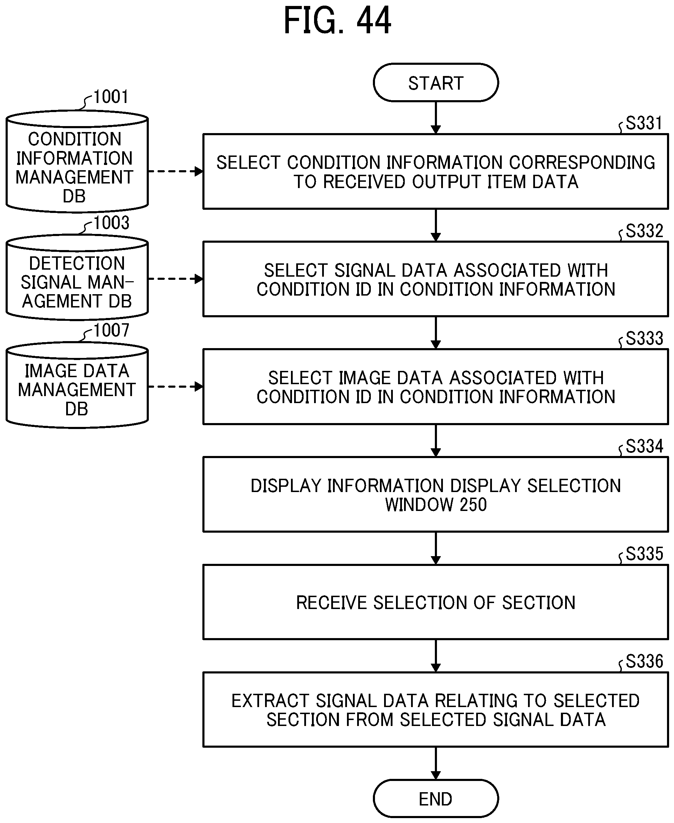

   FIG. 44 is a flowchart illustrating an example of display selection performed by the information processing apparatus according to the second embodiment.
[FIG. 45]

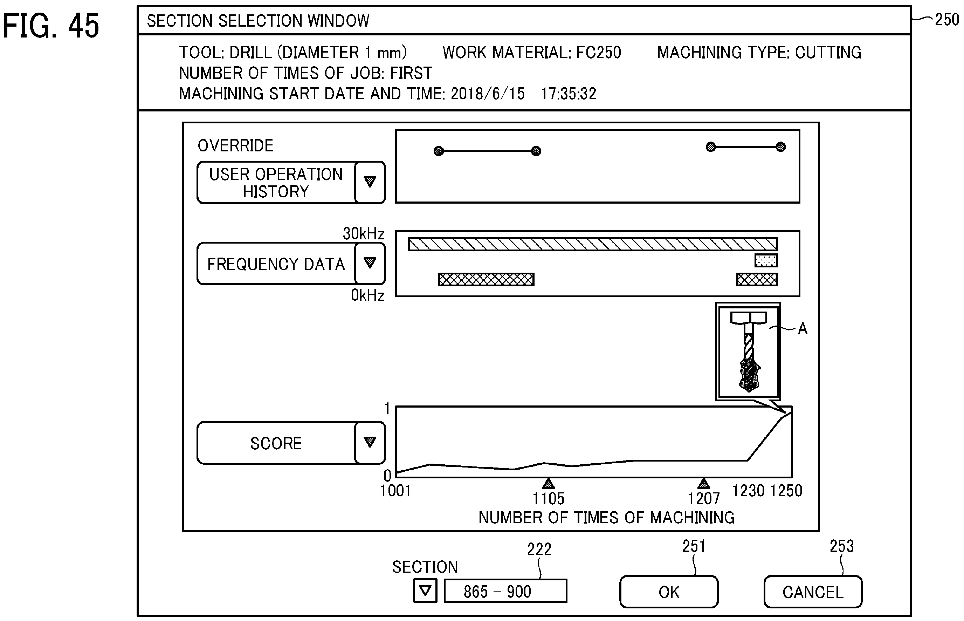

   FIG. 45 illustrates an example of a display and selection window displayed on the information processing apparatus according to the second embodiment.
[FIG. 46]

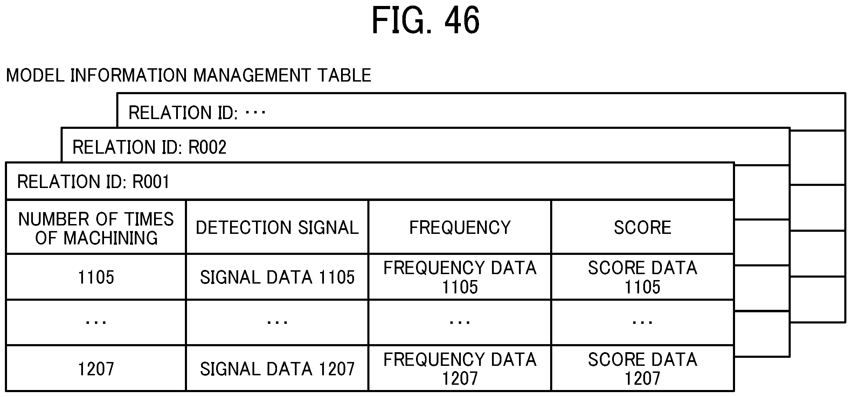

   FIG. 46 is a diagram illustrating an example of a model information management table according to the second embodiment.
[FIG. 47]

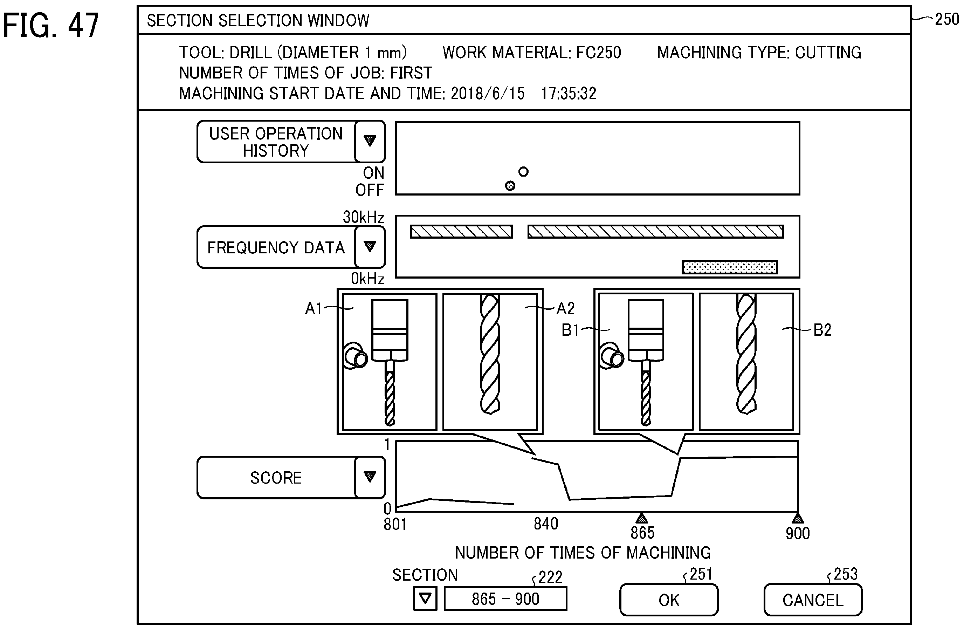

   FIG. 47 is a diagram illustrating an example of a display and selection window displayed on an information processing apparatus according to a first modification of the second embodiment; and
[FIG. 48]

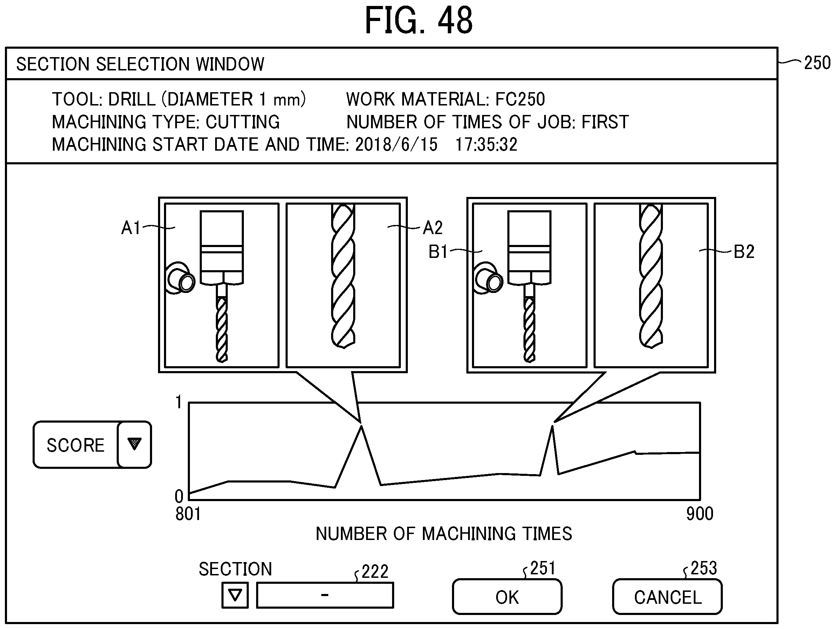

   FIG. 48 is a diagram illustrating an example of a display and selection window displayed on an information processing apparatus according to a second modification of the second embodiment.

### [Description of Embodiments]

Hereafter, embodiments for implementing the present disclosure is described with reference to the drawings. In the description of the drawings, the same elements are denoted by the same reference numerals, and redundant descriptions thereof are omitted.

### System Configuration

FIG. 1 is a diagram illustrating an example of a system configuration of an abnormality detection system according to an embodiment of the present invention. An abnormality detection system 1A according to the present embodiment includes a vehicle 70 and an information processing system 5. The information processing system 5 includes a detector 30, an imaging device 40, and an information processing apparatus 10.

The vehicle 70 is an example of a mobile body that moves while being in contact with a subject such as a road surface. The detector 30 detects a physical quantity that changes as the vehicle 70 moves while being in contact with the road surface. The imaging device 40 is an example of an imaging device that captures a moving image or a still image of the subject such as the road surface.

The abnormality detection system 1A may include multiple vehicles 70, multiple detectors 30 respectively corresponding to the multiple vehicles 70, and multiple imaging devices 40 respectively corresponding to the multiple vehicles 70.

The information processing apparatus 10 is a diagnostic apparatus that is connected to the vehicle 70 to communicate with the vehicle 70 and determines an abnormality of the subject such as the road surface. The information processing apparatus 10 may be a general-purpose personal computer (PC) in which a dedicated software program is installed. The information processing apparatus 10 may be a single computer or include multiple computers.

The information processing apparatus 10 and the vehicle 70 can be connected in any connection form. For example, the information processing apparatus 10 and the vehicle 70 may be connected by a dedicated connection line, a wired network such as a wired local area network (LAN), or a wireless network.

The detector 30 is a sensor that detects a physical quantity such as vibration or sound generated by contact between a tire installed in the vehicle 70 and a road surface or the like while the vehicle 70 moves, and outputs information on the detected physical quantity as a detection signal (sensor data) to the information processing apparatus 10. The detector 30 includes, for example, a microphone, a vibration sensor, an accelerometer, or an acoustic emission (AE) sensor, and detects a change in a physical quantity such as vibration or sound.

These sensors are installed in the vicinity of the tire. For example, the sensor is fixed by a screw, a magnet, or an adhesive. Alternatively, the detector 30 is embed in a hole made by hole-making processing. The number of detectors 30 may be any number. Further, the multiple detectors 30 may be of the same type to detect the same type of physical quantity, or of different types to detect different type of physical quantities.

Between the information processing apparatus 10 and the detector 30, several types of filters to filter the output signal from the detector 30 or a filter selector to select the filter may be provided as necessary.

FIG. 2 is a view illustrating a vehicle according to the present embodiment. The vehicle 70 includes a controller 70A, tires 50, and the detector 30. The vehicle 70 is provided with a first imaging device 40A and a second imaging device 40B. The first imaging device 40A is disposed so as to capture an image of a road surface R in the traveling direction of the vehicle 70. The second imaging device 40B is disposed so as to capture an image of the road surface R behind the vehicle 70 from the direction perpendicular to the road surface R. The tires 50 are an example of a movable body that moves while being in contact with the subject such as the road surface R.

The detector 30 may be incorporated in advance in the vehicle 70 or may be attached to the vehicle 70 being a finished product.

### Hardware Configuration

A description is given of hardware configurations of the information processing apparatus 10 and the vehicle 70 according to the present embodiment with reference to FIGS. 3 and 4. The hardware configurations illustrated in FIG. 3 and FIG. 4 may be common among the embodiments of the present disclosure. Alternatively, some components or elements may be added thereto or deleted therefrom as required.

### Hardware Configuration of Information Processing Apparatus

FIG. 3 is a block diagram illustrating an example of the hardware configuration of the information processing apparatus according to the present embodiment.

The information processing apparatus 10 is implemented by a computer, and, as illustrated in FIG. 23, includes a central processing unit (CPU) 101, a read only memory (ROM) 102, a random access memory (RAM) 103, a hard disk (HD) 104, a hard disk drive (HDD) controller 105, a display interface (I/F) 106, and a communication interface (I/F) 107.

The CPU 101 controls the entire operation of the information processing apparatus 10. The ROM 102 stores a program for controlling the CPU 101 such as an initial program loader (IPL) to boot the CPU 101. The RAM 103 is used as a work area for the CPU 101. The HD 104 stores various data such as a control program. The HDD controller 105 controls reading or writing of various data from or to the HD 104 under the control of the CPU 101. The display I/F 106 is a circuit to control a display 106a to display an image. The display 106a is, for example, a liquid crystal display or an organic electro luminescence (EL) display that displays an image of a subject, various icons, and the like. The communication I/F 107 is an interface used for communication with an external device such as the vehicle 70. The communication I/F 107 is, for example, a network interface card (NIC) in compliance with transmission control protocol/internet protocol (TCP/IP).

The information processing apparatus 10 further includes a sensor I/F 108, a sound input/output I/F 109, an input I/F 110, a media I/F 111, and a digital versatile disk-ReWritable (DVD-RW) drive 112.

The sensor I/F 108 is an interface that receives a detection signal via a sensor amplifier 302 included in the detector 30. The sound input/output I/F 109 is a circuit for controlling input and output of sound signals between a speaker 109a and a microphone 109b under control of the CPU 101. The input I/F 110 is an interface for connecting a predetermined input device to the information processing apparatus 10. The keyboard 110a is one example of an input device including a multiple keys for inputting characters, numerals, or various instructions. A mouse 110b is an example of an input device for selecting an instruction from various types of instruction or executing the instruction, selecting a subject to be processed, or moving a cursor. Alternatively, instead of the keyboard 708a and the mouse 708b, a touch panel or the like may be used as the input device. The media I/F 111 controls reading or writing (storing) of data from or to a recording medium 111a such as a flash memory. The DVD-RW drive 112 controls reading or writing of various data from or to a DVD-RW 112a as an example of a removable recording medium. The removable storage medium is not limited to the DVD-RW and may be a DVD-recordable (DVD-R) or the like. Further, the DVD-RW drive 112 may be a BLU-RAY drive that controls reading or writing of various data from or to a BLU-RAY disc.

Further, the information processing apparatus 10 includes a bus line 113. Examples of the bus line 113 include an address bus and a data bus. The bus line 113 electrically connects the elements, such as the CPU 101, with each another.

A recording medium, such as a hard disk (HD) and a compact disc read-only memory (CD-ROM), storing the programs described above can be distributed domestically or internationally as a program product.

### Hardware Configuration of Vehicle

FIG. 4 is a block diagram illustrating an example of the hardware configuration of a controller of a vehicle according to the present embodiment.

As illustrated in FIG. 4, the controller 70A includes a CPU 701, a ROM 702, a RAM 703, a display I/F 704, a communication I/F 705, a drive circuit 706, a sound output I/F 707, an input I/F 708, and a sensor I/F 709.

The CPU 701 controls entire operation of the controller 70A. The ROM 702 stores a control program to boot the CPU 701 such as an IPL. The RAM 703 is used as a work area for the CPU 701. The display I/F 704 is a circuit to control a display 704a to display an image. The display 704a is, for example, a liquid crystal display or an organic EL display that displays an image of a subject, various icons, and the like.

The communication I/F 705 is an interface for communication with an external device such as the information processing apparatus 10. The communication I/F 705 is, for example, an NIC in compliance with TCP/IP.

The drive circuit 706 is a circuit that controls the drive of a motor 706a. The motor 706a drives the tires 50.

The sound output I/F 707 is a circuit that processes the output of a sound signal between a speaker 707a and a microphone 707b under the control of the CPU 701. The input I/F 708 is an interface for connecting a predetermined input device to the controller 70A. A keyboard 708a is an example of an input device including multiple keys for inputting characters, numerals, or various instructions. A mouse 708b is an example of an input device for selecting an instruction from various types of instruction or executing the instruction, selecting a subject to be processed, or moving a cursor. Alternatively, instead of the keyboard 708a and the mouse 708b, a touch panel or the like may be used as the input device.

The controller 70A is further provided with a bus line 710. Examples of the bus line 710 include an address bus and a data bus. The bus line 710 electrically connects the elements, such as the CPU 701, with each another.

The detector 30 includes a sensor 301 and a sensor amplifier 302. The detector 30 detects a physical quantity such as vibration or sound that changes in accordance with movement of the vehicle 70 being in contact with the road surface R. As described above, the sensor 301 detects a physical quantity such as vibration or sound generated by contact between the tires 50 of the vehicle 70 and the road surface R while the vehicle 70 moves. The sensor 301 acquires a detection signal (sensor data) based on the detected physical quantity information. The sensor 301 is, for example, a microphone, a vibration sensor, an accelerometer, or an AE sensor. The sensor amplifier 302 adjusts the detection sensitivity of the sensor 301 and outputs the detection signal acquired by the sensor 301.

### Functional Configuration

FIG. 5 is a block diagram illustrating an example of a functional configuration of the abnormality detection system according to the present embodiment.

### Functional Configuration of Information Processing Apparatus

A description is given of the functional configuration of the information processing apparatus 10. The functions implemented by the information processing apparatus 10 include a transmission and reception unit 11, a detector communication unit 12, a reception unit 13, a display control unit 14, a sound control unit 15, a generation unit 16, a signal processing unit 17, a selection unit 18, a determination unit 21, a storing and reading unit 19, an imaging device control unit 41, and a storage area 1000.

The transmission and reception unit 11 has a function of transmitting and receiving various data (or information) to and from an external device such as the vehicle 70. The transmission and reception unit 11 receives the processing information (travel information) relating to the current operation of the vehicle 70. The transmission and reception unit 11 is mainly implemented by the communication I/F 107 illustrated in FIG. 3 and a program executed by the CPU 101 illustrated in FIG. 3. The transmission and reception unit 11 is an example of a processing information acquisition unit.

The detector communication unit 12 has a function of performing data communication with the detector 30. The detector communication unit 12 receives, for example, a detection signal (sensor data) related to a physical quantity detected by the detector 30. The detector communication unit 12 is mainly implemented by a program executed by the CPU 101 illustrated in FIG. 3. The detector communication unit 12 is an example of a detection result acquisition unit that acquires detection results (detection information). The detection signal received by the detector communication unit 12 is an example of a detection result relating to the physical quantity that changes as the vehicle 70 moves while being in contact with the road surface R.

The reception unit 13 has a function of receiving user input via the input device such as the keyboard 110a illustrated in FIG. 3. The reception unit 13 receives, for example, selection of an output item in response to an input to an output signal selection window 200 (see FIG. 15). The reception unit 13 is mainly implemented by a program executed by the CPU 101 illustrated in FIG. 3.

The display control unit 14 has a function of controlling the display 106a illustrated in FIG. 3 to display various screens. The display control unit 14 controls the display 106a to display, for example, the output signal selection window 200 (see FIG. 15). Specifically, for example, the display control unit 14 launches and executes a software application that operates on an operating system (OS), thereby downloading a web application, which includes at least hypertext markup language (HTML), and further includes cascading style sheets (CSS) or JAVASCRIPT (registered trademark). Then, the display control unit 14 controls the display 106a to display various image data generated by the web application. The display control unit 14 controls the display 106a to display, for example, image data generated by HTML5 including data in the format of Extensible Markup Language (XML), JavaScript Object Notation (JSON), or Simple Object Access Protocol (SOAP). The display control unit 14 is mainly implemented by the display I/F 106 illustrated in FIG. 3 and a program executed by the CPU 101.

The sound control unit 15 has a function of outputting a sound signal from the speaker 109a illustrated in FIG. 3. The sound control unit 15 sets a detection signal to be output from the speaker 109a, and outputs, as sound, the set detection signal from the speaker 109a. The sound control unit 15 is mainly implemented by the sound input/output I/F 109 illustrated in FIG. 3 and a program executed by the CPU 101.

The generation unit 16 has a function of generating various image data to be displayed on the display 106a. The generation unit 16 generates, for example, image data relating to the output signal selection window 200 (see FIG. 15) to be displayed on the display 106a. The generation unit 16 performs rendering of, for example, data stored in the storage area 1000 and generates image data for displaying based on the rendered data. Rendering is a process of interpreting data described in a Web page description language (e.g., HTML, CSS, or XML) and calculating the arrangement of characters, image data, etc. actually displayed on the screen. The generation unit 16 generates a condition identifier (ID) for identifying condition information including the received processing information in response to reception of the processing information by the transmission and reception unit 11. The generation unit 16 is mainly implemented by a program executed by the CPU 101 illustrated in FIG. 3.

The signal processing unit 17 has a function of processing the detection signal received by the detector communication unit 12. A detailed description of the signal processing unit 17 is deferred. The signal processing unit 17 is mainly implemented by a program executed by the CPU 101 illustrated in FIG. 3.

The selection unit 18 has a function of selecting a detection signal to be output as sound based on a signal output request from a user. The selection unit 18 selects, for example, a detection signal stored in association with condition information corresponding to the output item data included in the signal output request, received by the reception unit 13. The selection unit 18 is mainly implemented by a program executed by the CPU 101 illustrated in FIG. 3.

The determination unit 21 is mainly implemented by operation of the CPU 101 illustrated in FIG. 3 and has a function of performing various kinds of determination. The determination unit 21 calculates, for example, the difference in signal data relating to multiple detection signals selected by the selection unit 18. The determination unit 21 is an example of an abnormality determination unit.

The imaging device control unit 41 has a function of communication of control signals and image data with the imaging devices 40 including the first imaging device 40A and the second imaging device 40B. For example, the imaging device control unit 41 transmits a capture start signal to the imaging device 40. The imaging device control unit 41 is an example of an image data acquisition unit that acquires image data of the road surface R, and receives, for example, image data that is a moving image or a still image of the road surface R captured by the imaging device 40. The imaging device control unit 41 is mainly implemented by a program executed by the CPU 101 illustrated in FIG. 3.

The storing and reading unit 19 has a function of storing various data in the storage area 1000 and reading various data from the storage area 1000. The storing and reading unit 19 is mainly implemented by, for example, a program executed by the CPU 101 illustrated in FIG. 3. The storage area 1000 is mainly implemented by the ROM 102, the HD 104, and the recording medium 111a illustrated in FIG. 3.

The storage area 1000 stores a condition information management database (DB) 1001, a detection signal management DB 1003, a model information management DB 1005, and an image data management DB 1007. The condition information management DB 1001 is formed by a condition information management table described later. The detection signal management DB 1003 is in the form of a detection signal management table described later. The model information management DB 1005 is built as a model information management table described later. The image data management DB 1007 is formed with an image data management table described later. The storing and reading unit 19 is an example of a storing control unit.

### Functional Configuration of Detector

A description is given of a functional configuration of the detector 30. The functions implemented by the detector 30 include an apparatus connection unit 31 and a detection signal acquisition unit 32.

The apparatus connection unit 31 has a function of transmitting the detection signal acquired by the detection signal acquisition unit 32 to the information processing apparatus 10. The apparatus connection unit 31 is mainly implemented by the sensor amplifier 302 illustrated in FIG. 4.

The detection signal acquisition unit 32 has a function of detecting the physical quantity (such as vibration or sound) that changes as the vehicle 70 moves while being in contact with the road surface R and a function of acquiring the information on the physical quantity as a detection signal. The detection signal acquisition unit 32 is mainly implemented by the sensor 301 illustrated in FIG. 4. The detection signal acquisition unit 32 detects a physical quantity (such as vibration or sound) generated by contact between the tire 50 of the vehicle 70 and the road surface R while the vehicle 70 moves, and acquires information on the detected physical quantity as detection result (sensor data). For example, when the road surface R has a crack or the like, the sound at the time of contact between the tire 50 and the road surface R changes. Therefore, the detection signal acquisition unit 32 detects acoustic data using the sensor 301, such as a microphone, and transmits the detection signal relating to the detected acoustic data to the information processing apparatus 10 via the apparatus connection unit 31. The detection signal acquisition unit 32 is mainly implemented by the sensor 301 illustrated in FIG. 4.

### Functional Configuration of Vehicle

The functions implemented by the controller 70A of the vehicle 70 include a transmission and reception unit 71, a main control unit 72, a drive control unit 73, a drive unit 74, a setting unit 75, a reception unit 76, a display control unit 77, and a sound control unit 78.

The transmission and reception unit 71 has a function of transmitting and receiving various data (or information) to and from an external device such as the information processing apparatus 10. The transmission and reception unit 71 transmits the processing information relating to the current operation of the vehicle 70 to the information processing apparatus 10. The transmission and reception unit 71 is mainly implemented by the communication I/F 705 illustrated in FIG. 4 and a program executed by the CPU 701.

The main control unit 72 generates and outputs control data for controlling the operation of the drive unit 74. Further, the main control unit 72 outputs processing information relating to the operation of the vehicle 70 to the transmission and reception unit 71. For example, the main control unit 72 sequentially transmits information corresponding to the current operation of the vehicle 70 to the information processing apparatus 10 via the transmission and reception unit 71. When the vehicle 70 travels, the main control unit 72 changes, as appropriate, the type of the drive unit 74 to be driven or the drive state (rotation number, rotation speed, etc.) of the drive unit 74. Each time the type of operation is changed, the main control unit 72 sequentially transmits information corresponding to the changed type of operation to the information processing apparatus 10 via the transmission and reception unit 71. The main control unit 72 is mainly implemented by a program or the like executed by the CPU 701 illustrated in FIG. 4.

The drive control unit 73 has a function of controlling the drive unit 74 based on the control data obtained by the main control unit 72. The drive control unit 73 is implemented by, for example, the drive circuit 706 illustrated in FIG. 4. The drive control unit 73 is mainly implemented by the drive circuit 706 illustrated in FIG. 4 and a program executed by the CPU 701.

The drive unit 74 has a drive function to be controlled by the drive control unit 73. The drive unit 74 drives the tires 50 under the control of the drive control unit 73. The drive unit 74 is an actuator that is controlled by the drive control unit 73 and is mainly implemented by the motor 706a illustrated in FIG. 4. The drive unit 74 may be any actuator used for driving the vehicle 70 and is to be controlled. Further, two or more drive units 74 may be provided.

The setting unit 75 has a function of setting condition information corresponding to the current operation of the vehicle 70. The setting unit 75 is mainly implemented by a program executed by the CPU 701 illustrated in FIG. 4.

The reception unit 76 has a function of receiving user input via the input device such as the keyboard 708a illustrated in FIG. 4. The reception unit 76 receives, for example, selection of an output item in response to an input to the output signal selection window 200 (see FIG. 15) on the display 704a. The reception unit 76 is mainly implemented by the input I/F 708 illustrated in FIG. 4 and a program executed by the CPU 701.

The display control unit 77 has a function of displaying various screen information on the display 704a illustrated in FIG. 4. The display control unit 77 controls the display 704a to display, for example, the output signal selection window 200 (see FIG. 15). The display control unit 77 is mainly implemented by the display I/F 704 illustrated in FIG. 4 and a program executed by the CPU 701.

The sound control unit 78 is implemented by instructions from the CPU 701 illustrated in FIG. 4 and controls the speaker 707a to output a sound signal. The sound control unit 78 sets a detection signal to be output from the speaker 707a and outputs, as sound, the set detection signal from the speaker 707a. The sound control unit 78 is mainly implemented by the sound output I/F 707 illustrated in FIG. 4 and a program executed by the CPU 701.

FIG. 6 is a block diagram illustrating an example of the functional configuration of the signal processing unit according to the present embodiment. The signal processing unit 17 illustrated in FIG. 6 includes an amplification processing unit 171, an analog-to-digital (A/D) conversion unit 172, a feature value extraction unit 173, a digital-to-analog (D/A) conversion unit 174, and a score calculation unit 175.

The amplification processing unit 171 has a function of amplifying the detection signal received by the detector communication unit 12. The amplification processing unit 171 amplifies, for example, an analog signal received by the detector communication unit 12 to a given size. Further, the amplification processing unit 171 amplifies, for example, a digital signal converted by the A/D conversion unit 172 to a given size.

The A/D conversion unit 172 has a function of converting an analog signal amplified by the amplification processing unit 171 into a digital signal.

The feature value extraction unit 173 has a function of extracting a feature value (feature information) indicating a feature of the detection signal received by the detector communication unit 12. The feature value may be any information that indicates a feature of the detection signal. For example, when the detection signal is acoustic data, the feature value extraction unit 173 may extract energy, frequency spectrum, time, or mel-frequency cepstrum coefficients (MFCC) as the feature value.

The D/A conversion unit 174 has a function of converting a digital signal amplified by the amplification processing unit 171 into an analog signal.

The score calculation unit 175 calculates a score as an example of likelihood information indicating the likelihood of abnormality of the road surface R from the feature value (for example, frequency spectrum) of the detection signal extracted by the feature value extraction unit 173. The score calculation unit 175 is an example of a likelihood information determination unit that determines likelihood information indicating the likelihood of abnormality of the road surface R.

### Storing of Detection Signal

FIG. 7 is a sequence chart illustrating an example of storing of the detection signal by the abnormality detection system according to the present embodiment.

In step S11, the transmission and reception unit 71 of the controller 70A transmits the processing information relating to the current operation of the vehicle 70 to the information processing apparatus 10 of the information processing system 5. To be specific, the setting unit 75 of the controller 70A sets the processing information indicating a specific traveling content at the start of traveling of the vehicle 70. As described above, the processing information is information defined for each type of operation of the vehicle 70. Then, the transmission and reception unit 71 transmits the processing information set by the setting unit 75 to the information processing apparatus 10. Accordingly, the transmission and reception unit 11 of the information processing apparatus 10 receives the processing information transmitted from the controller 70A (an example of acquiring processing information).

In step S12, the generation unit 16 of the information processing apparatus 10 generates condition ID for identifying the condition information including the processing information received by the transmission and reception unit 11.

In step S13, the storing and reading unit 19 stores, in the condition information management DB 1001, the condition ID generated by the generation unit 16 and condition information associated with the processing information received by the transmission and reception unit 11 (an example of controlling of storing). At this time, the storing and reading unit 19 also stores a relation ID assigned to processing information indicating a related processing in the condition information management DB 1001. The condition information management DB 1001 stores, in the condition information management table, for each condition ID, the processing information in association with each other. The processing information indicates a content of a specific travel operation executed by the vehicle 70.

In step S14, the detection signal acquisition unit 32 of the detector 30 of the information processing system 5 detects the physical quantity such as vibration or sound generated by a travel of the vehicle 70. The detection signal acquisition unit 32 detects sound generated by the travel of the vehicle 70 and acquires the detection signal (acoustic signal) relating to the detected sound.

In step S15, the apparatus connection unit 31 of the detector 30 transmits the detection signal acquired in step S14 to the information processing apparatus 10. As a result, the detector communication unit 12 of the information processing apparatus 10 receives the detection signal transmitted from the detector 30 (an example of acquiring a detection result).

In step S16, the signal processing unit 17 of the information processing apparatus 10 processes the detection signal received by the detector communication unit 12.

In step S17, the storing and reading unit 19 of the information processing apparatus 10 stores the signal data processed by the signal processing unit 17 in the detection signal management DB 1003 in association with the processing information transmitted from the controller 70A (an example of controlling storing). The information processing apparatus 10 stores, in the detection signal management table, for each condition ID generated in step S12, travel time data included in the processing information received in step S11, the signal data relating to the detection signal received in step S15, the signal data (frequency data or score data) processed by the signal processing unit 17, and the data of the processing information received in step S11 in association with each other. The information processing apparatus 10 may store travel distance data instead of travel time data.

In other words, the storing and reading unit 19 stores, in the detection signal management DB 1003, multiple feature values (frequency data) in association with multiple processing information transmitted from the controller 70A, respectively.

### Condition Information Management Table

FIG. 8 is a diagram illustrating an example of the condition information management table according to the present embodiment. The storage area 1000 illustrated in FIG. 5 includes the condition information management DB 1001 described in step S13 of FIG. 7, for example, in the form of the condition information management table as illustrated in FIG. 8.

The condition information management table illustrated in FIG. 8 is for managing, for each operation performed by the vehicle 70, processing information relating to the operation of the vehicle 70. The condition information management table stores, for each condition ID, the condition information in which processing information is associated with each other. The condition ID is identification information for identifying the condition information including the processing information. The processing information is information defined for each type of operation of the vehicle 70. As illustrated in FIG. 8, the processing information includes information such as the road name on which the vehicle 70 travels, the type of pavement material of the road surface R on which the vehicle 70 travels, and the type such as the material of the tire 50 of the vehicle 70. The type of pavement material of the road surface R is an example of the type of subject, and the type of material of the tire 50 is an example of the type of the movable body.

The items included in the processing information may further include information indicating an operation history of the user with respect to the vehicle 70, a travel start date and time, travel time (an example of movement time of the vehicle 70), a travel speed of the vehicle 70, and the like. The processing information may further include a travel distance (an example of movement distance of the vehicle 70). Alternatively, the processing information may include the travel distance instead of the travel time. The travel information including the travel time or the travel distance is an example of movement information.

In the condition information management table, a relation ID for identifying related operations (processing) among operations performed by the vehicle 70 is stored in association. An identical relation ID is assigned to processing information indicating related operations in the condition information management table. In the example of FIG. 8, the same relation ID "R001" is assigned to processing information identified by the condition ID "A000001" and processing information identified by the condition ID "A00003." The related operations assigned with the relation ID are, for example, operations in which the pavement material and the tire type are the same and the road names are different.

Next, a description is given of processing of the detection signal by the signal processing unit 17 corresponding to step S16 in FIG. 7, with reference to FIGS. 9 to 10B.

FIG. 9 is a flowchart illustrating an example of processing of the detection signal performed by the information processing apparatus according to the present embodiment.

In step S151, in response to reception (acquisition) of the detection signal by the detector communication unit 12, the information processing apparatus 10 proceeds to step S152. The information processing apparatus 10 repeats the process of step S151 until the detector communication unit 12 receives (acquires) the detection signal.

In step S152, the amplification processing unit 171 of the signal processing unit 17 amplifies the detection signal received (acquired) by the detector communication unit 12 to a desired size. In step S153, the A/D conversion unit 172 of the signal processing unit 17 converts the analog signal amplified by the amplification processing unit 171 into a digital signal.

In step S154, the feature value extraction unit 173 of the signal processing unit 17 extracts the feature value (feature information) indicating the feature of the digital signal converted by the A/D conversion unit 172 (an example of extracting a feature value). In the present embodiment, the feature value extraction unit 173 extracts a frequency spectrum included in the digital signal converted by the A/D conversion unit 172.

In step S155, the score calculation unit 175 of the signal processing unit 17 calculates a score indicating the likelihood of abnormality of the road surface R from the feature value (for example, frequency spectrum) of the detection signal extracted by the feature value extraction unit 173.

Specifically, the score calculation unit 175 calculates a likelihood that the feature information of the detection result is normal, using model information of the feature information. The model information indicates normal data stored in the model information management DB 1005 of the storage area 1000. Then, the score calculation unit 175 calculates the reciprocal of the likelihood as the score.

The score calculation unit 175 may calculate the score by ranking the scores stepwise or may calculate the score as binary values of 0 and 1. In addition, the score calculation unit 175 may accumulate the calculated scores.

Alternatively, the score calculation unit 175 may calculate, as the score, a likelihood that the feature information of the detection result is abnormal, using model information that indicates abnormal data of the feature information. The model information is stored in the model information management DB 1005.

A description is given of frequency components of the detection signal detected while the vehicle 70 travels. The frequency components correspond to those extracted in step S154 of FIG. 9.

FIG. 10A is a diagram illustrating a spectrogram of a detection signal detected when the vehicle 70 travels on a normal road surface R. FIG. 10B is a diagram illustrating a spectrogram of a detection signal detected when the vehicle 70 travels on a road surface R having an abnormality. As illustrated in FIG. 10B, when an abnormality occurs on the road surface R, a frequency component around 30,000 Hz appears.

Then, in the score calculation in step S155 of FIG. 9, for example, in the case where the spectrogram illustrated in FIG. 10B is model information indicating abnormal data, the score calculation unit 175 calculates the likelihood of abnormality of the spectrogram of the detection signal as the score. The score calculation unit 175 calculates the likelihood based on the amount of the frequency component around 30,000 Hz in the spectrogram of the detection signal extracted by the feature value extraction unit 173.

### Detection Signal Management Table

FIG. 11 is a diagram illustrating an example of the detection signal management table according to the present embodiment. As described in step S17 of FIG. 7, the storage area 1000 includes the detection signal management DB 1003 in the form of the detection signal management table as illustrated in FIG. 11.

The detection signal management table illustrated in FIG. 11 is for managing the detection signal transmitted from the detector 30 in association with the processing information transmitted from the controller 70A of the vehicle 70. In the detection signal management table, for each condition ID, the travel time data transmitted from the controller 70A, the detection signal, the frequency data extracted by the feature value extraction unit 173, the score data calculated by the score calculation unit 175, and the processing information data per travel time transmitted from the controller 70A are stored in association with each other. The condition ID is identification information for identifying the condition information stored in the condition information management table illustrated in FIG. 8. As a result, for each condition ID, the signal data (detection signal) is stored in association with the related data (the processed signal data such as the frequency data and the score data, the travel time data, and the processing information data per travel time). In the detection signal management table, travel distance data and processing information data per travel distance may be stored instead of the travel time data and the processing information data per travel distance.

FIG. 12 is a flowchart illustrating an example of processing of the image data performed by the information processing apparatus according to the present embodiment.

The information processing apparatus 10 includes the imaging device 40 that captures an image of the road surface R. In determination of the abnormality of the road surface R based on image data, there is an inconvenience in efficiency.

Specifically, in order to determine an abnormality based on image data, a huge amount of image data including normal images are stored, and time for image processing for determining an abnormality is long.

By contrast, when the frequency of image capture by the imaging device 40 is reduced for improving the efficiency of the abnormality determination based on the image data, there is a concern that the imaging device 40 may fail to capture an image indicating an abnormal state which matters, and the accuracy of the abnormality determination decreases.

In view of the foregoing, an object of the present embodiment is to provide the information processing apparatus 10 capable of efficiently and accurately determining an abnormality of the road surface R.

The imaging device control unit 41 of the information processing apparatus 10 determines whether or not the score calculated by the score calculation unit 175 is equal to or greater than a threshold (step S21).

When the score is determined as being equal to or greater than the threshold in step S21, the imaging device control unit 41 transmits a capture start signal for starting image capture to the imaging device 40 (step S22, an example of image capture control). That is, the imaging device control unit 41 controls the imaging device 40 based on the score calculated based on the detection signal. By contrast, when the score is determined as being smaller than the threshold in step S21, the imaging device control unit 41 ends the process.

Alternatively, the information processing apparatus 10 may control the imaging device 40 to start image capture at a timing irrespective of the score calculated by the score calculation unit 175, and the imaging device control unit 41 may delay the timing of transmitting a capture end signal for ending image capture to the imaging device 40 when the score calculated by the score calculation unit 175 is equal to or greater than the threshold.

Subsequent to step S22, the imaging device control unit 41 acquires, from the imaging device 40, image data of a moving or still image captured by the imaging device 40 (step S23, an example of acquiring image data).

The storing and reading unit 19 of the information processing apparatus 10 stores the image data of the moving or still image acquired by the imaging device control unit 41 in the detection signal management DB 1003 in association with the processing information transmitted from the controller 70A of the vehicle 70 (step S24).

The information processing apparatus 10 stores, for each condition ID generated in step S12 illustrated in FIG. 7, the image data of the moving or still image in the image data management table in association with the travel time included in the processing information received in step S11. The information processing apparatus 10 may store travel distance data instead of travel time data.

The score calculation unit 175 of the signal processing unit 17 of the information processing apparatus 10 calculates a second score, which is an example of second likelihood information indicating the likelihood of abnormality of the road surface R, from the image data of the moving or still image acquired by the imaging device control unit 41 (step S25).

Specifically, the score calculation unit 175 calculates a likelihood that the image data is normal, using model information indicating normal data stored in the model information management DB 1005 of the storage area 1000. Then, the score calculation unit 175 calculates the reciprocal of the likelihood as the second score.

The score calculation unit 175 may calculate the second score by ranking the scores stepwise or may calculate the second score as binary values of 0 and 1.

Alternatively, the score calculation unit 175 may calculate, as the second score, a likelihood that the image data is abnormal, using model information indicating abnormal data stored in the model information management DB 1005.

The determination unit 21 of the information processing apparatus 10 determines whether the second score calculated by the score calculation unit 175 is equal to or greater than a threshold (step S26). When determining that the second score is equal to or greater than the threshold, the determination unit 21 determines that the road surface R is abnormal (step S27). In other words, the determination unit 21 determines the abnormality of the road surface R based on the score and the second score indicating the likelihood of abnormality of the road surface R determined based on the image data.

When determining that the road surface R is abnormal, the information processing apparatus 10 outputs, for example, a visual alarm or a sound alarm using the display 106a or the speaker 109a.

As described above, the information processing apparatus 10 includes the imaging device control unit 41 that acquires the image data of the road surface R captured by the imaging device 40. The imaging device control unit 41 controls the imaging device 40 according to detection signals.

Since the information processing apparatus 10 determines the timing to acquire the image data of the road surface R based on the detection signal, the image data of the road surface R can be efficiently acquired.

The imaging device control unit 41 controls the imaging device 40 based on the score indicating the likelihood of abnormality of the road surface R determined based on the detection signal.

With this configuration, the information processing apparatus 10 can efficiently acquire the image data of the road surface R when there is a high likelihood that the road surface R has abnormality based on the score.

The information processing apparatus 10 includes the determination unit 21 that determines an abnormality of the road surface R based on the score and the image data. Specifically, the determination unit 21 determines the abnormality of the road surface R based on the score and the second score indicating the likelihood of abnormality of the road surface R determined based on the image data.

As described above, the information processing apparatus 10 can efficiently and accurately determine the abnormality of the road surface R.

FIG. 13 is a schematic diagram illustrating an example of the image data management table according to the present embodiment.

In the storage area 1000, the image data management DB 1007 described with reference to FIG. 5 is formed with the image data management table illustrated in FIG. 13.

The image data management table illustrated in FIG. 13 is for managing the image data of the moving or still image acquired by the imaging device control unit 41.

In the image data management table, for each condition ID, the travel time data and the image data of the moving or still image transmitted from the controller 70A of the vehicle 70 are stored in association with each other. The condition ID is identification information for identifying the condition information stored in the condition information management table illustrated in FIG. 8. The image data management table may store travel distance data instead of travel time data.

The detection signal management table illustrated in FIG. 11 stores, for each condition ID, the signal data (detection signal) and the related data (the processed signal data such as the frequency data and the score data, the travel time data, and the processing information data per travel time) in association with each other. The condition ID in the detection signal management table is identical to the condition ID in the image data management table.

Thus, the information processing apparatus 10 includes both the detection signal management table illustrated in FIG. 11 and the image data management table illustrated in FIG. 13, and stores, for each condition ID, the image data of the moving or still image, the signal data (detection signal), and the related data (the processed signal data such as the frequency data and the score data, the travel time data, and the processing information data per travel time) in association with each other.

### Display of Signal Data and Storing of Model Information

FIG. 14 is a flowchart illustrating an example of operation for displaying scores and storing the model information performed by the information processing apparatus according to the present embodiment.

In step S31, the display control unit 14 of the information processing apparatus 10 displays the output signal selection window 200 (see FIG. 15) on the display 106a. Specifically, the display control unit 14 displays the output signal selection window 200 in response to a reception, by the reception unit 13, of an input to a predetermined input window displayed on the display 106a.

In step S32, when the user inputs an item to be output, the reception unit 13 receives a signal selection request including data indicating the output item thus input.

In step S33, based on the output item data received by the reception unit 13, the information processing apparatus 10 performs displaying a score and selecting a signal to be stored as model information (an example of selecting).

In step S34, the storing and reading unit 19 stores the selected signal data as model information in the model information management DB 1005.

FIG. 15 illustrates an example of the output signal selection window displayed by the information processing apparatus according to the present embodiment.

FIG. 15 is a diagram illustrating an example of the output signal selection window displayed on the information processing apparatus, corresponding to step S31 and step S32 in the flowchart illustrated in FIG. 14. The output signal selection window 200 illustrated in FIG. 15 is a display screen for allowing the user to select a score to be displayed and signal data to be stored as model information. The output signal selection window 200 includes an output item selection area 210 for specifying a score to be displayed and a detection signal to be stored as model information, a "VIEW" button 225 for displaying the score, and a "CANCEL" button 203 to be pressed to stop the process.

In the output item selection area 210, data of various items included in the processing information can be selected. The output item selection area 210 includes, for example, a road selection field 211 in which a road can be selected, a pavement material selection field 212 in which a pavement material can be selected, and a tire selection field 213 in which the tire 50 can be selected. In the example of FIG. 15, the reception unit 13 receives, as the output item data, a road "R101," a pavement material "asphalt," and a tire "A." The items respectively corresponding to the selection fields included in the output item selection area 210 are not limited to the above-described examples and may be appropriately added or changed according to the items in the processing information.

Then, in response to pressing of the "VIEW" button 225 illustrated in FIG. 15, processing for displaying the signal data corresponding to the selected items in the output item selection area 210.

The above-description with reference to FIGS. 14 and 15 concerns an example in which the information processing apparatus 10 displays the output signal selection window 200 so that the user selects the detection signal to be output. Alternatively, the controller 70A of the vehicle 70 may display the output signal selection window 200 so that the user selects the detection signal to be output.

FIG. 16 is a flowchart illustrating an example of displaying and selecting performed by the information processing apparatus according to one embodiment. FIG. 16 is a flowchart illustrating an example of displaying and selecting corresponding to step S33 of the flowchart illustrated in FIG. 14.

In step S331, the selection unit 18 selects processing information corresponding to the output item data received in step S32 illustrated in FIG. 14 from multiple processing information stored in the condition information management table illustrated in FIG. 8. Specifically, the storing and reading unit 19 reads the condition information management table from the condition information management DB 1001. Then, the selection unit 18 selects, from multiple condition information included in the condition information management table, the condition information that includes the processing information associated with the output item data received by the reception unit 13. In this case, for example, the selection unit 18 selects the condition information having the condition ID "A000001" which includes the processing information corresponding to the output item data input to the output item selection area 210 illustrated in FIG. 15.

In step S332, the selection unit 18 selects, from the data stored in the detection signal management table (see FIG. 11), the signal data and related data associated with the condition ID associated with the processing information selected by the selection unit 18 in step S331. Specifically, the storing and reading unit 19 reads the detection signal management table from the detection signal management DB 1003. Then, the selection unit 18 selects, from the data included in the read detection signal management table, the signal data and the related data associated with the condition ID included in the selected condition information. In this case, the selection unit 18 selects, for example, the signal data and the related data associated with the condition ID "A000001."

In step S333, the selection unit 18 selects, from the data stored in the image data management table (see FIG. 13), the image data associated with the condition ID associated with the processing information selected in step S331. Specifically, the storing and reading unit 19 reads the image data management table from the image data management DB 1007. Then, the selection unit 18 selects, from the data included in the image data management table, the image data associated with the condition ID included in the selected condition information. In this case, the selection unit 18 selects the image data associated with the condition ID "A000001," for example.

In step S334, the display control unit 14 of the information processing apparatus 10 displays an information display and selection window 250 on the display 106a. Then, the display control unit 14 displays, on the information display and selection window 250, the signal data and the related data selected in step S332 and the image data selected in step S333 in association with each other via the condition ID.

In step S335, when the user selects a section on the information display and selection window 250, the reception unit 13 receives the selection of the section (an example of receiving).

In step S336, the selection unit 18 selects the signal data and the related data related to the section selected in step S335 from the signal data and the related data selected in step S332.

FIG. 17 illustrates an example of the information display and selection window displayed on the information processing apparatus according to the present embodiment. FIG. 18 is a diagram illustrating an example of image data displayed on the information display and selection window according to the present embodiment.

FIG. 17 is a diagram illustrating an example of the information display and selection window displayed on the information processing apparatus, corresponding to step S334 and step S335 of the flowchart illustrated in FIG. 16. The information display and selection window 250 illustrated in FIG. 17 is a display window for displaying the score of the detection signal related to the signal data selected by the selection unit 18 and selecting a specific section of the detection signal.

The user can check the likelihood of abnormality of the road surface R by checking the score displayed on the information display and selection window 250. However, the user needs to visually check the road surface R in order to actually determine the abnormality, and there is a challenge in accuracy of abnormality determination.

In order to visually check the road surface R, image data of the vehicle 70 is displayed on the information display and selection window 250. However, it is difficult to visually check image data indicating an abnormality from among a large amount of image data. It is conceivable that the information processing apparatus 10 processes the image data for determining the abnormality. However, in a case where a huge amount of image data is stored for abnormality determination, time for image processing for determining an abnormality is long. There is an inconvenience in efficiency.

In view of the foregoing, an object of the present embodiment is to provide the information processing apparatus 10 that efficiently and accurately determines an abnormality of the road surface R.

The information display and selection window 250 presents the travel time data related to the related data selected by the selection unit 18 in time series so as to be checked by the user.

The information display and selection window 250 further continuously presents, in association with the travel time data, multiple frequency spectra as examples of the feature values related to the related data selected by the selection unit 18, multiple score data, and multiple user operation history data as an example of processing information data per travel time so as to be checked by the user. In addition, image data A is displayed such that the user can check the image data A in association with a local maximum score.

Specifically, the display control unit 14 displays, on the information display and selection window 250 on the display 106a, multiple travel times, multiple frequency spectra, multiple operation history information, and multiple scores. Further, on the information display and selection window 250, the display control unit 14 displays, in association with each of the multiple travel time data, corresponding one of the multiple frequency spectra, corresponding one of the multiple operation history information, corresponding one of the multiple scores, and the image data (an example of displaying). In the example of FIG. 17, the display control unit 14 displays a line graph by connecting the multiple scores and displays image data at the position corresponding to the horizontal axis direction of the line graph representing the multiple scores.

In addition, the display control unit 14 displays the image data in association with the local maximum score of the multiple scores on the information display and selection window 250. The local maximum score is equal to or greater than the threshold described in step S21 of FIG. 12.

Further, the information display and selection window 250 includes an input area 222 for inputting a travel time section as a specific section, an "OK" button 251 to be pressed to select the section, and a "CANCEL" button 253 to be pressed to cancel the selection of the section.

As illustrated in FIG. 17, among the scores associated with travel time from 1001 to 1250, the score increases after travel time 1230, and the score in the vicinity of travel time 1250 is the highest.

On the information display and selection window 250, the image data A of the road surface R is displayed in association with the score. The user can check the image data A of the road surface R corresponding to the local maximum score near travel time 1250.

In the case of the example of FIG. 17, since the image data of the road surface R indicates more cracks than usual, the user determines that the cracks are causes of the high score.

In other words, by checking the score and the image data associated with the score, the abnormality of the road surface R can be accurately determined.

Alternatively, in addition to displaying the image data in association with the local maximum score, the image data may be displayed in association with multiple scores equal to or greater than the threshold described in step S21 of FIG. 12. When the multiple image data are simultaneously displayed, the screen becomes cluttered. It is preferable to display only the image data associated with the score selected by, for example, a mouse from the multiple image data respectively associated with the multiple scores. Further, when there is a significant change in the scores, the image data may be displayed in association with the score before the change, the score after the change, or both of before and after the change.

A description is given of an example of selecting normal data from the data of travel time from 1001 to 1250 with reference to FIG. 17. Viewing the scores as an example of the score data, it can be seen that the value is low in travel time from 1001 to 1230. This section can be selected as normal data when "a portion having a small score is normal" or "an early cycle (for example, 1001 to 1105) is normal" is automatically set on the system.

However, the frequency data of a travel time section from 1001 to 1105 indicates noise in a low frequency band. By contrast, the frequency data of a travel time section from 1105 to 1230 is free of the low frequency band noise that is present in the travel time section from 1001 to 1105.

Therefore, the user can appropriately determine that the data of a section from 1105 to 1230, which is a part of the travel time from 1001 to 1230, are more suitable as normal data than the data in the travel time section from 1001 to 1105.

Furthermore, from the user operation history of sections of the travel time section from 1001 to 1230, it can be seen that driving in the special mode, for example, frequent speed change, is repeated. It can be seen that the above-described low-frequency noise is generated in the section of the driving in the special mode. From this, the user can determine that the section of the driving in the special mode is not suitable for selection of normal data. Therefore, the user can more appropriately determine that the travel time section from 1105 to 1207 during which the driving in the special mode is not performed is appropriate as normal data.

When the user inputs "1105 to 1207" in the input area 222 and presses the "OK" button 251, the reception unit 13 receives the selection of "travel time 1105 to 1207." Accordingly, the detection signal or the frequency spectrum corresponding to travel time from 1105 to 1207 which is a part of travel time from 1001 to 1230 can be appropriately set as normal data.

In addition, the information "travel time from 1105 to 1207" received by the reception unit 13 is displayed in the input area 222. This configuration allows the user to reliably set the detection signal or the frequency spectrum corresponding to "travel time from 1105 to 1207" as normal data while checking the information displayed in the input area 222.

In the above description, when "1105 to 1207" is input to the input area 222 and the "OK" button 251 is pressed, the reception unit 13 receives the selection of "travel time from 1105 to 1207." Alternatively, the reception unit 13 may receive the selection of "travel time from 1105 to 1207" in response to selection of a portion of the displayed frequency data, scores, and user operation history corresponding to travel time from 1105 to 1207 with, for example, the mouse and pressing of the "OK" button 251.

As described above, the information processing apparatus 10 includes the display control unit 14 that displays, on the information display and selection window 250 on the display 106a, the score indicating the likelihood of abnormality of the road surface R, determined based on the detection signal, and the image data in association with each other.

This configuration allows the user to check the image data in association with the score, so as to accurately determine the abnormality of the road surface R compared with a case where only the score is presented. In addition, the user can efficiently determine the abnormality of the road surface R compared with a case where only the image data is checked. In other words, the information processing apparatus 10 according to the present embodiment enables the user to efficiently and accurately determine the abnormality of the road surface R.

The display control unit 14 displays multiple frequency spectra of the detection signal on the information display and selection window 250 and displays each of the multiple frequency spectra in association with corresponding one of the multiple travel time sections on the information display and selection window 250.

With this configuration, the user can check each of the multiple travel times, each of the multiple frequency spectra, and the image data in association with each of the multiple scores so as to efficiently and accurately determine the abnormality of the road surface R for each of the multiple scores.

The display control unit 14 displays multiple operation history information in association with multiple travel time sections, respectively, on the information display and selection window 250.

Accordingly, the user can check the multiple travel times, the multiple operation history information, and the image data in association with the multiple scores, respectively, so as to efficiently and accurately determine the abnormality of the road surface R for each of the multiple scores.

The information processing apparatus 10 includes the reception unit 13 that receives an input of a portion of multiple travel times.

With this configuration, the user can check the score and the image data associated with the score on the display 106a and then input a portion of the multiple travel times. Accordingly, the multiple frequency spectra respectively corresponding to the portion of the multiple travel times can be appropriately set as normal data or abnormal data.

The information processing apparatus 10 displays, with the display control unit 14, the portion of the multiple travel times received by the reception unit 13 on the information display and selection window 250. Accordingly, since the user can check the input portion of the multiple travel times, each of the multiple frequency spectra respectively corresponding to the input portion of the multiple travel times can be reliably set as normal data or abnormal data.

As described above, the information processing apparatus 10 includes the display control unit 14 that controls the display 106a to display the image data on the information display and selection window 250 and, as described above with reference to FIG. 12, further includes the imaging device control unit 41 that acquires the image data of the road surface R captured by the imaging device 40. The imaging device control unit 41 controls the imaging device 40 according to detection signals.

Since the information processing apparatus 10 determines the timing to acquire the image data of the road surface R based on the detection signal, the image data of the road surface R can be efficiently acquired. Further, the user can check the image data on the information display and selection window 250 so as to accurately determine the abnormality of the road surface R. In other words, the information processing apparatus 10 according to the present embodiment enables the user to efficiently and accurately determine the abnormality of the road surface R.

The imaging device control unit 41 controls the imaging device 40 based on the score indicating the likelihood of abnormality of the road surface R determined based on the detection signal.

With this configuration, the information processing apparatus 10 can efficiently acquire the image data of the road surface R when there is a high likelihood that the road surface R has abnormality based on the score.

The display control unit 14 displays the score on the information display and selection window 250. Accordingly, the user can check the score and the image data on the information display and selection window 250 so as to accurately determine the abnormality of the road surface R.

The display control unit 14 displays the image data in association with the score on the information display and selection window 250. Accordingly, the user can check the score in association with the image data on the information display and selection window 250 so as to accurately determine the abnormality of the road surface R.

FIG. 19 is a diagram illustrating an example of the model information management table according to the present embodiment. As described in step S34 of FIG. 14, the storage area 1000 includes the model information management DB 1005 formed by the model information management table illustrated in FIG. 19.

In the model information management table, the storing and reading unit 19 stores, for each relation ID, the travel time data, the detection signal data, the frequency data, and the score data in association with each other.

For each of the portion of the multiple travel times received by the reception unit 13, the storing and reading unit 19 stores and updates the detection signal and the frequency data associated with the travel time.

In the example of FIG. 19, as the model information of the relation ID "R001," for each of travel time data 1105 to 1207 received by the reception unit 13 and described with reference to FIG. 17, the detection signal, the frequency data, and the score data corresponding the travel time data are stored in association with each other. As a result, the detection signal, the frequency data, and the score data corresponding to travel time from 1105 to 1207 which is a part of travel time from 1001 to 1230 can be appropriately stored as the normal data.

Note that, in the model information management table, for each relation ID, the detection signal data, the frequency data, and the score data may be stored in association with each other as a record without the travel time data, and multiple records may be stored in time series. Yet alternatively, not storing the frequency data and the score data in the model information management table, steps S154 and S155 in FIG. 9 may be again performed to extract the frequency data based on the detection signal stored in the model information management table and calculate the score data.

As described above, the information processing apparatus 10 includes the storing and reading unit 19 that stores, in the storage area 1000, multiple frequency spectra respectively associated with, the portion of the multiple travel times received by the reception unit 13.

With this configuration, each of the multiple frequency spectra respectively corresponding to the portion of multiple travel times can be appropriately stored as normal data or abnormal data.

As described with reference to FIG. 9, the information processing apparatus 10 includes the score calculation unit 175 that determines the score based on the multiple frequency spectra stored in the storage area 1000 and the frequency spectrum indicating the feature of the detection signal acquired by the detector communication unit 12.

As described with reference to FIG. 19, since the multiple frequency spectra stored in the storage area 1000 are updated, the information processing apparatus 10 can accurately determine the score indicating the likelihood of abnormality of the road surface R.

FIG. 20 is a diagram illustrating an example of an information display and selection window displayed on an information processing apparatus according to a first modification of the present embodiment. FIGS. 21A to 21D are diagrams illustrating examples of image data displayed on the display and selection window according to the first modification of the present embodiment.

Similar to FIG. 17, the information display and selection window 250 continuously presents multiple frequency spectra, multiple score data, and multiple user operation history data respectively associated with the travel time data so as to be checked by the user. In addition, image data is displayed such that the user can check the image data in association with a local maximum score. In the example of FIG. 20, there are two local maximum scores, and image data A and B are displayed in association with the two local maximum scores, respectively. The image data A and B respectively include image data A1 and B1 of the road surface R in the traveling direction of the vehicle 70, captured by the first imaging device 40A, and image data A2 and B2 of the road surface R behind the vehicle 70, captured by the second imaging device 40B from the direction perpendicular to the road surface R.

In other words, the display control unit 14 displays multiple scores and multiple image data on the information display and selection window 250 on the display 106a and displays each of the multiple image data in association with corresponding score of the multiple scores on the information display and selection window 250.

FIG. 20 illustrates an example of selecting abnormal data from the data of travel time from 801 to 900. Viewing the scores as an example of the score data, it can be seen that the values are high near travel time 840 and after travel time 865. When "a portion having a high score is normal" is automatically set on the system, these two sections can be selected as abnormal data.

However, the frequency data immediately before travel time 840 indicates that the data is temporarily interrupted. Further, it can be seen that the frequency data has a value similar to the usual value in the vicinity of travel time 840. That is, the score that indicates a change in the frequency data has increased due to the interruption of the frequency data, and the likelihood that the abnormality of the road surface R has occurred is conceivably low.

By contrast, the frequency data after travel time 865 indicates an abnormal vibration in a low frequency band, and there is a high likelihood that some abnormality has occurred on the road surface R. Accordingly, the user can appropriately determine that the data of travel time from 865 to 900 which is a part of travel time counts 801 to 900 are more appropriate as abnormal data than the data near travel time 840.

Furthermore, the user operation history immediately before travel time 840 indicates that the power has been switched to on from off. Conceivably, the score immediately after the switching of power is high due to the influence of the warm-up operation. By contrast, after travel time 865, although there is no trace of the user's particular operation, the frequency data indicates an abnormal vibration in a low frequency band. There is a high likelihood that some abnormality has occurred on the road surface R. Accordingly, the user can more appropriately determine that the data of travel time from 865 to 900 which is a part of travel time from 801 to 900 are more appropriate as abnormal data than the data near travel time 840.

Then, the user can compare the state of the road surface R indicated in the image data corresponding to the local maximum score in the vicinity of travel time 840 with the state of the road surface R indicated in the image data corresponding to the local maximum score after travel time 865, thereby confirming, from the image data, that the data of travel time from 865 to 900, which is a part of travel time from 801 to 900, are more appropriate as abnormal data.

In other words, by checking the score and the image data associated with the score, the user can accurately determine the abnormality of the road surface R.

Although FIG. 20 illustrates an example in which the travel time is used, the same applies to a case in which the travel distance is used instead of the travel time.

As described above, the display control unit 14 displays multiple scores and multiple image data on the information display and selection window 250 and displays each of the multiple image data in association with corresponding score of the multiple scores on the information display and selection window 250.

Accordingly, the user can check each of the multiple image data in association with corresponding one of the multiple scores so as to accurately determine the abnormality of the road surface R for each of the multiple scores.

The display control unit 14 displays multiple travel time (data) on the information display and selection window 250 and displays each of the multiple scores and each of the multiple image data in association with corresponding travel time of the multiple travel time (data) on the information display and selection window 250.

Accordingly, the user can check each of the multiple travel time (data) and each of the multiple image data in association with corresponding one of the multiple scores so as to accurately determine the abnormality of the road surface R for each of the multiple scores.

FIG. 22 is a diagram illustrating an example of an information display and selection window displayed on an information processing apparatus according to a second modification of the present embodiment.

The information display and selection window 250 continuously presents multiple score data in association with the travel time data so as to be checked by the user. Similar to FIG. 20, the image data A and B are displayed in association with two local maximum scores, respectively. The image data A and B respectively include image data A1 and B1 of the road surface R in the traveling direction of the vehicle 70, captured by the first imaging device 40A, and image data A2 and B2 of the road surface R behind the vehicle 70, captured by the second imaging device 40B from the direction perpendicular to the road surface R.

FIG. 22 illustrates an example of selecting multiple abnormal data from the data of travel time from 801 to 900.
Viewing the score as an example of the score data, it can be seen that there are two portions having high scores between travel time 801 and travel time 900. When "a portion having a high score is normal" is automatically set on the system, these two sections can be selected as abnormal data.

However, in some cases, it can be determined that there are completely different tendencies by comparing the two image data corresponding to the scores of the two portions. When the different abnormal data of the two portions are referred to as abnormal data 1 and abnormal data 2, respectively, the user can determine the two different abnormal data as different pieces of abnormal data.

Although FIG. 22 illustrates an example in which the travel time is used, the same applies to a case in which the travel distance is used instead of the travel time.

FIG. 23 is a diagram illustrating a railway vehicle according to a third modification of a third modification.

A railway vehicle 70R is a modified example of the vehicle 70 illustrated in FIG. 2. The railway vehicle 70R includes the controller 70A, a wheel 50w, the detector 30, and the imaging device 40 disposed to capture an image of a railway track r.

The railway vehicle 70R is an example of a mobile body that moves while being in contact with the railway track r, which is an example of a subject. The wheel 50w is an example of a movable body that moves while being in contact with the railway track r. The detector 30 detects a physical quantity that changes as the wheel 50w of the railway vehicle 70R moves while being in contact with the railway track r. The imaging device 40 is an example of an imaging device that captures a moving image or a still image of the railway track r.

FIG. 24 is a diagram illustrating an example of a condition information management table according to the third modification.

In the storage area 1000 illustrated in FIG. 5, the condition information management DB 1001 described in step S13 of FIG. 7 is formed by the condition information management table as illustrated in FIG. 24.

The condition information management table illustrated in FIG. 24 is for managing, for each operation performed by the railway vehicle 70R, processing information relating to the operation of the railway vehicle 70R. The condition information management table stores, for each condition ID, the condition information in which processing information is associated with each other. The condition ID is identification information for identifying the condition information including the processing information. The processing information is information determined for each type of operation of the railway vehicle 70R. As illustrated in FIG. 24, the processing information includes information such as the track name on which the railway vehicle 70R travels, the type such as material of the railway track r on which the railway vehicle 70R travels, and the type of the wheel 50w such as the material of the railway vehicle 70R. The type such as the material of the railway track r is an example of the type of the subject, and the type such as the material of the wheel 50w is an example of the type of the movable body.

The items of the processing information may further include information indicating user operation history with respect to the railway vehicle 70R, travel start date and time, travel time (an example of travel time of the railway vehicle 70R), and a travel speed of the railway vehicle 70R. The processing information may further include a travel distance (an example of movement distance of the railway vehicle 70R). Alternatively, the processing information may include the travel distance instead of the travel time. The travel information including the travel time or the travel distance is an example of movement information.

The condition information management table further stores relation IDs for identifying related operations (processes) among the operations by the railway vehicle 70R in association with each other. An identical relation ID is assigned to processing information indicating related operations in the condition information management table. In the example of FIG. 24, the same relation ID "A00003" is assigned to the processing information identified by the condition identifiers "A000001" and "R001." The related operations assigned with the relation ID are, for example, operations in which the railway track type and the wheel type are the same and the track names are different.

FIG. 25 is a diagram illustrating an example of a display and selection window displayed on the information processing apparatus according to the third modification.

FIG. 25 is a diagram illustrating an example of the information display and selection window displayed on the information processing apparatus, corresponding to step S334 and step S335 of the flowchart illustrated in FIG. 16. The information display and selection window 250 illustrated in FIG. 25 is a display window for displaying the score of the detection signal related to the signal data selected by the selection unit 18 and selecting a specific section of the detection signal.

The information display and selection window 250 presents the travel time data related to the related data selected by the selection unit 18 in time series so as to be checked by the user.

The information display and selection window 250 further continuously presents, in association with the travel time data, multiple frequency spectra as examples of the feature values related to the related data selected by the selection unit 18, multiple score data, and multiple user operation history data as an example of processing information data per travel time so as to be checked by the user. In addition, image data A of the railway track r is displayed such that the user can check the image data A in association with a local maximum score.

Specifically, the display control unit 14 displays, on the information display and selection window 250 on the display 106a, multiple travel times, multiple frequency spectra, multiple operation history information, and multiple scores. Further, on the information display and selection window 250, the display control unit 14 displays, in association with each of the multiple travel time data, corresponding one of the multiple frequency spectra, corresponding one of the multiple operation history information, corresponding one of the multiple scores, and the image data (an example of displaying).

In addition, the display control unit 14 displays the image data in association with the local maximum score of the multiple scores on the information display and selection window 250. The local maximum score is equal to or greater than the threshold described in step S21 of FIG. 12.

Further, the information display and selection window 250 includes an input area 222 for inputting a travel time section as a specific section, an "OK" button 251 to be pressed to select the section, and a "CANCEL" button 253 to be pressed to cancel the selection of the section.

As described above, the information processing apparatus 10 includes the display control unit 14 that displays, on the information display and selection window 250 on the display 106a, the score indicating the likelihood of abnormality of the railway track r, determined based on the detection signal, and the image data in association with each other.

This configuration allows the user to check the image data in association with the score, so as to accurately determine the abnormality of the railway track r compared with a case where only the score is presented. In addition, the user can efficiently determine the abnormality of the railway track r compared with a case where only the image data is checked. In other words, the information processing apparatus 10 according to the present embodiment enables the user to efficiently and accurately determine the abnormality of the railway track r.

FIG. 26 is a diagram illustrating a railway vehicle according to a fourth modification of the present embodiment.

The railway vehicle 70R illustrated in FIG. 26 is a modified example of the vehicle 70 illustrated in FIG. 23 and includes the controller 70A, a pantograph 50P, the detector 30, and the imaging device 40 disposed to capture an image of an overhead line W.

The railway vehicle 70R is an example of a mobile body that moves while being in contact with the overhead line W, which is an example of a subject. The pantograph 50P is an example of a movable body that moves while being in contact with the overhead line W. The detector 30 detects a physical quantity that changes as the pantograph 50P of the railway vehicle 70R moves while being in contact with the overhead line W. The imaging device 40 is an example of an imaging device that captures a moving image or a still image of the overhead line W.

FIG. 27 is a diagram illustrating an example of a condition information management table according to the fourth modification.

The storage area 1000 illustrated in FIG. 5 includes the condition information management DB 1001 described in step S13 of FIG. 7, for example, in the form of the condition information management table as illustrated in FIG. 27.

The condition information management table illustrated in FIG. 27 is for managing, for each operation performed by the railway vehicle 70R, processing information relating to the operation of the railway vehicle 70R. The condition information management table stores, for each condition ID, the condition information in which processing information is associated with each other. The condition ID is identification information for identifying the condition information including the processing information. The processing information is information determined for each type of operation of the railway vehicle 70R. As illustrated in FIG. 24, the processing information includes information such as the track name on which the railway vehicle 70R travels, the type such as material of the overhead line W, and the type of the pantograph 50P of the railway vehicle 70R. The type such as the material of the overhead line W is an example of the type of the subject, and the type such as the material of the pantograph 50P is an example of the type of the movable body.

The items of the processing information may further include information indicating user operation history with respect to the railway vehicle 70R, travel start date and time, travel time (an example of travel time of the railway vehicle 70R), and a travel speed of the railway vehicle 70R. The processing information may further include a travel distance (an example of movement distance of the railway vehicle 70R). Alternatively, the processing information may include the travel distance instead of the travel time. The travel information including the travel time or the travel distance is an example of movement information.

The condition information management table further stores relation IDs for identifying related operations (processes) among the operations by the railway vehicle 70R in association with each other. An identical relation ID is assigned to processing information indicating related operations in the condition information management table. In the example of FIG. 27, the same relation ID "A00003" is assigned to the processing information identified by the condition identifiers "A000001" and "R001." The related operations assigned with the relation ID are, for example, operations in which the overhead line type and the pantograph type are the same and the track names are different.

FIG. 28 is a diagram illustrating an example of a display and selection window displayed on the information processing apparatus according to the fourth modification.

FIG. 28 is a diagram illustrating an example of the information display and selection window displayed on the information processing apparatus, corresponding to step S334 and step S335 of the flowchart illustrated in FIG. 16. The information display and selection window 250 illustrated in FIG. 28 is a display screen for displaying the score of the detection signal related to the signal data selected by the selection unit 18 and selecting a specific section of the detection signal.

The information display and selection window 250 presents the travel time data related to the related data selected by the selection unit 18 in time series so as to be checked by the user.

The information display and selection window 250 further continuously presents, in association with the travel time data, multiple frequency spectra as examples of the feature values related to the related data selected by the selection unit 18, multiple score data, and multiple user operation history data as an example of processing information data per travel time so as to be checked by the user. In addition, image data A of the overhead line W is displayed such that the user can check the image data A in association with a local maximum score.

Specifically, the display control unit 14 displays, on the information display and selection window 250 on the display 106a, multiple travel times, multiple frequency spectra, multiple operation history information, and multiple scores. Further, on the information display and selection window 250, the display control unit 14 displays, in association with each of the multiple travel time data, corresponding one of the multiple frequency spectra, corresponding one of the multiple operation history information, corresponding one of the multiple scores, and the image data (an example of displaying).

In addition, the display control unit 14 displays the image data in association with the local maximum score of the multiple scores on the information display and selection window 250. The local maximum score is equal to or greater than the threshold described in step S21 of FIG. 12.

Further, the information display and selection window 250 includes an input area 222 for inputting a travel time section as a specific section, an "OK" button 251 to be pressed to select the section, and a "CANCEL" button 253 to be pressed to cancel the selection of the section.

As described above, the information processing apparatus 10 includes the display control unit 14 that displays, on the information display and selection window 250 on the display 106a, the score indicating the likelihood of abnormality of the overhead line W, determined based on the detection signal, and the image data of the overhead line W in association with each other.

This configuration allows the user to check the image data in association with the score, so as to accurately determine the abnormality of the overhead line W compared with a case where only the score is presented. In addition, the user can efficiently determine the abnormality of the overhead line W compared with a case where only the image data is checked. In other words, the information processing apparatus 10 according to the present embodiment enables the user to efficiently and accurately determine the abnormality of the overhead line W.

### Summary

As described above, the information processing apparatus 10 according to one embodiment of the present invention includes the detector communication unit 12 (an example of the detection result acquisition unit) that acquires a detection signal (an example of the detection result) of a physical quantity that changes as a movable body, such as the vehicle 70 and the railway vehicle 70R moves while being in contact with a subject, such as the railway track r and the overhead line W; the imaging device control unit 41 (an example of the image data acquisition unit) that acquires image data of, for example, the road surface R; and the display control unit 14 (an example of the display control unit) that controls the display 106a (an example of the display) to display a score (an example of the likelihood information) indicating a likelihood of abnormality of, for example, the road surface R determined based on the detection signal and the image data in association with each other.

This configuration allows the user to check the image data in association with the score, so as to accurately determine the abnormality of, for example, the road surface R compared with a case where only the score is presented. In addition, the user can efficiently determine the abnormality of, for example, the road surface R compared with a case where only the image data is checked. In other words, the information processing apparatus 10 according to the present embodiment enables the user to efficiently and accurately determine the abnormality of, for example, the road surface R.

The display control unit 14 controls the display 106a to display multiple scores and multiple image data on the display 106a and display each of the multiple image data in association with corresponding score of the multiple scores.

Accordingly, the user can check each of the multiple image data in association with corresponding one of the multiple scores so as to efficiently and accurately determine the abnormality of, for example, the road surface R for each of the multiple scores.

The display control unit 14 controls the display 106a to display multiple travel information (an example of the movement information) indicating travel distance (movement distance) or travel time (movement time) of the vehicle 70 or the like and controls the display 106a to display each of the multiple scores and each of the multiple image data in association with corresponding travel information of the multiple travel information.

This configuration enables the user to check each of the multiple travel information and each of the multiple image data in association with corresponding one of the multiple scores so as to efficiently and accurately determine the abnormality of, for example, the road surface R for each of the multiple scores.

The display control unit 14 controls the display 106a to display multiple frequency spectra (an example of the feature information indicating a feature of the detection result) of the detection signal, and controls the display 106a to display each of the multiple frequency spectra in association with corresponding one of the multiple travel information.

This configuration enables the user to check each of the multiple travel information, each of the multiple frequency spectra, and each of the multiple image data in association with corresponding one of the multiple scores so as to accurately determine the abnormality of, for example, the road surface R for each of the multiple scores.

The information processing apparatus 10 further includes the transmission and reception unit 11 (an example of the processing information acquisition unit) that acquires operation history information (an example of processing information relating to operation of the movable body) indicating user operation history relative to the vehicle 70. The display control unit 14 controls the display 106a to display multiple operation history information and controls the display 106a to display each of the multiple operation history information in association with corresponding one of the multiple travel information.

This configuration enables the user to check each of the multiple travel information, each of the multiple operation history information, and each of the multiple image data in association with corresponding one of the multiple scores so as to efficiently and accurately determine the abnormality of, for example, the road surface R for each of the multiple scores.

The information processing apparatus 10 includes the reception unit 13 that receives an input of a portion of the multiple travel information.

With this configuration, the user can check the score and the image data associated with the score on the display 106a and then input a portion of the multiple travel information. Accordingly, each of the multiple detection signals or each of the multiple frequency spectra respectively corresponding to the portion of the multiple travel information can be appropriately set as normal data or abnormal data.

The information processing apparatus 10 displays, with the display control unit 14, the portion of the multiple travel information received by the reception unit 13 on the display 106a. This configuration enables the user to check the input portion of the multiple travel information. Accordingly, each of the multiple detection signals or each of the multiple frequency spectra respectively corresponding to the input portion of the multiple travel information can be reliably set as normal data or abnormal data.

As described above, the information processing apparatus 10 includes the storing and reading unit 19 (an example of the storing control unit) that stores, in the storage area 1000, multiple frequency spectra respectively associated with a portion of the multiple travel information received by the reception unit 13.

With this configuration, each of the multiple frequency spectra respectively corresponding to a portion of the multiple travel information can be appropriately stored as normal data or abnormal data.

The information processing apparatus 10 includes the score calculation unit 175 (an example of a score determination unit) that determines the score based on the multiple frequency spectra stored in the storage area 1000 and the frequency spectrum indicating the feature of the detection signal acquired by the detector communication unit 12.

With this configuration, the information processing apparatus 10 can accurately determine the score indicating the likelihood of abnormality of, for example, the road surface R.

Further, the information processing apparatus 10 according to one embodiment of the present invention includes the detector communication unit 12 (an example of the detection result acquisition unit) that acquires a detection signal (an example of the detection result) of a physical quantity that changes as a movable body, such as the vehicle 70 and the railway vehicle 70R, moves while being in contact with a subject, such as the railway track r and the overhead line W; the imaging device control unit 41 (an example of the image data acquisition unit) that acquires image data of, for example, the road surface R captured by the imaging device 40 (an example of the imaging device); and the display control unit 14 that controls the display 106a (an example of the display) to display image data. The imaging device control unit 41 controls the imaging device 40 based on the detection signal.

Since the information processing apparatus 10 determines the timing to acquire the image data of, for example, the road surface R based on the detection signal, the image data of, for example, the road surface R can be efficiently acquired. Further, the user can check the image data on the display 106a so as to accurately determine the abnormality of, for example, the road surface R. In other words, the information processing apparatus 10 according to the present embodiment enables the user to efficiently and accurately determine the abnormality of, for example, the road surface R.

The imaging device control unit 41 controls the imaging device 40 based on the score (an example of the likelihood information) indicating the likelihood of abnormality of the road surface R or the like determined based on the detection signal.

With this configuration, the information processing apparatus 10 can efficiently acquire the image data of the road surface R or the like when there is a high likelihood that the road surface R or the like has abnormality based on the score.

The display control unit 14 controls the display 106a to display the score. Accordingly, the user can check the score and the image data on the display 106a so as to accurately and efficiently determine the abnormality of the road surface R.

The display control unit 14 displays the image data in association with the score on the display 106a. Accordingly, the user can check the score in association with the image data on the display 106a so as to efficiently and accurately determine the abnormality of the road surface R.

The information processing apparatus 10 includes the determination unit 21 (an example of the abnormality determination unit) that determines an abnormality of the road surface R or the like based on the score and the image data. Specifically, the determination unit 21 determines the abnormality of the road surface R or the like based on the score and the second score (an example of second likelihood information) indicating the likelihood of abnormality of the road surface R or the like determined based on the image data.

As a result, the information processing apparatus 10 can efficiently and accurately determine the abnormality of the road surface R or the like.

### System Configuration

FIG. 29 is a diagram illustrating an example of a system configuration of an abnormality detection system according to a second embodiment of the present invention.

An abnormality detection system 1A according to the second embodiment includes a machine 170 and the information processing system 5. The information processing system 5 includes the detector 30, the imaging device 40, and the information processing apparatus 10.

The machine 170 is an example of a processing unit that performs processing (machining) on a workpiece, and the processing unit is an example of a subject. The detector 30 detects a physical quantity that changes in accordance with the operation of the machine 170. The imaging device 40 is an example of an imaging device that captures a moving image or a still image of the machine 170.

The abnormality detection system 1A may include multiple machines 170, multiple detectors 30 respectively corresponding to the multiple machines 170, and multiple imaging devices 40.

The information processing apparatus 10 is a diagnostic apparatus that is communicably connected to the machine 170 and diagnoses an abnormality in the operation of the machine 170. The information processing apparatus 10 may be a general-purpose personal computer (PC) in which a dedicated software program is installed. The information processing apparatus 10 may be a single computer or include multiple computers.

The information processing apparatus 10 and the machine 170 can be connected in any connection form. For example, the information processing apparatus 10 and the machine 170 may be connected by a dedicated connection line, a wired network such as a wired local area network (LAN), a wireless network, or the like.

The machine 170 is a machine tool that uses a tool to perform machining such as cutting, grinding, or polishing on a subject of machining (workpiece). The processing unit is not limited to the machine 170 and may be any machine regarding which an actual operating section that can be the subject of diagnosis can be determined. Examples of the processing unit include an assembling machine, a measuring machine, an inspection machine, and a cleaning machine. Examples of the processing unit further include a machine that includes an engine (serving as a power source) including gears or the like or a motor. Furthermore, multiple processing units are not necessarily included in separate apparatuses, and may be included in one apparatus (processing system).

The detector 30 is a sensor that detects a physical quantity and outputs the detected physical quantity information as a detection signal (sensor data) to the information processing apparatus 10. The physical quantity detected is vibration, sound, or the like generated when the tool (such as a drill, end mill, cutting tool tip, or grindstone) installed in the machine 170 contacts the subject of machining during the processing, or vibration, sound, or the like generated by the tool or the machine 170 itself. The detector 30 includes, for example, a microphone, a vibration sensor, an accelerometer, or an acoustic emission (AE) sensor, and detects a change in a physical quantity such as vibration or sound. Such detecting means is disposed, for example, in the vicinity of the tool, such as a drill, an end mill, a cutting tool tip, or a grindstone, which generates mechanical vibration. Alternatively, the detector 30 may be disposed, not on the tool, but on a table on which the subject of machining is placed. The detector 30 can be fixed by a screw, a magnet, or an adhesive. Alternatively, a hole is made in the processing unit so that the detector 30 is embed in the hole. The detector 30 does not have to be fixed to the machine 170. The detector 30 may be disposed in the vicinity of the machine 170 to detect a change in a physical quantity such as vibration or sound generated by the machine 170. The number of detectors 30 may be any number. Further, the multiple detectors 30 may be of the same type to detect the same type of physical quantity, or of different types to detect different type of physical quantities.

Between the information processing apparatus 10 and the detector 30, several types of filters to filter the output signal from the detector 30 or a filter selector to select the filter may be provided as necessary.

FIG. 30 is a view of a machine according to the second embodiment. The machine 170 includes a tool 150 and a detector 30, and a workpiece W is disposed below the tool 150. In addition, the imaging device 40 is disposed at a position at which images of the tool 150 and the workpiece W can be captured. The tool 150 to be imaged by the imaging device 40 is, for example, a drill, a reamer, a tap, an end mill, a face mill, or a cutting tool.

The detector 30 may be incorporated in advance in the machine 170, or may be attached to the machine 170 being a finished product. Further, the position of the detector 30 is not limited to the vicinity of the machine 170, but may be on the information processing apparatus 10 side.

The imaging device 40 can capture a moving image or a still image of the tool 150, the workpiece W, the spindle of the tool 150, the entire range in which the tool 150 performs machining on the workpiece W, the entire interior of the machine 170, or the like. A machining state such as deterioration, breakage, and chips of the tool 150 can be recognized from an image of the tool 150 such as the cutting edge, the entirety, and the presence or absence of chips. A quality of the product can be recognized from an image of the machining state of the workpiece W. In addition, in-machine environments at the time of abnormality can be known from an image of a situation of the entire machine 170. An erroneous use of the tool 150 can be known in advance from an image of a turret to accommodate the tool 150. From an image of a coolant, whether the coolant properly hits the tool 150 and whether the coolant runs out can be known. From an image a chip, a machining quality can be known by the chip shape and the way of flying during machining.

### Hardware Configuration

A description is given of hardware configurations of the information processing apparatus 10 and the machine 170 in the second embodiment with reference to FIGS. 31 and 32. The hardware configurations illustrated in FIG. 31 and FIG. 32 may be common among the embodiments of the present disclosure. Alternatively, some components or elements may be added thereto or deleted therefrom as required.

### Hardware Configuration of Information Processing Apparatus

FIG. 31 is a block diagram illustrating an example of the hardware configuration of the information processing apparatus according to the second embodiment.

The information processing apparatus 10 is implemented by a computer, and, as illustrated in FIG. 23, includes a central processing unit (CPU) 101, a read only memory (ROM) 102, a random access memory (RAM) 103, a hard disk (HD) 104, a hard disk drive (HDD) controller 105, a display interface (I/F) 106, and a communication interface (I/F) 107.

The CPU 101 controls the entire operation of the information processing apparatus 10. The ROM 102 stores a program for controlling the CPU 101 such as an initial program loader (IPL) to boot the CPU 101. The RAM 103 is used as a work area for the CPU 101. The HD 104 stores various data such as a control program. The HDD controller 105 controls reading or writing of various data from or to the HD 104 under the control of the CPU 101. The display I/F 106 is a circuit to control a display 106a to display an image. The display 106a is, for example, a liquid crystal display or an organic electro luminescence (EL) display that displays an image of a subject, various icons, and the like. The communication I/F 107 is an interface used for communication with an external device such as the machine 170. The communication I/F 107 is, for example, a network interface card (NIC) in compliance with transmission control protocol/internet protocol (TCP/IP).

The information processing apparatus 10 further includes a sensor I/F 108, a sound input/output I/F 109, an input I/F 110, a media I/F 111, and a digital versatile disk-ReWritable (DVD-RW) drive 112.

The sensor I/F 108 is an interface that receives a detection signal via a sensor amplifier 302 included in the detector 30. The sound input/output I/F 109 is a circuit for controlling input and output of sound signals between a speaker 109a and a microphone 109b under control of the CPU 101. The input I/F 110 is an interface for connecting a predetermined input device to the information processing apparatus 10. The keyboard 110a is one example of an input device including a multiple keys for inputting characters, numerals, or various instructions. The mouse 110b is one example of an input device for selecting an instruction from various types of instruction or executing the instruction, selecting a subject to be processed, or moving a cursor. The media I/F 111 controls reading or writing (storing) of data from or to a recording medium 111a such as a flash memory. The DVD-RW drive 112 controls reading or writing of various data from or to a DVD-RW 112a as an example of a removable recording medium. The removable storage medium is not limited to the DVD-RW and may be a DVD-recordable (DVD-R) or the like. Further, the DVD-RW drive 112 may be a BLU-RAY drive that controls reading or writing of various data from or to a BLU-RAY disc.

Further, the information processing apparatus 10 includes a bus line 113. Examples of the bus line 113 include an address bus and a data bus. The bus line 113 electrically connects the elements, such as the CPU 101, with each another.

A recording medium, such as a hard disk (HD) and a compact disc read-only memory (CD-ROM), storing the programs described above can be distributed domestically or internationally as a program product.

### Hardware Configuration of Machine

FIG. 32 is a block diagram illustrating an example of the hardware configuration of the machine according to the second embodiment.

As illustrated in FIG. 32, the machine 170 includes a CPU 701, a ROM 702, a RAM 703, a display I/F 704, a communication I/F 705, a drive circuit 706, a sound output I/F 707, an input I/F 708, and a sensor I/F 709.

The CPU 701 controls entire operation of the machine 170. The ROM 702 stores a control program to boot the CPU 701 such as an IPL. The RAM 703 is used as a work area for the CPU 701. The display I/F 704 is a circuit to control a display 704a to display an image. The display 704a is, for example, a liquid crystal display or an organic EL display that displays an image of a subject, various icons, and the like.

The communication I/F 705 is an interface for communication with an external device such as the information processing apparatus 10. The communication I/F 705 is, for example, an NIC in compliance with TCP/IP.

The drive circuit 706 is a circuit that controls the drive of a motor 706a. The motor 706a drives the tool 150 used for machining. Examples of the tool 150 include a drill, an end mill, a cutting tool tip, a grindstone, and a table that supports a workpiece to be machined and moves corresponding to the machining.

The sound output I/F 707 is a circuit that processes the output of a sound signal between a speaker 707a and a microphone 707b under the control of the CPU 701. The input I/F 708 is an interface for connecting a predetermined input device to the machine 170. The keyboard 708a is one example of an input device including a multiple keys for inputting characters, numerals, or various instructions. The mouse 708b is one example of an input device for selecting an instruction from various types of instruction or executing the instruction, selecting a subject to be processed, or moving a cursor.

The machine 170 further includes a bus line 710. Examples of the bus line 710 include an address bus and a data bus. The bus line 710 electrically connects the elements, such as the CPU 701, with each another.

The detector 30, which detects the physical quantity such as vibration or sound output from the machine 170, includes the sensor 301 and the sensor amplifier 302. As described above, the sensor 301 detects the physical quantity such as vibration, sound, or the like generated by the contact between the tool 150 of the machine 170 and the subject of machining during the processing; or vibration, sound, or the like generated by the tool 150 or the machine 170 itself. The sensor 301 acquires a detection signal (sensor data) based on the detected physical quantity information. The sensor 301 is, for example, a microphone, a vibration sensor, an accelerometer, or an AE sensor. The sensor amplifier 302 adjusts the detection sensitivity of the sensor 301 and outputs the detection signal acquired by the sensor 301.

### Functional Configuration

FIG. 33 is a block diagram illustrating an example of a functional configuration of the abnormality detection system according the second embodiment.

### Functional Configuration of Information Processing Apparatus

A description is given of the functional configuration of the information processing apparatus 10. The functions implemented by the information processing apparatus 10 include the transmission and reception unit 11, the detector communication unit 12, the reception unit 13, the display control unit 14, the sound control unit 15, the generation unit 16, the signal processing unit 17, the selection unit 18, the determination unit 21, the storing and reading unit 19, the imaging device control unit 41, and the storage area 1000.

The transmission and reception unit 11 has a function of transmitting and receiving various data (or information) to and from an external device such as the machine 170. The transmission and reception unit 11 receives the processing information (machining information) relating to the current operation of the machine 170. The transmission and reception unit 11 is mainly implemented by the communication I/F 107 illustrated in FIG. 31 and a program executed by the CPU 101 illustrated in FIG. 3. The transmission and reception unit 11 is an example of a processing information acquisition unit.

The detector communication unit 12 has a function of performing data communication with the detector 30. The detector communication unit 12 receives, for example, a detection signal (sensor data) related to a physical quantity detected by the detector 30. The detector communication unit 12 is mainly implemented by a program executed by the CPU 101 illustrated in FIG. 31. The detector communication unit 12 is an example of a detection result acquisition unit that acquires detection results. The detection signal received by the detector communication unit 12 is an example of a detection result relating to the physical quantity that changes in accordance with operation of the processing unit.

The reception unit 13 has a function of receiving user input via the input device such as the keyboard 110a illustrated in FIG. 31. The reception unit 13 receives, for example, selection of an output item in response to an input to an output signal selection window 200 (see FIG. 43). The reception unit 13 is mainly implemented by a program executed by the CPU 101 illustrated in FIG. 31.

The display control unit 14 has a function of controlling the display 106a illustrated in FIG. 31 to display various screens. The display control unit 14 controls the display 106a to display, for example, the output signal selection window 200 (see FIG. 43). Specifically, for example, the display control unit 14 launches and executes a software application that operates on an operating system (OS), thereby downloading a web application, which includes at least hypertext markup language (HTML), and further includes cascading style sheets (CSS) or JAVASCRIPT (registered trademark). Then, the display control unit 14 controls the display 106a to display various image data generated by the web application. The display control unit 14 controls the display 106a to display, for example, image data generated by HTML5 including data in the format of Extensible Markup Language (XML), JavaScript Object Notation (JSON), or Simple Object Access Protocol (SOAP). The display control unit 14 is mainly implemented by the display I/F 106 illustrated in FIG. 31 and a program executed by the CPU 101.

The sound control unit 15 has a function of outputting a sound signal from the speaker 109a illustrated in FIG. 31. The sound control unit 15 sets a detection signal to be output from the speaker 109a, and outputs, as sound, the set detection signal from the speaker 109a. The sound control unit 15 is mainly implemented by the sound input/output I/F 109 illustrated in FIG. 31 and a program executed by the CPU 101.

The generation unit 16 has a function of generating various image data to be displayed on the display 106a. The generation unit 16 generates, for example, image data relating to the output signal selection window 200 (see FIG. 43) to be displayed on the display 106a. The generation unit 16 performs rendering of, for example, data stored in the storage area 1000 and generates image data for displaying based on the rendered data. Rendering is a process of interpreting data described in a Web page description language (e.g., HTML, CSS, or XML) and calculating the arrangement of characters, image data, etc. actually displayed on the screen. The generation unit 16 generates a condition identifier (ID) for identifying condition information including the received processing information in response to reception of the processing information by the transmission and reception unit 11. The generation unit 16 is mainly implemented by a program executed by the CPU 101 illustrated in FIG. 31.

The signal processing unit 17 has a function of processing the detection signal received by the detector communication unit 12. A detailed description of the signal processing unit 17 is deferred. The signal processing unit 17 is mainly implemented by a program executed by the CPU 101 illustrated in FIG. 31.

The selection unit 18 has a function of selecting a detection signal to be output as sound based on a signal output request from a user. The selection unit 18 selects, for example, a detection signal stored in association with condition information corresponding to the output item data included in the signal output request, received by the reception unit 13. The selection unit 18 is mainly implemented by a program executed by the CPU 101 illustrated in FIG. 31.

The determination unit 21 is mainly implemented by operation of the CPU 101 illustrated in FIG. 31 and has a function of performing various kinds of determination. The determination unit 21 calculates, for example, the difference in signal data relating to a multiple detection signals selected by the selection unit 18. The determination unit 21 is an example of the abnormality determination unit.

The imaging device control unit 41 has a function of communication of control signals and image data with the imaging devices 40. For example, the imaging device control unit 41 transmits a capture start signal to the imaging device 40. The imaging device control unit 41 is an example of an image data acquisition unit that acquires image data of the machine 170, and receives, for example, image data that is a moving image or a still image of the machine 170 captured by the imaging device 40. The imaging device control unit 41 is mainly implemented by a program executed by the CPU 101 illustrated in FIG. 31.

The storing and reading unit 19 has a function of storing various data in the storage area 1000 and reading various data from the storage area 1000. The storing and reading unit 19 is mainly implemented by, for example, a program executed by the CPU 101 illustrated in FIG. 31. The storage area 1000 is mainly implemented by the ROM 102, the HD 104, and the recording medium 111a illustrated in FIG. 31.

The storage area 1000 stores a condition information management database (DB) 1001, a detection signal management DB 1003, a model information management DB 1005, and an image data management DB 1007. The condition information management DB 1001 is formed by a condition information management table described later. The detection signal management DB 1003 is in the form of a detection signal management table described later. The model information management DB 1005 is built as a model information management table described later. The image data management DB 1007 is formed with an image data management table described later. The storing and reading unit 19 is an example of the storing control unit.

### Functional Configuration of Detector

A description is given of a functional configuration of the detector 30. The functions implemented by the detector 30 include an apparatus connection unit 31 and a detection signal acquisition unit 32.

The apparatus connection unit 31 has a function of transmitting the detection signal acquired by the detection signal acquisition unit 32 to the information processing apparatus 10. The apparatus connection unit 31 is mainly implemented by the sensor amplifier 302 illustrated in FIG. 32.

The detection signal acquisition unit 32 has a function of detecting the physical quantity (such as vibration or sound) that changes depending on the operation of the machine 170, and acquiring the information on the physical quantity as a detection signal. The detection signal acquisition unit 32 is mainly implemented by the sensor 301 illustrated in FIG. 32. The detection signal acquisition unit 32 detects the physical quantity that is vibration, sound, or the like generated when the tool 150 (such as a drill, end mill, cutting tool tip, or grindstone) installed in the machine 170 contacts the workpiece during the processing; or vibration, sound, or the like generated by the tool 150 or the machine 170 itself. The detection signal acquisition unit 32 acquires the detected physical quantity information as a detection result (sensor data). For example, when a blade of the tool 150 used for machining is broken, chipping of the blade, or the like occurs, and the sound during machining changes. Therefore, the detection signal acquisition unit 32 detects acoustic data using the sensor 301, such as a microphone, and transmits the detection signal relating to the detected acoustic data to the information processing apparatus 10 via the apparatus connection unit 31. The detection signal acquisition unit 32 is mainly implemented by the sensor 301 illustrated in FIG. 32.

### Functional Configuration of Machine

The functions implemented by the machine 170 include a transmission and reception unit 71, a numerical control unit 72, a drive control unit 73, a drive unit 74, a setting unit 75, a reception unit 76, a display control unit 77, and a sound control unit 78.

The transmission and reception unit 71 has a function of transmitting and receiving various data (or information) to and from an external device such as the information processing apparatus 10. The transmission and reception unit 71 transmits the processing information relating to the current operation of the machine 170 to the information processing apparatus 10. The transmission and reception unit 71 is mainly implemented by the communication I/F 705 illustrated in FIG. 32 and a program executed by the CPU 701.

The numerical control unit 72 has a function of executing machining by the drive control unit 73 with numerical control. For example, the numerical control unit 72 generates and outputs numerical control data for controlling the operation of the drive unit 74. Further, the numerical control unit 72 outputs processing information relating to the operation of the machine 170 to the transmission and reception unit 71. For example, the numerical control unit 72 sequentially transmits context information corresponding to the current operation of the machine 170 to the information processing apparatus 10 via the transmission and reception unit 71. In machining on the subject of machining, the numerical control unit 72 changes the type of the drive unit 74 to be driven or the drive state (rotation number, rotation speed, etc.) of the drive unit 74 in accordance with the machining process. Each time the type of operation is changed, the numerical control unit 72 sequentially transmits the context information corresponding to the changed type of operation to the information processing apparatus 10 via the transmission and reception unit 71. The numerical control unit 72 is mainly implemented by a program or the like executed by the CPU 701 illustrated in FIG. 32.

The drive control unit 73 has a function of controlling the drive unit 74 based on numerical control data obtained by the numerical control unit 72. The drive control unit 73 is implemented by, for example, the drive circuit 706 illustrated in FIG. 32. The drive control unit 73 is mainly implemented by the drive circuit 706 illustrated in FIG. 32 and a program executed by the CPU 701.

The drive unit 74 has a drive function to be controlled by the drive control unit 73. The drive unit 74 drives the tool under the control of the drive control unit 73. The drive unit 74 is an actuator that is controlled by the drive control unit 73 and is mainly implemented by the motor 706a illustrated in FIG. 23. The drive unit 74 may be any actuator used for machining and is subject to numerical control. Further, two or more drive units 74 may be provided.

The setting unit 75 has a function of setting condition information corresponding to the current operation of the machine 170. The setting unit 75 is mainly implemented by a program executed by the CPU 701 illustrated in FIG. 32.

The reception unit 76 has a function of receiving user input via the input device such as the keyboard 708a illustrated in FIG. 32. The reception unit 76 receives, for example, selection of an output item in response to an input to the output signal selection window 200 (see FIG. 43) on the display 704a. The reception unit 76 is mainly implemented by the input I/F 708 illustrated in FIG. 32 and a program executed by the CPU 701.

The display control unit 77 has a function of displaying various screen information on the display 704a illustrated in FIG. 32. The display control unit 77 controls the display 704a to display, for example, the output signal selection window 200 (see FIG. 43). The display control unit 77 is mainly implemented by the display I/F 704 illustrated in FIG. 32 and a program executed by the CPU 701.

The sound control unit 78 is implemented by instructions from the CPU 701 illustrated in FIG. 32 and controls the speaker 707a to output a sound signal. The sound control unit 78 sets a detection signal to be output from the speaker 707a and outputs, as sound, the set detection signal from the speaker 707a. The sound control unit 78 is mainly implemented by the sound output I/F 707 illustrated in FIG. 32 and a program executed by the CPU 701.

FIG. 34 is a block diagram illustrating an example of a detailed functional configuration of a signal processing unit according to the second embodiment. The signal processing unit 17 illustrated in FIG. 34 includes an amplification processing unit 171, an analog-to-digital (A/D) conversion unit 172, a feature value extraction unit 173, a digital-to-analog (D/A) conversion unit 174, and a score calculation unit 175.

The amplification processing unit 171 has a function of amplifying the detection signal received by the detector communication unit 12. The amplification processing unit 171 amplifies, for example, an analog signal received by the detector communication unit 12 to a given size. Further, the amplification processing unit 171 amplifies, for example, a digital signal converted by the A/D conversion unit 172 to a given size.

The A/D conversion unit 172 has a function of converting an analog signal amplified by the amplification processing unit 171 into a digital signal.

The feature value extraction unit 173 has a function of extracting a feature value (feature information) indicating a feature of the detection signal received by the detector communication unit 12. The feature value may be any information that indicates a feature of the detection signal. For example, when the detection signal is acoustic data, the feature value extraction unit 173 may extract energy, frequency spectrum, time, or mel-frequency cepstrum coefficients (MFCC) as the feature value.

The D/A conversion unit 174 has a function of converting a digital signal amplified by the amplification processing unit 171 into an analog signal.

The score calculation unit 175 calculates a score as an example of abnormality likelihood information indicating the likelihood of abnormality of the machine 170 from the feature value (for example, frequency spectrum) of the detection signal extracted by the feature value extraction unit 173. The score calculation unit 175 is an example of a likelihood information determination unit that determines the likelihood of abnormality of the machine 170 and generate likelihood information indicating the likelihood of abnormality.

### Storing of Detection Signal

FIG. 35 is a sequence chart illustrating an example of storing of a detection signal by the abnormality detection system according to the second embodiment.

In step S11, the transmission and reception unit 71 of the machine 170 transmits the processing information relating to the current operation of the machine 170 to the information processing apparatus 10 of the information processing system 5. Specifically, the setting unit 75 of the machine 170 sets processing information indicating a specific processing content at the start of machining on a workpiece (subject of machining). As described above, the processing information is context information defined for each type of operation of the machine 170. Then, the transmission and reception unit 71 transmits the processing information set by the setting unit 75 to the information processing apparatus 10. Accordingly, the transmission and reception unit 11 of the information processing apparatus 10 receives the processing information transmitted from the machine 170 (an example of acquiring processing information).

In step S12, the generation unit 16 of the information processing apparatus 10 generates condition ID for identifying the condition information including the processing information received by the transmission and reception unit 11.

In step S13, the storing and reading unit 19 stores, in the condition information management DB 1001, the condition ID generated by the generation unit 16 and condition information associated with the processing information received by the transmission and reception unit 11 (an example of controlling of storing). At this time, the storing and reading unit 19 also stores a relation ID assigned to processing information indicating a related processing in the condition information management DB 1001. The condition information management DB 1001 stores, in the condition information management table, each condition ID in association with the processing information indicating the contents of the specific processing executed by the machine 170.

In step S14, the detection signal acquisition unit 32 of the detector 30 of the information processing system 5 detects the physical quantity such as vibration or sound generated by the machine 170. The detection signal acquisition unit 32 detects the sound generated by the machine 170 and acquires the detection signal (acoustic signal) relating to the detected sound.

In step S15, the apparatus connection unit 31 of the detector 30 transmits the detection signal acquired in step S14 to the information processing apparatus 10. As a result, the detector communication unit 12 of the information processing apparatus 10 receives the detection signal transmitted from the detector 30 (an example of acquiring a detection result).

In step S16, the signal processing unit 17 of the information processing apparatus 10 processes the detection signal received by the detector communication unit 12.

In step S17, the storing and reading unit 19 of the information processing apparatus 10 stores the signal data processed by the signal processing unit 17 in the detection signal management DB 1003 in association with the processing information transmitted from the machine 170 (an example of controlling storing). The information processing apparatus 10 stores, in the detection signal management table, for each condition ID generated in step S12, data of number of times of machining included in the processing information received in step S11, the signal data relating to the detection signal received in step S15, the signal data (frequency data or score data) processed by the signal processing unit 17, and the processing information data received in step S11 in association with each other. The information processing apparatus 10 may store machining time data instead of the data of number of times of machining.

In other words, the storing and reading unit 19 stores, in the detection signal management DB 1003, multiple feature values (frequency data) in association with multiple processing information transmitted from the machine 170, respectively.

### Condition Information Management Table

FIG. 36 is a diagram illustrating an example of a condition information management table according to the second embodiment. In the storage area 1000, the condition information management DB 1001 described in step S13 of FIG. 35 is formed by the condition information management table as illustrated in FIG. 36.

The condition information management table illustrated in FIG. 36 is for managing processing information relating to the operation of the machine 170 for each operation performed by the machine 170. The condition information management table stores, for each condition ID, the condition information in which processing information is associated with each other. The condition ID is identification information for identifying the condition information including the processing information. The processing information is context information defined for each type of operation of the machine 170. As illustrated in FIG. 36, the processing information includes the type of the tool 150 (identification information of the tool 150), the machining method (machining type) by the machine 170, the cumulative number of times of job from the start of that operation, and information of the workpiece processed by the machine 170. Examples of the type of the tool 150 include a drill, an end mill, a face mill, a ball end mill, a counterbore cutter, a boring, a cutting tool tip, and a grindstone. The machining method is cutting or polishing. More specifically, the machining method includes drilling, through-hole drilling, peck drilling, grooving, side face processing, contour processing, ramping processing, and deburring. Examples of the material of the workpiece include alloys, carbon resins, and resin materials. More specifically, as illustrated in FIG. 36, the material of the workpiece is represented, for example, by a grade such as S50C, FC250, and S20CK specified by Japanese Industrial Standards (JIS).

Items included in the processing information may further include history information on operation by the user on the machine 170, the number of times of machining in one job (an example of the number of operations of the machine 170), identification information of the machine 170, configuration information such as the diameter of the tool 150 and the material of the tool 150, and information indicating the operating state of the tool 150. The information indicating the operating state of the tool 150 includes, for example, an on/off signal ("ladder signal") to specify a section from feeding of the workpiece (subject of machining) to the end of the machining by the tool 150. The items included in the processing information may further include the cumulative usage time of the tool 150 (the drive unit 74) from the start of use, the load relating to the tool 150 (the drive unit 74), the rotation speed of the tool 150 (the drive unit 74), and information indicating machining conditions such as the machining speed of the tool 150 (the drive unit 74). Further, the processing information may include the machining time (an example of the operating time of the machine 170) and include the machining time instead of the number of times of machining.

In the condition information management table, a relation ID for identifying a related operation (process) among operations performed by the machine 170 is stored in association with each other. An identical relation ID is assigned to two or more of processing information indicating related operations in the condition information management table. In the example of FIG. 36, the same relation ID "R001" is assigned to processing information identified by the condition ID "A000001" and processing information identified by the condition ID "A00004." The same relation ID "R002" is assigned to processing information identified by the condition ID "A000002" and processing information identified by the condition ID "A000007." The related operations assigned with the relation ID are, for example, operations in which the tool type and the workpiece material (subject of machining) are the same and the number of times of job is different. Note that the operations to which the relation ID are assigned are not limited thereto, and the relation ID can be assigned in order to appropriately associate multiple operations in accordance with user setting.

Next, a description is given of processing of the detection signal by the signal processing unit 17 corresponding to step S16 in FIG. 35, with reference to FIGS. 37 to 38B.

FIG. 37 is a flowchart illustrating an example of processing of the detection signal by an information processing apparatus according to the second embodiment.

In step S151, in response to reception (acquisition) of the detection signal by the detector communication unit 12, the information processing apparatus 10 proceeds to step S152. The information processing apparatus 10 repeats the process of step S151 until the detector communication unit 12 receives (acquires) the detection signal.

In step S152, the amplification processing unit 171 of the signal processing unit 17 amplifies the detection signal received (acquired) by the detector communication unit 12 to a desired size. In step S153, the A/D conversion unit 172 of the signal processing unit 17 converts the analog signal amplified by the amplification processing unit 171 into a digital signal.

In step S154, the feature value extraction unit 173 of the signal processing unit 17 extracts the feature value (feature information) indicating the feature of the digital signal converted by the A/D conversion unit 172 (an example of extracting a feature value). In the present embodiment, the feature value extraction unit 173 extracts a frequency spectrum included in the digital signal converted by the A/D conversion unit 172.

In step S155, the score calculation unit 175 of the signal processing unit 17 calculates a score indicating the likelihood of abnormality of the machine 170 from the feature value (for example, frequency spectrum) of the detection signal extracted by the feature value extraction unit 173.

Specifically, the score calculation unit 175 calculates a likelihood that the feature information of the detection result is normal, using model information of the feature information. The model information indicates normal data stored in the model information management DB 1005 of the storage area 1000. Then, the score calculation unit 175 calculates the reciprocal of the likelihood as the score.

The score calculation unit 175 may calculate the score by ranking the scores stepwise or may calculate the score as binary values of 0 and 1. In addition, the score calculation unit 175 may accumulate the calculated scores.

Alternatively, the score calculation unit 175 may calculate, as the score, a likelihood that the feature information of the detection result is abnormal, using model information that indicates abnormal data of the feature information. The model information is stored in the model information management DB 1005.

A description is given of the frequency component of the detection signal detected during the operation of the machine 170, which corresponds to step S154 of FIG. 37.

FIG. 38A illustrates a spectrogram of a detection signal detected when the machining operation of the machine 170 is normal. FIG. 38B illustrates a spectrogram of a detection signal detected when the machining operation of the machine 170 has an abnormality. As illustrated in FIG. 38B, when an abnormality occurs during the machining operation of the machine 170, a frequency component around 30,000 Hz appears.

Then, in the score calculation in step S155 of FIG. 37, for example, in the case where the spectrogram illustrated in FIG. 38B is model information indicating abnormal data, the score calculation unit 175 calculates the likelihood of abnormality of the spectrogram of the detection signal as the score. The score calculation unit 175 calculates the likelihood based on the amount of the frequency component around 30,000 Hz in the spectrogram of the detection signal extracted by the feature value extraction unit 173.

### Detection Signal Management Table

FIG. 39 is a diagram illustrating an example of a detection signal management table according to the second embodiment. As described in step S17 of FIG. 35, the storage area 1000 includes the detection signal management DB 1003 in the form of the detection signal management table as illustrated in FIG. 39.

The detection signal management table illustrated in FIG. 39 is for managing the detection signal transmitted from the detector 30 in association with the processing information transmitted from the machine 170. In the detection signal management table, for each condition ID, the data of number of times of machining transmitted from the machine 170, the detection signal, the frequency data extracted by the feature value extraction unit 173, the score data calculated by the score calculation unit 175, and the processing information data per number of times of machining transmitted from the machine 170 are stored in association with each other. The condition ID is identification information for identifying the condition information included in the condition information management table illustrated in FIG. 36. As a result, for each condition ID, the signal data (detection signal) is stored in association with the related data (processed signal data such as frequency data and score data), the data of the number of times of machining, and the processing information data per number of times of machining. In the detection signal management table, machining time data and processing information data per machining time may be stored instead of the data of number of times of machining and the processing information data per number of times of machining.

FIG. 40 is a flowchart illustrating an example of processing of image data performed by the information processing apparatus according the second embodiment.

The information processing apparatus 10 includes the imaging device 40 that captures an image of the machine 170. In determination of the abnormality of the machine 170 based on image data, there is an inconvenience in efficiency.

Specifically, in order to determine an abnormality based on image data, a huge amount of image data including normal images are stored, and time for image processing for determining an abnormality is long. In addition, in the case of a machine, in order to capture an accurate image, it is necessary to temporarily stop the operation of the machine in order to remove noise of coolant or the like, and there is also an inconvenience in productivity.

By contrast, when the frequency of image capture by the imaging device 40 is reduced for improving the efficiency of the abnormality determination based on the image data, there is a concern that the imaging device 40 may fail to capture an image indicating an abnormal state which matters, and the accuracy of the abnormality determination decreases.

In view of the foregoing, an object of the second embodiment is to provide the information processing apparatus 10 that efficiently and accurately determines an abnormality of the machine 170.

The imaging device control unit 41 of the information processing apparatus 10 determines whether or not the score calculated by the score calculation unit 175 is equal to or greater than a threshold (step S21).

When the score is determined as being equal to or greater than the threshold in step S21, the imaging device control unit 41 transmits a capture start signal for starting image capture to the imaging device 40 (step S22, an example of image capture control). That is, the imaging device control unit 41 controls the imaging device 40 based on the score calculated based on the detection signal. By contrast, when the score is determined as being smaller than the threshold in step S21, the imaging device control unit 41 ends the process.

Alternatively, the information processing apparatus 10 may control the imaging device 40 to start image capture at a timing irrespective of the score calculated by the score calculation unit 175, and the imaging device control unit 41 may delay the timing of transmitting a capture end signal for ending image capture to the imaging device 40 when the score calculated by the score calculation unit 175 is equal to or greater than the threshold.

Subsequent to step S22, the imaging device control unit 41 acquires, from the imaging device 40, image data of a moving or still image captured by the imaging device 40 (step S23, an example of acquiring image data).

The storing and reading unit 19 of the information processing apparatus 10 stores the image data of the moving or still image acquired by the imaging device control unit 41 in the detection signal management DB 1003 in association with the processing information transmitted from the machine 170 (step S24).

The information processing apparatus 10 stores, for each condition ID generated in step S12 illustrated in FIG. 35, the image data of the moving or still image in the image data management table in association with the data of number of times of machining included in the processing information received in step S11. The information processing apparatus 10 may store machining time data instead of the data of number of times of machining.

The score calculation unit 175 of the signal processing unit 17 of the information processing apparatus 10 calculates a second score, which is an example of second likelihood information indicating the likelihood of abnormality of the machine 170, from the image data of the moving or still image acquired by the imaging device control unit 41 (step S25).

Specifically, the score calculation unit 175 calculates a likelihood that the image data is normal, using model information indicating normal data stored in the model information management DB 1005 of the storage area 1000. Then, the score calculation unit 175 calculates the reciprocal of the likelihood as the second score.

The score calculation unit 175 may calculate the second score by ranking the scores stepwise or may calculate the second score as binary values of 0 and 1.

Alternatively, the score calculation unit 175 may calculate, as the second score, a likelihood that the image data is abnormal, using model information indicating abnormal data stored in the model information management DB 1005.

The determination unit 21 of the information processing apparatus 10 determines whether the second score calculated by the score calculation unit 175 is equal to or greater than a threshold (step S26). When determining that the second score is equal to or greater than the threshold, the determination unit 21 determines that the machine 170 is abnormal (step S27). Specifically, the determination unit 21 determines the abnormality of the machine 170 based on the score and the second score indicating the likelihood of abnormality of the machine 170 determined based on the image data.

When determining that the machine 170 is abnormal, the information processing apparatus 10 outputs, for example, a visual alarm or a sound alarm using the display 106a or the speaker 109a.

As described above, the information processing apparatus 10 includes the imaging device control unit 41 that acquires the image data of the machine 170 captured by the imaging device 40. The imaging device control unit 41 controls the imaging device 40 according to detection signals.

Since the information processing apparatus 10 determines the timing to acquire the image data of, for example, the machine 170 based on the detection signal, the image data of, for example, the machine 170 can be efficiently acquired.

The imaging device control unit 41 controls the imaging device 40 based on the score indicating the likelihood of abnormality of the machine 170 determined based on the detection signal.

With this configuration, the information processing apparatus 10 can efficiently acquire the image data of the machine 170 when there is a high likelihood that the machine 170 has abnormality based on the score.

The information processing apparatus 10 includes the determination unit 21 that determines an abnormality of the machine 170 based on the score and the image data. Specifically, the determination unit 21 determines the abnormality of the machine 170 based on the score and the second score indicating the likelihood of abnormality of the machine 170 determined based on the image data.

As described above, the information processing apparatus 10 can efficiently and accurately determine the abnormality of the machine 170.

FIG. 41 is a diagram illustrating an example of an image data management table according to the second embodiment.

In the storage area 1000, the image data management DB 1007 described with reference to FIG. 33 is formed with the image data management table illustrated in FIG. 41.

The image data management table illustrated in FIG. 41 is for managing the image data of the moving or still image acquired by the imaging device control unit 41.

In the image data management table, for each condition ID, the data of number of times of machining and the image data of the moving or still image transmitted from the machine 170 are stored in association with each other. The condition ID is identification information for identifying the condition information included in the condition information management table illustrated in FIG. 36. The image data management table may store machining time data instead of data of number of times of machining.

The detection signal management table illustrated in FIG. 39 stores, for each condition ID, the signal data (detection signal) and the related data (the processed signal data such as the frequency data and the score data, the data of number of times of machining, and the processing information data per number of times of machining) in association with each other. The condition ID in the detection signal management table is identical to the condition ID in the image data management table.

Thus, the information processing apparatus 10 includes both the detection signal management table illustrated in FIG. 39 and the image data management table illustrated in FIG. 41, and stores, for each condition ID, the image data of the moving or still image, the signal data (detection signal), and the related data (the processed signal data such as the frequency data and the score data, the data of number of times of machining, and the processing information data per number of times of machining) in association with each other.

### Display of Signal Data and Storing of Model Information

FIG. 42 is a flowchart illustrating an example of operation for displaying scores and storing the model information performed by the information processing apparatus according to the second embodiment.

In step S31, the display control unit 14 of the information processing apparatus 10 displays the output signal selection window 200 (see FIG. 15) on the display 106a. Specifically, the display control unit 14 displays the output signal selection window 200 in response to a reception, by the reception unit 13, of an input to a predetermined input window displayed on the display 106a.

In step S32, when the user inputs an item to be output, the reception unit 13 receives a signal selection request including data indicating the output item thus input.

In step S33, based on the output item data received by the reception unit 13, the information processing apparatus 10 performs displaying a score and selecting a signal to be stored as model information (an example of selecting).

In step S34, the storing and reading unit 19 stores the selected signal data as model information in the model information management DB 1005.

FIG. 43 illustrates an example of an output signal selection window displayed by the information processing apparatus according to the second embodiment.

FIG. 43 is a diagram illustrating an example of the output signal selection window displayed on the information processing apparatus, corresponding to step S31 and step S32 in the flowchart illustrated in FIG. 42. The output signal selection window 200 illustrated in FIG. 43 is a display screen for allowing the user to select a score to be displayed and signal data to be stored as model information. The output signal selection window 200 includes an output item selection area 210 for specifying a score to be displayed and a detection signal to be stored as model information, a "VIEW" button 225 for displaying the score, and a "CANCEL" button 203 to be pressed to stop the process.

In the output item selection area 210, data of various items included in the processing information can be selected. The output item selection area 210 includes, for example, a tool selection field 211 in which the tool 150 (the drive unit 74) can be selected, a workpiece material selection field 212 in which the workpiece material can be selected, and a machining method selection field 213 in which the machining method can be selected, and a number of times of machining selection field 214 in which the number of times of machining can be selected. In the example of FIG. 43, the reception unit 13 receives, as output item data, "drill (diameter 1 mm)" as the tool, "FC250 (JIS)" as workpiece material, "cutting" as the machining method, and "first" as the number of times of job. The items respectively corresponding to the selection fields included in the output item selection area 210 are not limited to the above-described examples and may be appropriately added or changed according to the items in the processing information. The machining time data may be selectably received instead of the data of number of times of machining.

Then, in response to pressing of the "VIEW" button 225 illustrated in FIG. 43, processing for displaying the signal data corresponding to the selected items in the output item selection area 210.

The above-description with reference to FIGS. 42 and 43 concerns an example in which the information processing apparatus 10 displays the output signal selection window 200 so that the user selects the detection signal to be output. Alternatively, the machine 170 may display the output signal selection window 200 so that the user selects the detection signal to be output. Although FIGS. 42 and 43 illustrate an example in which the number of times of machining is used, the same applies to a case in which the machining time is used instead of the number of times of machining.

FIG. 44 is a flowchart illustrating an example of display selection performed by the information processing apparatus according to the second embodiment. FIG. 44 is a flowchart illustrating an example of displaying and selecting corresponding to step S33 of the flowchart illustrated in FIG. 42.

In step S331, the selection unit 18 selects processing information corresponding to the output item data received in step S32 illustrated in FIG. 42 from multiple processing information stored in the condition information management table illustrated in FIG. 36. Specifically, the storing and reading unit 19 reads the condition information management table from the condition information management DB 1001. Then, the selection unit 18 selects, from multiple condition information included in the condition information management table, the condition information that includes the processing information associated with the output item data received by the reception unit 13. In this case, for example, the selection unit 18 selects the condition information having the condition ID "A000001" which includes the processing information corresponding to the output item data input to the output item selection area 210 illustrated in FIG. 43.

In step S332, the selection unit 18 selects, from the data stored in the detection signal management table (see FIG. 39), the signal data and related data associated with the condition ID associated with the processing information selected by the selection unit 18 in step S331. Specifically, the storing and reading unit 19 reads the detection signal management table from the detection signal management DB 1003. Then, the selection unit 18 selects, from the data included in the read detection signal management table, the signal data and the related data associated with the condition ID included in the selected condition information. In this case, the selection unit 18 selects, for example, the signal data and the related data associated with the condition ID "A000001."

In step S333, the selection unit 18 selects, from the data stored in the image data management table (see FIG. 41), the image data associated with the condition ID associated with the processing information selected in step S331. Specifically, the storing and reading unit 19 reads the image data management table from the image data management DB 1007. Then, the selection unit 18 selects, from the data included in the image data management table, the image data associated with the condition ID included in the selected condition information. In this case, the selection unit 18 selects the image data associated with the condition ID "A000001," for example.

In step S334, the display control unit 14 of the information processing apparatus 10 displays an information display and selection window 250 on the display 106a. Then, the display control unit 14 displays, on the information display and selection window 250, the signal data and the related data selected in step S332 and the image data selected in step S333 in association with each other via the condition ID.

In step S335, when the user selects a section on the information display and selection window 250, the reception unit 13 receives the selection of the section (an example of receiving).

In step S336, the selection unit 18 selects the signal data and the related data related to the section selected in step S335 from the signal data and the related data selected in step S332.

FIG. 45 illustrates an example of the information display and selection window displayed on the information processing apparatus according to the second embodiment.

FIG. 45 is a diagram illustrating an example of the information display and selection window displayed on the information processing apparatus, corresponding to step S334 and step S335 of the flowchart illustrated in FIG. 44. The information display and selection window 250 illustrated in FIG. 45 is a display screen for displaying the score of the detection signal related to the signal data selected by the selection unit 18 and selecting a specific section of the detection signal.

The user can check the likelihood of abnormality of the machine 170 by checking the score displayed on the information display and selection window 250. However, the user needs to visually check the tool or the like in order to actually determine the abnormality, and there is a challenge in accuracy of abnormality determination.

In order to visually check the tool or the like, image data of the machine 170 is displayed on the information display and selection window 250. However, it is difficult to visually check image data indicating an abnormality from among a large amount of image data. It is conceivable that the information processing apparatus 10 processes the image data for determining the abnormality. However, in a case where a huge amount of image data is stored for abnormality determination, time for image processing for determining an abnormality is long. There is an inconvenience in efficiency.

In view of the foregoing, an object of the second embodiment is to provide the information processing apparatus 10 that efficiently and accurately determines an abnormality of the machine 170.

The information display and selection window 250 presents the data of number of times of machining related to the related data selected by the selection unit 18 in the order of number of times of machining so as to be checked by the user.

The information display and selection window 250 further continuously presents, in association with the data of number of times of machining, multiple frequency spectra as examples of the feature values related to the related data selected by the selection unit 18, multiple score data, and multiple user operation history data as an example of processing information data per number of times of machining so as to be checked by the user. In addition, image data A is displayed such that the user can check the image data A in association with a local maximum score.

Specifically, the display control unit 14 displays, on the information display and selection window 250 on the display 106a, multiple numbers of times of machining, multiple frequency spectra, multiple operation history information, and multiple scores. Further, on the information display and selection window 250, the display control unit 14 displays, in association with each of the multiple numbers of times of machining, corresponding one of the multiple frequency spectra, corresponding one of the multiple operation history information, corresponding one of the multiple scores, and the image data (an example of displaying). In the example of FIG. 45, the display control unit 14 displays a line graph by connecting the multiple scores and displays image data at the position corresponding to the horizontal axis direction of the line graph representing the multiple scores.

In addition, the display control unit 14 displays the image data in association with the local maximum score of the multiple scores on the information display and selection window 250. The local maximum score is equal to or greater than the threshold described in step S21 of FIG. 40.

Further, the information display and selection window 250 includes an input area 222 for inputting a section of number of times of machining as a specific section, an "OK" button 251 to be pressed to select the section, and a "CANCEL" button 253 to be pressed to cancel the selection of the section.

As illustrated in FIG. 45, among the scores associated with number of times of machining from 1001 to 1250, the score increases after the number of times of machining 1230, and the score in the vicinity of the number of times of machining 1250 is the highest.

On the information display and selection window 250, the image data A of the tool is displayed in association with the score. The user can check the image data A of the tool corresponding to the local maximum score near the number of times of machining 1250.

In the case of the example of FIG. 45, since the image data of the tool indicates more chips than usual, the user determines that the chips are causes of the high score.

In other words, by checking the score and the image data associated with the score, the user can accurately determine the abnormality of the machine 170.

The image data may be displayed in association with not only the local maximum score but also all of the multiple scores equal to or greater than the thresholds described in step S21 of FIG. 40. When the multiple image data are simultaneously displayed, the screen becomes cluttered. It is preferable to display only the image data associated with the score selected by, for example, a mouse from the multiple image data respectively associated with the multiple scores. Further, when there is a significant change in the scores, the image data may be displayed in association with the score before the change, the score after the change, or both of before and after the change.

A description is given of an example of selecting normal data from the data of number of times of machining from 1001 to 1250 with reference to FIG. 45. Viewing the scores as an example of the score data, it can be seen that the value is low in number of times of machining from 1001 to 1230. This section can be selected as normal data when "a portion having a small score is normal" or "an early cycle (for example, 1001 to 1105) is normal" is automatically set on the system.

However, the frequency data of a section of number of times of machining from 1001 to 1230 indicates noise in a low frequency band. By contrast, the frequency data of a section of number of times of machining from 1105 to 1207 is free of the low frequency band noise that is present in the section of number of times of machining from 1001 to 1230.

Therefore, the user can appropriately determine that the multiple data of a section of number of times of machining from 1001 to 1230, which is a part of the number of times of machining from 1001 to 1230, are more suitable as normal data than the data in the section of number of times of machining from 1001 to 1230.

Furthermore, the user operation history in the section of the number of times of machining 1001 to 1230 indicates that overriding has been performed. Overriding is an operation of temporarily changing the feed speed of the machine tool. It can be seen that the above-described low-frequency noise is generated in the section in which overriding been performed. Conceivably, the change in feed speed has caused abnormal vibration such as chattering. From this, the user can determine that the section in which overriding been performed is not suitable for selection of normal data. Therefore, the user can more appropriately determine that the section of number of times of machining from 1105 to 1207 during which overriding is not performed is appropriate as normal data.

When the user inputs "1105 to 1207" in the input area 222 and presses the "OK" button 251, the reception unit 13 receives the selection of "number of times of machining 1105 to 1207." Accordingly, the detection signal or the frequency spectrum corresponding to the number of times of machining from 1105 to 1207 which is a part of the number of times of machining from 1001 to 1230 can be appropriately set as normal data.

In addition, the information "number of times of machining from 1105 to 1207" received by the reception unit 13 is displayed in the input area 222. This configuration allows the user to reliably set the detection signal or the frequency spectrum corresponding to "number of times of machining from 1105 to 1207" as normal data while checking the information displayed in the input area 222.

In the above description, when "1105 to 1207" is input to the input area 222 and the "OK" button 251 is pressed, the reception unit 13 receives the selection of "number of times of machining from 1105 to 1207." Alternatively, the reception unit 13 may receive the selection of "number of times of machining from 1105 to 1207" in response to selection of a portion of the displayed frequency data, scores, and user operation history corresponding to the number of times of machining from 1105 to 1207 with, for example, the mouse and pressing of the "OK" button 251.

As described above, the information processing apparatus 10 includes the display control unit 14 that displays, on the information display and selection window 250 on the display 106a, the score indicating the likelihood of abnormality of the machine 170 determined based on the detection signal, and the image data in association with each other.

This configuration allows the user to check the image data in association with the score, so as to accurately determine the abnormality of the machine 170 compared with a case where only the score is presented. In addition, the user can efficiently determine the abnormality of the machine 170 compared with a case where only the image data is checked. In other words, the information processing apparatus 10 according to the second embodiment enables the user to efficiently and accurately determine the abnormality of the machine 170.

The display control unit 14 displays multiple frequency spectra of the detection signal on the information display and selection window 250 and displays each of the multiple frequency spectra in association with corresponding one of the numbers of times of machining on the information display and selection window 250.

With this configuration, the user can check each of the multiple numbers of times of machining, each of the multiple frequency spectra, and the image data in association with each of the multiple scores so as to efficiently and accurately determine the abnormality of the machine 170 for each of the multiple scores.

The display control unit 14 displays multiple operation history information in association with multiple numbers of times of machining, respectively, on the information display and selection window 250.

Accordingly, the user can check the multiple numbers of times of machining, the multiple operation history information, and the image data in association with the multiple scores, respectively, so as to efficiently and accurately determine the abnormality of the machine 170 for each of the multiple scores.

The information processing apparatus 10 includes the reception unit 13 that receives an input of a portion of the multiple numbers of times of machining.

With this configuration, the user can check the score and the image data associated with the score on the display 106a and then input portion of the multiple numbers of times of machining. Accordingly, the multiple frequency spectra respectively corresponding to the portion of the multiple numbers of times of machining can be appropriately set as normal data or abnormal data.

The information processing apparatus 10 displays, with the display control unit 14, the portion of the multiple numbers of times of machining received by the reception unit 13 on the information display and selection window 250. Accordingly, the user can check the input portion of the multiple numbers of times of machining. Then, each of the multiple frequency spectra respectively corresponding to the input portion of the multiple numbers of times of machining can be reliably set as normal data or abnormal data.

As described above, the information processing apparatus 10 includes the display control unit 14 that controls the display 106a to display the image data on the information display and selection window 250 and, as described above with reference to FIG. 40, further includes the imaging device control unit 41 that acquires the image data of the machine 170 captured by the imaging device 40. The imaging device control unit 41 controls the imaging device 40 according to detection signals.

Since the information processing apparatus 10 determines the timing to acquire the image data of, for example, the machine 170 based on the detection signal, the image data of, for example, the machine 170 can be efficiently acquired. Further, the user can check the image data on the information display and selection window 250 so as to accurately determine the abnormality of the machine 170. In other words, the information processing apparatus 10 according to the second embodiment enables the user to efficiently and accurately determine the abnormality of the machine 170.

The imaging device control unit 41 controls the imaging device 40 based on the score indicating the likelihood of abnormality of the machine 170 determined based on the detection signal.

With this configuration, the information processing apparatus 10 can efficiently acquire the image data of the machine 170 when there is a high likelihood that the machine 170 has abnormality based on the score.

The display control unit 14 displays the score on the information display and selection window 250. Accordingly, the user can check the score and the image data on the information display and selection window 250 so as to accurately determine the abnormality of the machine 170.

The display control unit 14 displays the image data in association with the score on the information display and selection window 250. Accordingly, the user can check the score and the image data in association with each other on the information display and selection window 250 so as to accurately determine the abnormality of the machine 170.

FIG. 46 is a diagram illustrating an example of a model information management table according to the second embodiment. As described in step S34 of FIG. 42, the storage area 1000 includes the model information management DB 1005 formed by the model information management table illustrated in FIG. 46.

In the model information management table, the storing and reading unit 19 stores, for each relation ID, the data of number of times of machining, the detection signal data, the frequency data, and the score data in association with each other.

For each of the numbers of times of machining received by the reception unit 13, the storing and reading unit 19 stores and updates the detection signal and the frequency data associated with the number of times of machining.

In the example of FIG. 46, as the model information of the relation ID "R001," for each of data of number of times of machining 1105 to 1207 received by the reception unit 13 and described with reference to FIG. 45, the detection signal, the frequency data, and the score data corresponding the data of number of times of machining are stored in association with each other. As a result, the detection signal, the frequency data, and the score data corresponding to number of times of machining from 1105 to 1207 which is a part of number of times of machining from 1001 to 1230 can be appropriately stored as the normal data.

Note that, in the model information management table, for each relation ID, the detection signal data, the frequency data, and the score data may be stored in association with each other as a record without the data of number of times of machining, and multiple records may be stored in time series. Yet alternatively, not storing the frequency data and the score data in the model information management table, steps S154 and S155 in FIG. 37 may be again performed to extract the frequency data based on the detection signal stored in the model information management table and calculate the score data.

As described above, the information processing apparatus 10 includes the storing and reading unit 19 that stores, in the storage area 1000, multiple frequency spectra respectively associated with a portion of the multiple numbers of times of machining received by the reception unit 13.

Accordingly, the multiple frequency spectra respectively corresponding to the portion of the multiple numbers of times of machining can be appropriately set as normal data or abnormal data.

As described with reference to FIG. 37, the information processing apparatus 10 includes the score calculation unit 175 that determines the score based on the multiple frequency spectra stored in the storage area 1000 and the frequency spectrum indicating the feature of the detection signal acquired by the detector communication unit 12.

As described with reference to FIG. 46, since the multiple frequency spectra stored in the storage area 1000 are updated, the information processing apparatus 10 can accurately determine the score indicating the likelihood of abnormality of the machine 170.

FIG. 47 is a diagram illustrating an example of an information display and selection window displayed on an information processing apparatus according to a first modification of the second embodiment.

Similar to FIG. 46, the information display and selection window 250 continuously presents multiple frequency spectra, multiple score data, and multiple user operation history data respectively associated with the data of number of times of machining so as to be checked by the user. In addition, image data is displayed such that the user can check the image data in association with a local maximum score. In the example of FIG. 47, there are two local maximum scores, and image data A and B are displayed in association with the two local maximum scores, respectively. The image data A and B include image data A1 and B1 of the entire tool and image data A2 and B2 representing enlarged images of a tip of the tool.

In other words, the display control unit 14 displays multiple scores and multiple image data on the information display and selection window 250 on the display 106a and displays each of the multiple image data in association with corresponding score of the multiple scores on the information display and selection window 250.

FIG. 47 illustrates an example of selecting abnormal data from the data of the number of times of machining from 801 to 900. Viewing the scores as an example of the score data, it can be seen that the values are high near the number of times of machining 840 and after the number of times of machining 865. When "a portion having a high score is normal" is automatically set on the system, these two sections can be selected as abnormal data.

However, the frequency data immediately before the number of times of machining 840 indicates that the data is temporarily interrupted. Further, it can be seen that the frequency data has a value similar to the usual value in the vicinity of number of times of machining 840. That is, the score that indicates a change in the frequency data has increased due to the interruption of the frequency data, and the likelihood that the abnormality of the machining has occurred is conceivably low.

By contrast, the frequency data after the number of times of machining 865 indicates an abnormal vibration in a low frequency band, and there is a high likelihood that some abnormality has occurred in the machining. Accordingly, the user can appropriately determine that the data of number of times of machining from 865 to 900 which is a part of number of times of machining 801 to 900 are more appropriate as abnormal data than the data near number of times of machining 840.

Furthermore, the user operation history immediately before the number of times of machining 840 indicates that the machine power has been switched to on from off. Conceivably, the score immediately after the switching of power is high due to the influence of the warm-up operation of the machine. By contrast, after the number of times of machining 865, although there is no trace of the user's particular operation, the frequency data indicates an abnormal vibration in a low frequency band. There is a high likelihood that some abnormality has occurred in the machining. Accordingly, the user can appropriately determine that the data of number of times of machining from 865 to 900 which is a part of number of times of machining 801 to 900 are more appropriate as abnormal data than the data near number of times of machining 840.

Then, the user can compare the state of the tool indicated in the image data corresponding to the local maximum score in the vicinity of the number of times of machining 840 with the state of the tool indicated in the image data corresponding to the local maximum score after the number of times of machining 865, thereby confirming, from the image data, that the data of the number of times of machining from 865 to 900, which is a part of the number of times of machining from 801 to 900, are more appropriate as abnormal data.

In other words, by checking the score and the image data associated with the score, the user can accurately determine the abnormality of the machine 170.

Although FIG. 47 illustrates an example in which the number of times of machining is used, the same applies to a case in which the machining time is used instead of the number of times of machining.

As described above, the display control unit 14 displays multiple scores and multiple image data on the information display and selection window 250 and displays each of the multiple image data in association with corresponding score of the multiple scores on the information display and selection window 250.

Accordingly, the user can check each of the multiple image data in association with corresponding one of the multiple scores so as to accurately determine the abnormality of the machine 170 for each of the multiple scores.

The display control unit 14 displays multiple numbers of times of machining on the information display and selection window 250 and displays each of the multiple scores and each of the multiple image data in association with the corresponding number of times of machining on the information display and selection window 250.

Accordingly, the user can check each of the multiple numbers of times of machining and each of the multiple image data in association with corresponding one of the multiple scores so as to accurately determine the abnormality of the machine 170 for each of the multiple scores.

FIG. 48 is a diagram illustrating an example of an information display and selection window displayed on an information processing apparatus according to a second modification of the second embodiment.

The information display and selection window 250 continuously presents multiple score data in association with the data of number of times of machining so as to be checked by the user. Similar to FIG. 47, the image data A and B are displayed in association with two local maximum scores, respectively. The image data A and B respectively include image data A1 and B 1 of the entire tool and image data A2 and B2 representing enlarged images of the tip of the tool.

FIG. 48 illustrates an example of selecting multiple abnormal data from the data of the number of times of machining from 801 to 900.
Viewing the score as an example of the score data, it can be seen that there are two portions having high scores between the number of times of machining 801 and 900. When "a portion having a high score is normal" is automatically set on the system, these two sections can be selected as abnormal data.

However, in some cases, it can be determined that there are completely different tendencies by comparing the two image data corresponding to the scores of the two portions. When the different abnormal data of the two portions are referred to as abnormal data 1 and abnormal data 2, respectively, the user can determine the two different abnormal data as different pieces of abnormal data.

Although FIG. 48 illustrates an example in which the number of times of machining is used, the same applies to a case in which the machining time is used instead of the number of times of machining.

### Summary

As described above, the information processing apparatus 10 according to the second embodiment of the present invention includes the detector communication unit 12 (an example of the detection result acquisition unit) that acquires a detection signal (an example of the detection result) of a physical quantity that changes in accordance with an operation of the machines 170 (an example of the subject); the imaging device control unit 41 (an example of the image data acquisition unit) that acquires image data of the machine 170; the display control unit 14 that controls the display 106a (an example of the display) to display a score (an example of the likelihood information) indicating a likelihood of abnormality of the machine 170 determined based on the detection signal and the image data in association with each other.

This configuration allows the user to check the image data in association with the score, so as to accurately determine the abnormality of the machine 170 compared with a case where only the score is presented. In addition, the user can efficiently determine the abnormality of the machine 170 compared with a case where only the image data is checked. In other words, the information processing apparatus 10 according to the second embodiment enables the user to efficiently and accurately determine the abnormality of the machine 170.

The display control unit 14 controls the display 106a to display multiple scores and multiple image data on the display 106a and display each of the multiple image data in association with corresponding score of the multiple scores.

Accordingly, the user can check each of the multiple image data in association with corresponding one of the multiple scores so as to efficiently and accurately determine the abnormality of the machine 170 for each of the multiple scores.

The display control unit 14 controls the display 106a to display multiple operation information indicating the number of times of operation or operation time of the machine 170, and controls the display 106a to display each of the multiple scores and each of the multiple image data in association with corresponding one of the multiple operation information.

Accordingly, the user can check each of the multiple operation information and each of the multiple image data in association with corresponding one of the multiple scores so as to efficiently and accurately determine the abnormality of the machine 170 for each of the multiple scores.

The display control unit 14 controls the display 106a to display multiple frequency spectra (an example of the feature information indicating a feature of the detection result) of the detection signal, and controls the display 106a to display each of the multiple frequency spectra in association with corresponding one of the multiple operation information.

This configuration enables the user to check each of the multiple operation information, each of the multiple frequency spectra, and each of the multiple image data in association with corresponding one of the multiple scores so as to accurately determine the abnormality of the machine 170 for each of the multiple scores.

The information processing apparatus 10 further includes the transmission and reception unit 11 (an example of the processing information acquisition unit) that acquires operation history information (an example of processing information relating to operation of the subject) indicating user operation history relative to the machine 170. The display control unit 14 controls the display 106a to display multiple operation history information and controls the display 106a to display each of the multiple operation history information in association with corresponding one of the multiple operation information.

This configuration enables the user to check each of the multiple operation information, each of the multiple operation history information, and each of the multiple image data in association with corresponding one of the multiple scores so as to efficiently and accurately determine the abnormality of, for example, the machine 170 for each of the multiple scores.

The information processing apparatus 10 includes the reception unit 13 that receives an input of a portion of the multiple operation information.

With this configuration, the user can check the score and the image data associated with the score on the display 106a and then input portion of the multiple operation information. Accordingly, each of the multiple detection signals or each of the multiple frequency spectra respectively corresponding to the portion of the multiple operation information can be appropriately set as normal data or abnormal data.

The information processing apparatus 10 displays, with the display control unit 14, the portion of the multiple operation information received by the reception unit 13 on the display 106a. This configuration enables the user to check the input portion of the multiple operation information. Accordingly, each of the multiple detection signals or each of the multiple frequency spectra respectively corresponding to the input portion of the multiple operation information can be reliably set as normal data or abnormal data.

As described above, the information processing apparatus 10 includes the storing and reading unit 19 (an example of the storing control unit) that stores, in the storage area 1000, multiple frequency spectra respectively associated with a portion of the multiple operation information received by the reception unit 13.

With this configuration, each of the multiple frequency spectra respectively corresponding to the portion of the multiple operation information can be appropriately stored as normal data or abnormal data.

The information processing apparatus 10 includes the score calculation unit 175 (an example of a score determination unit) that determines the score based on the multiple frequency spectra stored in the storage area 1000 and the frequency spectrum indicating the feature of the detection signal acquired by the detector communication unit 12.

With this configuration, the information processing apparatus 10 can accurately determine the score indicating the likelihood of abnormality of the machine 170.

Further, the information processing apparatus 10 according to the second embodiment of the present invention includes the detector communication unit 12 (an example of the detection result acquisition unit) that acquires a detection signal (an example of the detection result) of a physical quantity that changes in accordance with an operation of the machines 170 (an example of the subject); the imaging device control unit 41 (an example of the image data acquisition unit) that acquires image data of the machine 170 captured by the imaging device 40 (an example of the imaging device); and the display control unit 14 that controls the display 106a (an example of the display) to display image data. The imaging device control unit 41 controls the imaging device 40 based on the detection signal.

Since the information processing apparatus 10 determines the timing to acquire the image data of, for example, the machine 170 based on the detection signal, the image data of, for example, the machine 170 can be efficiently acquired. Further, the user can check the image data on the display 106a so as to accurately determine the abnormality of the machine 170. In other words, the information processing apparatus 10 according to the second embodiment enables the user to efficiently and accurately determine the abnormality of the machine 170.

The imaging device control unit 41 controls the imaging device 40 based on the score indicating the likelihood of abnormality of the machine 170 determined based on the detection signal.

With this configuration, the information processing apparatus 10 can efficiently acquire the image data of the machine 170 when there is a high likelihood that the machine 170 has abnormality based on the score (an example of the likelihood information).

The display control unit 14 controls the display 106a to display the score. Accordingly, the user can check the score and the image data on the display 106a so as to accurately and efficiently determine the abnormality of the machine 170.

The display control unit 14 displays the image data in association with the score on the display 106a. Accordingly, the user can check the score and the image data in association with each other on the display 106a so as to accurately and efficiently determine the abnormality of the machine 170.

The information processing apparatus 10 includes the determination unit 21 (an example of the abnormality determination unit) that determines an abnormality of the machine 170 based on the score and the image data. Specifically, the determination unit 21 determines the abnormality of the machine 170 based on the score and the second score (an example of second likelihood information) indicating the likelihood of abnormality of the machine 170 determined based on the image data.

With this configuration, the information processing apparatus 10 can efficiently and accurately determine the abnormality of the machine 170.

### Supplementary Information

The functions of the embodiments of the present disclosure can be implemented by a computer executable program described in a legacy programming language such as an assembler, C, C++, C#, and Java (registered trademark), or an object-oriented programming language. The program to implement the functions in each embodiment can be distributed via a telecommunication line.

The program for executing the functions of the embodiments of the present disclosure can be stored, for distribution, on a readable recording medium such as a ROM, an electrically erasable programmable read-only memory (EEPROM), an erasable programmable read-only memory (EPROM), a flash memory, a flexible disk (FD), a CD-ROM, a DVD-ROM, a DVD-RAM, a DVD-Rewritable (DVD-RW), a BLU-RAY disc, a secure digital (SD) card, a magneto-optical disc (MO), and etc.

In addition, some or all of the functions of the embodiments may be mounted on a programmable device (PD) such as a field programmable gate array (FPGA) or implemented as an application specific integrated circuit (ASIC), and distributed by the recording medium as a circuit configuration data (bit stream data) downloaded to the PD in order to implement the functions of the embodiments on the PD, or as data described by Hardware Description Language (HDL), Very High Speed Integrated Circuits Hardware Description Language (VHDL), Verilog-HDL, etc., for generating circuit configuration data.

Although the information processing apparatus, the information processing method, and the program according to an embodiment of the present invention have been described above, the present invention is not limited to the above-described embodiments. The above-described embodiments may be modified within a range conceivable by those skilled in the art. The modification includes additions of other embodiments, modifications, and deletions. Any of such aspects that provides an action and an effect of the present invention is within the scope of the present invention.

This patent application is based on and claims priority to Japanese Patent Application Nos. 2020-043996 filed on March 13, 2020, 2020-044001 filed on March 13, 2020, 2020-044313 filed on March 13, 2020, and 2020-044318 filed on March 13, 2020, in the Japan Patent Office, the entire disclosure of which is hereby incorporated by reference herein.

### [Reference Signs List]

1A Abnormality detection system
5 Information processing system
10 Information processing apparatus
11 Transmission and reception unit (an example of processing information acquisition unit)
12 Detector communication unit (an example of detection result acquisition unit)
18 Selection unit
19 Storing and reading unit (an example of storing control unit)
21 Determination unit (an example of abnormality determination unit)
30 Detector
40 Imaging Device (an example of imaging device)
41 Imaging device control unit (an example of image data acquisition unit)
170 Machine (an example of subject)
70 Vehicle (an example of movable body)
70R Railway vehicle (an example of movable body)
R Road surface (an example of subject)
r Railway track (an example of a subject)
W Overhead line (an example of subject)
106a Display (an example of display)
173 Feature value extraction unit
175 Score calculation unit (an example of likelihood information determination unit)
200 Output signal selection window
250 Information display and selection window
1000 Storage area

## Claims

1. An information processing apparatus comprising:
a detection result acquisition unit (12) configured to acquire a detection result of a physical quantity that changes as a movable body moves while being in contact with a subject;
an image data acquisition unit (41) configured to acquire image data of the subject; and
a display control unit (14) configured to control a display to display likelihood information indicating a likelihood of abnormality of the subject and the image data in association with each other, the likelihood being determined based on the detection result.

2. The information processing apparatus according to claim 1,
wherein the display control unit (14) controls the display to:
display multiple data of the likelihood information and multiple image data; and
display each of the multiple image data in association with corresponding one of the multiple data of the likelihood information.

3. The information processing apparatus according to claim 2,
wherein the display control unit (14) controls the display to:
display multiple data of movement information each of which indicates a travel distance or a travel time of the moving body; and
display each of the multiple data of the likelihood information and each of the multiple image data in association with corresponding one of the multiple data of the movement information.

4. The information processing apparatus according to claim 3,
wherein the display control unit (14) controls the display to:
display multiple data of feature information each indicating a feature of the detection result; and
display each of the multiple data of the feature information in association with corresponding one of the multiple data of the movement information.

5. The information processing apparatus according to claim 4,
wherein the feature information includes a frequency spectrum of the detection result, and
wherein the display control unit (14) controls the display to display each of multiple data of the frequency spectrum in association with corresponding one of the multiple data of the movement information.

6. The information processing apparatus according to any one of claims 3 to 5, further comprising
a processing information acquisition unit (11) configured to acquire processing information related to an operation of the movable body,
wherein the display control unit (14) controls the display to:
display multiple data of the processing information; and
display each of the multiple data of the processing information in association with corresponding one of the multiple data of the movement information.

7. The information processing apparatus according to claim 6,
wherein the processing information includes operation history information indicating a history of user operation with respect to the movable body, and
wherein the display control unit (14) controls the display to:
display multiple data of the operation history information; and
display each of the multiple data of the operation history information in association with corresponding one of the multiple data of the movement information.

8. The information processing apparatus according to any one of claims 3 to 7,
further comprising a reception unit (13) configured to receive an input of a portion of the multiple data of the movement information.

9. The information processing apparatus according to claim 8,
wherein the display control unit (14) controls the display to display the portion of the multiple data of the movement information received by the reception unit.

10. The information processing apparatus according to claim 8 or 9, further comprising a storing control unit (19) configured to store, in a memory, feature information indicating a feature of the detection result associated with the portion of the multiple data of the movement information received by the reception unit (13).

11. The information processing apparatus according to claim 10, further comprising a likelihood information determination unit (175) configured to determine the likelihood information based on the feature information stored in the memory and feature information indicating a feature of the detection result acquired by the detection result acquisition unit (12).

12. An information processing method comprising:
acquiring (S15) a detection result of a physical quantity that changes with a movement of a movable body being in contact with a subject;
acquiring (S23) image data of the subject; and
displaying (S334) likelihood information indicating a likelihood of abnormality of the subject and the image data in association with each other, the likelihood being determined based on the detection result.

13. A program for causing a computer to execute the information processing method according to claim 12.
